(19) Europäisches Patentamt
European Patent Office
Office européen des brevets

(11) EP 2 763 231 B1

(12) # EUROPEAN PATENT SPECIFICATION

(45) Date of publication and mention of the grant of the patent:
**24.10.2018 Bulletin 2018/43**

(21) Application number: **12836601.0**

(22) Date of filing: **21.09.2012**

(51) Int Cl.:
***H01M 10/0567*** *(2010.01)* ***H01M 10/0568*** *(2010.01)*
***H01M 10/0569*** *(2010.01)*

(86) International application number:
**PCT/JP2012/074156**

(87) International publication number:
**WO 2013/047342 (04.04.2013 Gazette 2013/14)**

(54) **ELECTROLYTE SOLUTION FOR NONAQUEOUS SECONDARY BATTERIES, AND SECONDARY BATTERY**

ELEKTROLYTLÖSUNG FÜR EINE WASSERFREIE SEKUNDÄRBATTERIE UND SEKUNDÄRBATTERIE

SOLUTION ÉLECTROLYTIQUE POUR BATTERIES SECONDAIRES NON AQUEUSE, ET BATTERIE SECONDAIRE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **26.09.2011 JP 2011209945**
**27.02.2012 JP 2012040587**
**31.05.2012 JP 2012125525**
**31.08.2012 JP 2012191278**

(43) Date of publication of application:
**06.08.2014 Bulletin 2014/32**

(73) Proprietor: **Fujifilm Corporation**
**Minato-ku**
**Tokyo 106-8620 (JP)**

(72) Inventors:
- **YAWATA ,Toshihiko**
**Kanagawa 258-8577 (JP)**
- **KINOSHITA , Ikuo**
**Kanagawa 258-8577 (JP)**

(74) Representative: **Hoffmann Eitle**
**Patent- und Rechtsanwälte PartmbB**
**Arabellastraße 30**
**81925 München (DE)**

(56) References cited:
**WO-A1-2004/001882 WO-A1-2011/052428**
**JP-A- 2009 021 040 JP-A- 2010 270 077**
**JP-A- 2011 108 649 JP-A- 2012 089 352**

- **JAEGER L ET AL: "Pseudochalcogen compounds. XXVI. Reactions of organocyanamides, RNHCN (R = isopropyl) and silver phenylcyanamide, with hexachlorocyclotriphosphazene - REAKTIONEN VON ORGANOCYANAMIDEN, RNHCN (R = PROP) UND AG[RNCN] (R = PH), MIT HEXACHLORO-CYCLOTRIPHOSPHAZEN", ZEITSCHRIFT FUR ANORGANISCHE UND ALLGEMEINE CHEMIE, WILEY - V C H VERLAG GMBH & CO. KGAA, DE, no. 591, 1 January 1990 (1990-01-01), pages 118-124, XP002444814, ISSN: 0044-2313, DOI: 10.1002/ZAAC.19905910113**
- **EDGAR NIECKE ET AL.: '2.4.4.6.6.-Pentafluor-1.3.5.2.4.6-triazaphosphor(V)inyl-(2)-amine und -hydrazine('' Pentafluorcyclotriphosphazoamine und -hydrazine'')' CHEMISCHE BERICHTE vol. 104, no. 12, 1971, pages 3729 - 3739, XP055072986**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 763 231 B1

## Description

## BACKGROUND OF THE INVENTION

1. Field of the Invention

The present invention relates to a nonprotonic solvent-containing nonaqueous electrolyte solution for a secondary battery and a secondary battery using the nonaqueous electrolyte solution.

2. Description of the Related Art

Today, a secondary battery called a lithium ion battery that is drawing attention is roughly classified into a secondary battery (so-called lithium ion secondary battery) which utilizes storage and release of lithium caused by a charge-discharge reaction and a secondary battery (so-called lithium metal secondary battery) which utilizes precipitation and dissolution of lithium. From these batteries, a higher energy density is obtained compared to lead batteries or nickel-cadmium batteries. In recent years, by using the above property, those batteries have been widely used for a camera-integrated Video Tape Recorder (VTR) and portable electronic equipment such as mobile phones and personal computers. Following this trend, as a power source of portable electronic equipment, batteries, particularly, secondary batteries that are light and can yield a high energy density are under development. Moreover, those batteries are strongly required to be further miniaturized and lightened, have a prolonged life span, and exhibit a higher degree of safety.

As a electrolyte solution of the lithium ion secondary battery or the lithium metal secondary battery (hereinafter, these will be simply called a "lithium secondary battery" as a general name in some cases), a combination of a carbonic acid ester-based solvent such as propylene carbonate or diethyl carbonate with an electrolyte salt such as lithium hexafluorophosphate is widely used, since this solution have a high conductivity and is stabilized in terms of the electric potential.

Meanwhile, the conventional electrolyte solution contains the aforementioned low-molecular weight organic compounds as the components, and accordingly, it is impossible to impart flame retardancy to the electrolyte solution in view of safety. For the purpose of achieving improvement in this respect, a technique of adding cyclic phosphazene to the electrolyte solution has been suggested (JP2005-190873A, JP2009-016106A, and JP1994-13108A (JP-H06-13108A), WO 2011/052428, JP 2010-270077 A, WO 2004/001882, JP 2009-021040 A, JP 2011-108649 A and JP 2012-089352 A).

## SUMMARY OF THE INVENTION

The technique disclosed in JP2005-190873A, JP2009-016106A, and JP1994-13108A (JP-H06-13108A) cannot be mentioned to be sufficient, and there is a strong demand for a realization of a higher degree of flame retardancy. Moreover, it is desired to suppress the deterioration of various performances of the battery that is caused by the addition of a flame retardant and to improve the performances as much as possible by the addition.

The present invention has been made in consideration of the above requirement, and aims to provide a nonaqueous electrolyte solution which can improve the flame retardancy and performance of the battery without deteriorating basic performance thereof and to provide a secondary battery.

The present invention also aims to provide an additive for a nonaqueous electrolyte solution secondary battery that can improve the performance as described above and to provide a novel compound useful as the additive.

The above objects are achieved by the following means:

[1] A nonaqueous electrolyte solution for a secondary battery containing metal salts that include lithium ions and a cyclic compound that is represented by the following Formula (1), in a non-protonic solvent, in which the non-protonic solvent is a solvent containing at least one kind of carboxylic acid ester compound and carbonic acid ester compound, and a ratio ($M_{PN}$/Ms) between a mass (Ms) of the non-protonic solvent containing the metal salts and a mass ($M_{PN}$) of the cyclic compound is 0.005 to 1.

[Chem. 1]

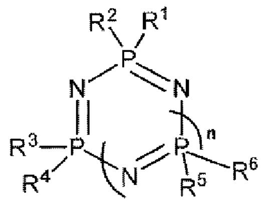

(1)

(In the formula, $R^1$ to $R^6$ represent alkyl groups, aryl groups, alkoxy groups, aryloxy groups, alkylthio groups, arylthio groups, $-NR^AR^B$, $-N=R^C$, an azide group or halogen atoms. At least one of these substituents is $-NR^AR^B$, $-N=R^C$, or an azide group, and at least one of other groups $R^1$ to $R^6$ is halogen atom. n represents an an integer of 1 or 2. When n is 2, plural $R^5$s and $R^6$s may be the same as or different from each other. $R^A$ and $R^B$ are hydrogen atoms, alkyl groups, alkenyl groups, alkynyl groups, aryl groups, heterocyclic groups, cyano groups, silyl groups, or substituents represented by the following Formula (1A), (1B), (1C), or (1D).
$R^C$ represents a substituent represented by one of the following Formulae (C1) to (C6).)

[Chem. 2]

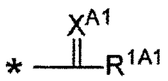

(1A)

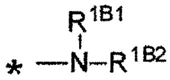

(1B)

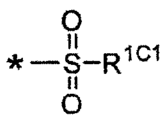

(1C)

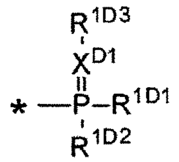

(1D)

(In the formulae, $R^{1A1}$, $R^{1C1}$, $R^{1D1}$, and $R^{1D2}$ represent alkyl groups, alkoxy groups, aryl groups, aryloxy groups, halogen atoms, or amino groups. $X^{A1}$ represents an oxygen atom or a sulfur atom. $X^{D1}$ represents an oxygen atom, a sulfur atom, or a nitrogen atom, and when $X^{D1}$ represents an oxygen atom or a sulfur atom, there is no $R^{1D3}$. When $X^{D1}$ is a nitrogen atom, $R^{1D3}$ represents an alkyl group, an aryl group, a silyl group, or a phosphonyl group. $R^{1B1}$ and $R^{1B2}$ represent alkyl groups, aryl groups, alkoxycarbonyl groups, aryloxycarbonyl groups, alkylsulfonyl groups, arylsulfonyl groups, phosphonyl groups, or silyl groups. * represents a direct bond.)

[Chem. 3]

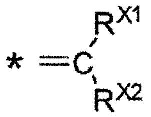

(C1)

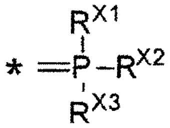

(C2)

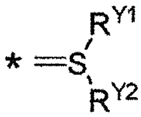

(C3)

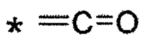

(C4)

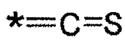

(C5)

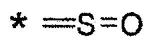

(C6)

(In the formulae, $R^{X1}$, $R^{X2}$, and $R^{X3}$ represent alkyl groups, aryl groups, alkoxy groups, aryloxy groups, alkylthio groups, arylthio groups, heterocyclic groups, halogen atoms, or silyl groups. $R^{Y1}$ and $R^{Y2}$ represent halogen atoms. * represents a direct bond.)

[2] The nonaqueous electrolyte solution for a secondary battery according to [1], in which the non-protonic solvent contains at least one of carbonic acid ester compounds represented by the following Formulae (3A) and (3B) and a carboxylic acid ester compound represented by the following Formula (3C) (that is, at least one of the compounds represented by the following Formulae (3A), (3B), and (3C)).

[Chem. 4]

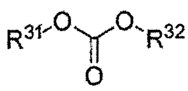
(3A)
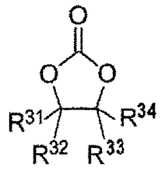
(3B)
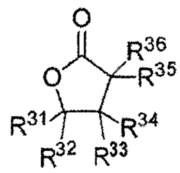
(3C)

(In the formulae, $R^{31}$ to $R^{34}$ represent hydrogen atoms, alkyl groups (excluding halogen), and aryl groups (excluding halogen). $R^{35}$ and $R^{36}$ represent hydrogen atoms, alkyl groups that may be substituted with fluorine, alkyl groups having an ether chain, or aryl groups that may be substituted with fluorine.)

[3] The nonaqueous electrolyte solution for a secondary battery according to [1] or [2], further containing at least one of the compounds represented by the following Formulae (4A), (4B), (4C), and (4D), in which a ratio ($M_4$/Ms) between a mass (Ms) of the non-protonic solvent containing metal salts and a mass of a total mass ($M_4$) of the compound represented by the Formula (4A), (4B), (4C), or (4D) is 0.001 to 0.25.

[Chem. 5]

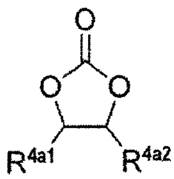
(4A)
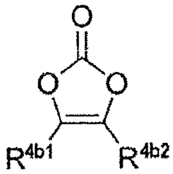
(4B)
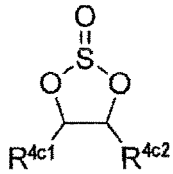
(4C)
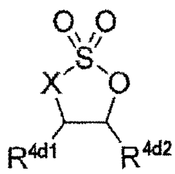
(4D)

(In the formulae, $R^{4a1}$ and $R^{4a2}$ represent hydrogen atoms, halogen (preferably fluorine, bromine, or chlorine, and more preferably fluorine), fluorine-substituted alkyl groups, fluorine-substituted aryl groups, or vinyl groups. At this time, at least one of $R^{4a1}$ and $R^{4a2}$ represents halogen, a fluorine-substituted alkyl group, a fluorine-substituted aryl group, or a vinyl group. $R^{4b1}$ and $R^{4b2}$ represent hydrogen atoms, alkyl groups, or aryl groups. $R^{4c1}$, $R^{4c2}$, $R^{4d1}$, and $R^{4d2}$ represent hydrogen atoms, fluorine-substituted alkyl groups, fluorine-substituted aryl groups, or vinyl groups. X represents a methylene group or oxygen atom.)

[4] The nonaqueous electrolyte solution for a secondary battery according to [2] or [3], in which the non-protonic solvent contains at least one of a compound represented by Formula (3A) and a compound represented by Formula (3C) as well as a compound represented by Formula (3B), and a ratio ($M_{3B}/M_{AC}$) between a volume ($M_{3B}$) of the compound represented by Formula (3B) and a total volume ($M_{AC}$) of the compound represented by Formula (3A) and the compound represented by Formula (3C) is 0.2 to 5.

[5] The nonaqueous electrolyte solution for a secondary battery according to any one of [1] to [4], further containing an aromatic compound as an overcharge inhibitor.

[6] The nonaqueous electrolyte solution for a secondary battery according to any one of [1] to [5], in which the cyclic compound is a compound represented by the following Formula (2A) or (2B).

[Chem. 6]

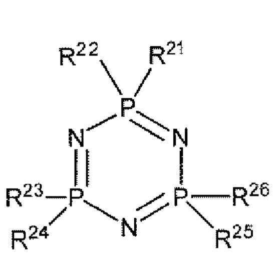
(2A)
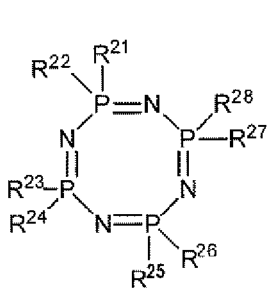
(2B)

(In the formulae, $R^{21}$ to $R^{28}$ have the same definition as that of $R^1$ to $R^6$ of Formula (1).)

[7] The nonaqueous electrolyte solution for a secondary battery according to [6], further containing two or more kinds of the compound represented by Formula (2A) or (2B), in which a 20% mass reduction temperature of at least one kind of the above compound that is measured by Thermogravimetry-Differential Thermal Analysis (TG-DTA) is 110°C or lower.

[8] The nonaqueous electrolyte solution for a secondary battery according to [6] or [7], in which a mass ($M_{110}$) of the compound having the 20% mass reduction temperature of 110°C or lower accounts for 20% to 80% of a total mass ($M_{2A2B}$) of the compound represented by Formula (2A) or (2B).

[9] The nonaqueous electrolyte solution for a secondary battery according to [1] to [8] that is used together with lithium titanate which is an active material of a negative electrode.

[10] A nonaqueous secondary battery including the nonaqueous electrolyte solution for a secondary battery according to any one of [1] to [8], a positive electrode that enables ions of metals belonging to group 1 or 2 of the periodic table to be inserted into or released from this electrode, and a negative electrode that enables ions to be inserted into or released from this electrode and can cause dissolution and precipitation of ions.

[11] A kit of a nonaqueous electrolyte solution for a secondary battery that is obtained by combining metal salts that include lithium ions with a cyclic compound represented by the following Formula (1) and a non-protonic solvent, in which the non-protonic solvent is a solvent that contains at least one kind of carboxylic acid ester compound and carbonic acid ester compound, and a ratio ($M_{PN}$/Ms) between a mass (Ms) of the non-protonic solvent containing metal salts and a mass ($M_{PN}$) of the cyclic compound is 0.005 to 1.

[Chem. 7]

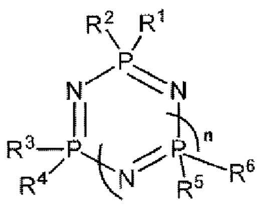

(1)

(In the formula, $R^1$ to $R^6$ represent alkyl groups, aryl groups, alkoxy groups, aryloxy groups, alkylthio groups, arylthio groups, $-NR^AR^B$, $-N=R^C$, an azide group or halogen atoms. At least one of these substituents is $-NR^AR^B$, $-N=R^C$, or an azide group, and at least one of other substituents is halogen atom. n represents an an integer of 1 or 2. When n is 2, plural $R^5$s and $R^6$s may be the same as or different from each other. $R^A$ and $R^B$ are hydrogen atoms, alkyl groups, alkenyl groups, alkynyl groups, aryl groups, heterocyclic groups, cyano groups, silyl groups, or substituents represented by the following Formula (1A), (1B), (1C), or (1D). $R^C$ represents a substituent represented by one of the following Formulae (C1) to (C6).)

[Chem. 8]

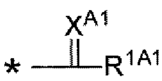

(1A)

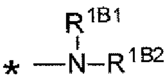

(1B)

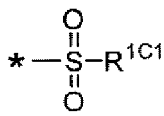

(1C)

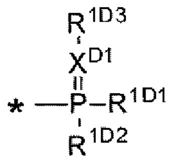

(1D)

(In the formulae, $R^{1A1}$, $R^{1C1}$, $R^{1D1}$, and $R^{1D2}$represent alkyl groups, alkoxy groups, aryl groups, aryloxy groups, halogen atoms, or amino groups. $X^{A1}$ represents an oxygen atom or a sulfur atom. $X^{D1}$ represents an oxygen atom, a sulfur atom, or a nitrogen atom, and when $X^{D1}$ represents an oxygen atom or a sulfur atom, there is no $R^{1D3}$. When $X^{D1}$ is a nitrogen atom, $R^{1D3}$ represents an alkyl group, an aryl group, a silyl group, or a phosphonyl group. $R^{1B1}$ and $R^{1B2}$ represent alkyl groups, aryl groups, alkoxycarbonyl groups, aryloxycarbonyl groups, alkylsulfonyl groups, arylsulfonyl groups, phosphonyl groups, or silyl groups.)

[Chem. 9]

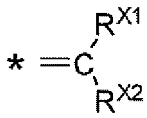

(C1)

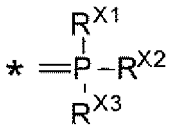

(C2)

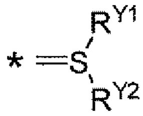

(C3)

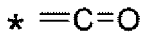

(C4)

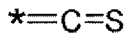

(C5)

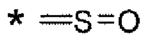

(C6)

(In the formulae, $R^{X1}$, $R^{X2}$, and $R^{X3}$ represent alkyl groups, aryl groups, alkoxy groups, aryloxy groups, alkylthio groups, arylthio groups, heterocyclic groups, halogen atoms, or silyl groups. $R^{Y1}$ and $R^{Y2}$ represent halogen atoms.)
[12] An additive for a nonaqueous electrolyte solution for a secondary battery that is represented by the following Formula (1).

[Chem. 10]

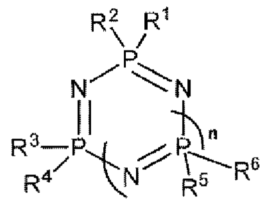

(1)

(In the formula, each of $R^1$ to $R^6$ represents an amino group represented by $-NR^AR^B$ or fluorine atom. At least three among $R^1$ to $R^6$ represent fluorine atoms, and at least one among $R^1$ to $R^6$ represents an amino group represented by $-NR^AR^B$. $R^A$ and $R^B$ represent alkyl groups having 1 to 4 carbon atoms, and a ring may be formed at the end of the alkyl groups. n is 1.)
[13] Aphosphazene compound which is represented by the following Formula (1) and is defined under condition 1A or 1B.

[Chem. 11]

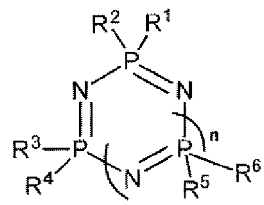

(1)

(1A: Each of $R^1$ to $R^6$ represents an amino group represented by $-NR^AR^B$ or a fluorine atom. At least three among $R^1$ to $R^6$ are fluorine atoms, and at least one among $R^1$ to $R^6$ is an amino group represented by $-NR^AR^B$. Each of $R^A$ and $R^B$ represents a different alkyl group, and an asymmetric ring may be formed at the end of the alkyl group. n is 1.)
(1B: Each of $R^1$ to $R^6$ represents an amino group represented by $-NR^AR^B$ or a fluorine atom. At least three among $R^1$ to $R^6$ are fluorine atoms, and at least two among $R^1$ to $R^6$ are amino groups represented by $-NR^AR^B$. Herein, two or more of amino groups represented by $-NR^AR^B$ include amino groups different from each other. $R^A$ and $R^B$ represent alkyl groups that may be substituted, and a ring may be formed at the end of the alkyl groups. n is 1.)

In the present specification, when there are plural substituents marked with a specific signs, or when plural substituents, ligands (including the number of substituents), and the like are defined at the same time or individually, each of the substituents, ligands, and the like may be the same as or different from each other. Moreover, when the plural substituents or ligands come close to each other, they may be connected to each other or form a ring.

The nonaqueous electrolyte solution of the present invention exhibits a high degree of flame retardancy in a secondary battery containing the nonaqueous electrolyte solution and accordingly produces excellent effects of suppressing deterioration of various performances of the battery and improving the performances.

Furthermore, the additive for the nonaqueous electrolyte solution for a secondary battery of the present invention improves the battery performances as described above, and the novel compound according to the present invention is useful as the additive.

## BRIEF DESCRIPTION OF THE DRAWINGS

Fig. 1 is a cross-sectional view schematically showing the constitution of a lithium ion secondary battery according to a preferable embodiment of the present invention.

Fig. 2 is a cross-sectional view specifically showing the constitution of a lithium ion secondary battery according to a preferable embodiment of the present invention.

Fig. 3 is a chart showing results of Tg-DTA measurement performed on a cyclic phosphazene compound (Example compound 1-2) used in examples.

## DESCRIPTION OF THE PREFERRED EMBODIMENTS

The nonaqueous electrolyte solution of the present invention contains a cyclic phosphazene compound, which has a specific nitrogen-containing group, and a specific carboxylic acid ester compound and/or a carbonic acid ester compound (hereinafter, called a "specific ester compound" in some cases) that are combined with each other in a specific amount. Accordingly, when the electrolyte solution is used for a secondary battery, deterioration of the battery performance is suppressed, and preferably, the performance is improved. Moreover, it is possible to promote the improvement of flame retardancy. The reason is unclear, but it is considered that due to the compound having the cyclic phosphazene skeleton, the flame retardancy may be improved. In addition, unlike an alkoxy phosphzene compound, the phosphazene compound having the specific nitrogen-containing group and halogen atoms does not contain oxygen atoms that easily trigger combustion, so this phosphazene compound can favorably make a contribution to impart flame retardancy to a specific electrolyte solution. On the other hand, presumably, the specific nitrogen-containing group in the phosphazene compound may work together with carbonyl groups of the carboxylic acid ester compound and the carbonic acid ester compound as well as lithium ions in the electrolyte solution, and this may make it easy for the electrolyte solution to reach the surface of the negative electrode, and an excellent Solid Electrolyte Interface (SEI) may be formed. It is considered that for this reason, cycle properties or Rate properties are inhibited from deteriorating or are improved, and an initial capacity or a retention ratio thereof is improved. The present invention will be described in detail based mainly on preferable embodiments thereof.

[Compound represented by Formula (1)]

The nonaqueous electrolyte solution for a secondary battery of the present invention contains a cyclic compound which is represented by the following Formula (1) and contains phosphorus and nitrogen atoms.

[Chem. 12]

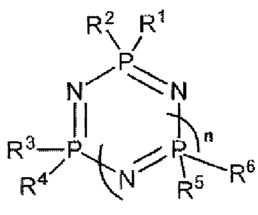

(1)

•$R^1$ to $R^6$

In the formula, $R^1$ to $R^6$ represent monovalent substituents as defined above. At least one of the substituents represented by $R^1$ to $R^6$ is $-NR^AR^B$, $-N=R^C$, or an azide group, and at least one of other substituents is a halogen atom. Particularly, it is preferable that all of $R^1$ to $R^6$ be constituted with a combination of groups selected from $-NR^AR^B$, $-N=R^C$, and an azide group or a combination thereof (hereinafter, called a "specific nitrogen-containing group" in some cases) with a halogen atom. As the halogen atom, fluorine is preferable. The number of the specific nitrogen-containing group is not particularly limited. However, the number is preferably 1 to 4, more preferably 1 to 3, particularly preferably 1 to

2, and even more preferably 1. Regarding the position of substitution, it is preferable for one phosphorus atom is substituted with the single specific nitrogen-containing group.

Among $R^1$ to $R^6$, substituents adjacent to each other may bind to each other to form a ring containing a phosphorus atom. $R^1$ to $R^6$ may be the same as or different from each other. Particularly, when they form a ring, it is preferable for a ring to be formed by $R^1$ and $R^2$, $R^3$ and $R^4$, and $R^5$ and $R^6$.

The substituents $R^1$ to $R^6$ are alkyl groups, aryl groups, alkoxy groups, aryloxy groups, alkylthio groups, arylthio groups, the specific nitrogen-containing groups described above, and halogen atoms. The $R^1$ to $R^6$ are particularly preferably alkyl groups having 1 to 6 carbon atoms, aryl groups having 6 to 12 carbon atoms, alkoxy groups having 1 to 6 carbon atoms, aryloxy groups having 6 to 12 carbon atoms, alkylthio groups having 1 to carbon atoms, arylthio groups having 6 to 12 carbon atoms, halogen atoms (preferably chlorine and fluorine), the specific nitrogen-containing groups described above. Among these, the specific nitrogen-containing groups, fluorine atoms, alkyl groups having 1 to 6 carbon atoms, or alkoxy groups having 1 to 6 carbon atoms are particularly preferable. The above alkyl groups and aryl groups may be substituted, and the alkyl groups may be linear or branched.

n

n represents an integer of 1 or 2 and is preferably 1.

$R^A$ and $R^B$

$R^A$ and $R^B$ are hydrogen atoms, alkyl groups, aryl groups, alkenyl groups, alkynyl groups, heterocyclic groups, cyano groups, silyl groups, or substituents represented by the following Formulae (1A), (1B), (1C), and (1D).

[Chem. 13]

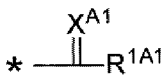
(1A)

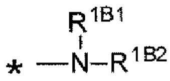
(1B)

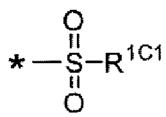
(1C)

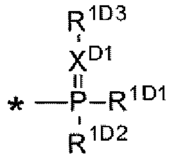
(1D)

$R^A$ and $R^B$ are preferably alkyl groups, aryl groups, or substituents represented by Formula (1A) or (1D). Among these, alkyl groups having 1 to 8 carbon atoms, fluorine-substituted alkyl groups having 1 to 6 carbon atoms, ether group-containing alkyl groups having 1 to 6 carbon atoms, aryl groups having 6 to 12 carbon atoms, and substituents having 1 to 7 carbon atoms represented by Formula (1A) that have 1 to 4 carbon atoms are particularly preferable. Moreover, alkyl groups having 1 to 4 carbon atoms, fluorine-substituted alkyl groups having 1 to 4 carbon atoms, are even more preferable, and among these, substituents having 6 or less carbon atoms in total are preferable. Particularly, substituents having 4 or less carbon atoms in total are preferable. $R^A$ and $R^B$ may form a ring containing a nitrogen atom by binding to or condensed with each other. The alkyl groups may be linear or branched. $R^A$ and $R^B$ may be the same as or different from each other. The ring formed by $R^A$ and $R^B$ is preferably an aziridine ring, an azetidine ring, a pyrrolidine ring, a pyrroline ring, a piperazine ring, a morpholine ring, a thiomorpholine ring, an oxazolidine ring, a thiazolidine ring, an imidazoline ring, an (iso)indole ring, or a carbazole ring.

$R^{1A1}$, $R^{1C1}$, $R^{1D1}$, and $R^{1D2}$

In the formulae, $R^{1A1}$, $R^{1C1}$, $R^{1D1}$, and $R^{1D2}$ represent alkyl groups, alkoxy groups, aryl groups, aryloxy groups, halogen atoms, or amino groups. Preferable examples of these substituents include the following. That is, the substituents are more preferably alkyl groups having 1 to 6 carbon atoms, alkoxy groups having 1 to 6 carbon atoms, aryl groups having 6 to 12 carbon atoms, aryloxy groups having 6 to 12 carbon atoms, chlorine groups, or fluorine atoms, even more preferably alkyl groups having 1 to 6 carbon atoms, alkoxy groups having 1 to 6 carbon atoms, chlorine groups, or fluorine atoms. These substituents may be further substituted. * represents a direct bond.

$R^{1B1}$ and $R^{1B2}$

$R^{1B1}$ and $R^{1B2}$ represent hydrogen atoms, alkyl groups, aryl groups, alkoxycarbonyl groups, aryloxycarbonyl groups, alkylsulfonyl groups, arylsulfonyl groups, silyl groups, or phosphonyl groups. Preferable examples of these

substituents include the following. That is, the substituents are preferably alkyl groups having 1 to 6 carbon atoms, alkoxycarbnyl groups having 1 to 7 carbon atoms, aryl groups having 6 to 12 carbon atoms, aryloxycarbonyl groups having 7 to 12 carbon atoms, alkylsulfonyl groups having 1 to 6 carbon atoms, arylsulfonyl groups having 6 to 12 carbon atoms, silyl groups having 1 to 6 carbon atoms, or phosphonyl groups having 1 to 12 carbon atoms, and particularly preferably alkyl groups having 1 to 6 carbon atoms, alkoxycarbonyl groups having 1 to 7 carbon atoms, alkylsulfonyl groups having 1 to 6 carbon atoms, silyl groups having 1 to 6 carbon atoms, or phosphonyl groups having 1 to 12 carbon atoms.

$X^{A1}$, $X^{D1}$, and $R^{1D3}$

In the formulae, $X^{A1}$ represents an oxygen atom or sulfur atom.

$X^{D1}$ represents an oxygen atom, a sulfur atom, or a nitrogen atom. When $X^{D1}$ is an oxygen atom or a sulfur atom, there is no $R^{1D3}$. When $X^{D1}$ is a nitrogen atom, $R^{1D3}$ represents an alkyl group (preferably having 1 to 4 carbon atoms), an aryl group (preferably having 6 to 12 carbon atoms), a silyl group (preferably having 1 to 6 carbon atoms), or a phosphonyl group (preferably having 1 to 12 carbon atoms).

$R^c$

$R^c$ represents a substituent represented by one of the Formulae (C1) to (C6).

[Chem. 14]

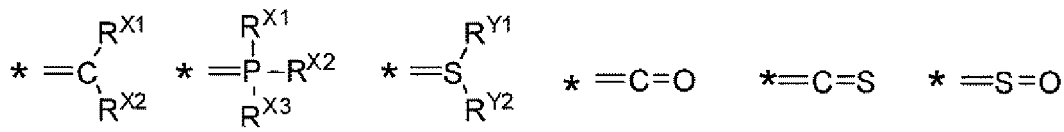

(C1) (C2) (C3) (C4) (C5) (C6)

$R^{X1}$, $R^{X2}$, and $R^{X3}$ represent alkyl groups (preferably having 1 to 6 carbon atoms), aryl groups (preferably having 6 to 24 carbon atoms), alkoxy groups (preferably having 1 to 6 carbon atoms), arylthio groups (preferably having 6 to 24 carbon atoms), alkylthio groups (preferably having 1 to 6 carbon atoms), arylthio groups (preferably having 6 to 24 carbon atoms), heterocyclic groups (preferably having 1 to 12 carbon atoms), halogen atoms, or silyl groups (preferably having 1 to 6 carbon atoms).

$R^{Y1}$ and $R^{Y2}$ represent halogen atoms. $R^{X1}$, $R^{X2}$, and $R^{X3}$ are preferably alkyl groups having 1 to 6 carbon atoms, alkoxy groups having 1 to 6 carbon atoms, alkylthio groups having 1 to 6 carbon atoms, chlorine atoms, fluorine atoms, or silyl groups having 1 to 6 carbon atoms.

In view of securing flame retardancy while maintaining battery performance, it is preferable that two or more among all of the substituents of $R^1$ to $R^6$ be fluorine atoms and the remaining substituents be the specific nitrogen-containing group and alkoxy groups. It is more preferable that three or more among all of the substituents be fluorine atoms. It is most preferable that four or more of the substituents be fluorine atoms. Alternatively, from the same point of view as described above, it is preferable that all of $R^1$ to $R^6$ are constituted with halogen atoms (preferably fluorine atoms) and the specific nitrogen-containing group. Particularly, it is preferable that one to three among the substituents be the specific nitrogen-containing groups. It is more preferable that one or two among the substituents be the specific nitrogen-containing group. It is even more preferable that one of the substituents be the specific nitrogen-containing group.

[$M_{PN}$/Ms]

In the nonaqueous electrolyte solution of the present invention, a ratio ($M_{PN}$/Ms) between a mass (Ms) of the non-protonic solvent containing metal salts including lithium ions and a mass ($M_{PN}$) of the aforementioned cyclic compound is 0.005 to 1. In order to improve safety and battery performance by means of causing the electrolyte solution to exhibit flame retardancy, the lower limit of the $M_{PN}$/Ms is set to be 0.005 or higher. The lower limit is more preferably 0.01 or higher, more preferably 0.02 or higher, and even more preferably 0.025 or higher. The upper limit is set to be 1 or lower, and preferably 0.6 or lower, more preferably 0.4 or lower, even more preferably 0.25 or lower, and particularly preferably 0.15 or lower. It is preferable to set the ratio to be equal to or higher than the lower limit, since sufficient flame retardancy can by secured. Moreover, it is preferable to set the ratio to be equal to or lower than the upper limit, since deterioration of the battery performance can be effectively suppressed.

If the electrolyte solution further contains a different type of solvent, the solvent mass (Ms) is calculated including

the solvent. Examples of the different type of solvent include nitrile-based solvents (acetonitrile, propionitrile, adiponitrile, isobutyronitrile, succinonitrile, and the like), amide-based solvents (N-methyl-2-pyrrolidone, dimethylformamide, dimethylimidazolidinone, dimethylacetmaide, and the like), ether-based solvents (furan, 2,5-dimethylfuran, tetrahydrofuran, 2-methyltetrahydrofuran, tetrahydropyran, 1,4-dioxane, 12-crown-4-ether, 18-crown-4-ether, dimethoxymethane, dimethoxyethane, diethoxyethane, diglyme, triglyme, and the like), dimethylsulfone, dimethyl sulfoxide, and the like.

[Compound represented by Formula (2A) or (2B)]

The compound represented by Formula (1) is preferably a compound represented by the following Formula (2A) or (2B).

[Chem. 15]

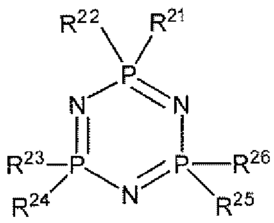

(2A)

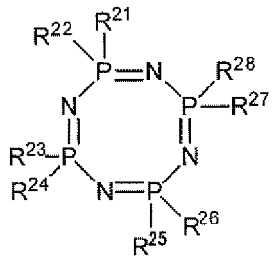

(2B)

$R^{21}$ to $R^{28}$

In the formulae, $R^{21}$ to $R^{28}$ have the same definition as that of $R^1$ to $R^6$ of Formula (1). $R^{21}$ to $R^{28}$ are preferably halogen atoms, alkyl groups, aryl groups, alkoxy groups, aryloxy groups, thioalkyl groups, thioaryl groups, or the specific nitrogen-containing groups. Among these, alkyl groups having 1 to 8 carbon atoms, aryl groups having 6 to 12 carbon atoms, alkoxy groups having 1 to 6 carbon atoms, aryloxy groups having 6 to 12 carbon atoms, alkylthio groups having 1 to 6 carbon atoms, arylthio groups having 6 to 12 carbon atoms, halogen atoms (preferably chlorine or fluorine), and the specific nitrogen-containing groups are preferable, and the specific nitrogen-containing groups, fluorine atoms, alkyl groups having 1 to 6 carbon atoms, or alkoxy groups having 1 to 6 carbon atoms are particularly preferable. The alkyl groups or aryl groups may be further substituted. The alkyl groups may be linear or branched. At least one of $R^{21}$ to $R^{28}$ is the aforementioned $-NR^AR^B$, $-N=R^C$, or an azide group or a combination (specific nitrogen-containing group) of these, and at least one of the remaining $R^{21}$ to $R^{28}$ is a fluorine atom. It is more preferable for the substituents to be in the form of a compound formed of the specific nitrogen-containing group and fluorine atoms. The number of the specific nitrogen-containing group is 1 to 4, preferably 1 to 3, particularly preferably 1 to 2, and even more preferably 1. It is preferable for the substituents to be constituted only with fluorine atoms in addition to the specific nitrogen-containing group.

Specific nitrogen-containing group described above

The groups preferable as the specific nitrogen-containing group, the number and substitution position thereof, the relationship between the specific nitrogen-containing group and halogen atoms, a preferable range thereof, and the like are the same as described for Formula (1). Specifically, the kind and number of $R^{21}$ to $R^{28}$ are not particularly limited. However, in view of securing flame retardancy while maintaining battery performance, it is preferable that two or more among all of the substituents be fluorine atoms and the remaining substituents consist of the specific nitrogen-containing group and alkoxy groups. It is more preferable that three or more among all of the substituents be fluorine atoms. It is most preferable that four or more, more favorably, five or more among the substituents be fluorine atoms. Alternatively, from the same point of view as described above, it is preferable for all of $R^{21}$ to $R^{28}$ to be constituted with halogen atoms (preferably, fluorine atoms) and the specific nitrogen-containing group. The number of the specific nitrogen-containing group constituting the substituents is preferably 1 to 3, more preferably 1 or 2, and even more preferably 1.

In the present invention, it is preferable for the nonaqueous electrolyte solution to contain two or more kinds of the compound represented by Formula (2A) or (2B). Moreover, it is preferable that a 20% mass reduction temperature of at least one of the compounds that is measured by Thermogravimetry-Differential Thermal Analysis (TG-DTA) be 110°C or lower. Further, a mass ($M_{110}$) of the compound having a 20% mass reduction temperature of 110°C or lower measured by Thermogravimetry-Differential Thermal Analysis (TG-DTA) account for 20% to 80%, more preferably 40% to 70% of a total mass ($M_{2A2B}$) of the compounds represented by Formula (2A) or (2B). If the ratio is set to be equal to or higher than the lower limit described above, it is possible to effectively impart flame retardancy to the electrolyte

solution having a low boiling point (low flash point). If the ratio is set to be equal to or lower than the upper limit described above, formation of gas in the battery that is caused by volatilization can be suppressed.

Hereinafter, specific examples of the compound represented by Formula (1) will be described, but the present invention is not limited to the examples. The following compounds may be used alone, or two or more kinds of any of the compounds may be used in combination.

[Chem. 16]

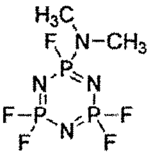
(1-1)

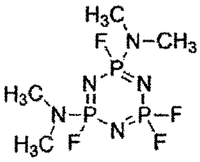
(1-2)

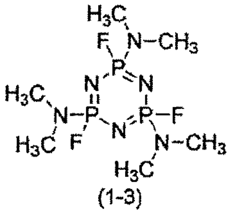
(1-3)

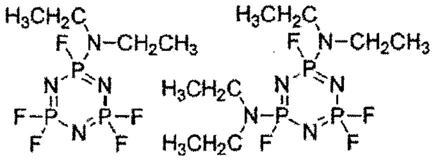
(1-4) (1-5)

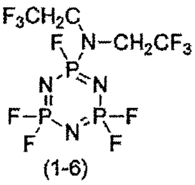
(1-6)

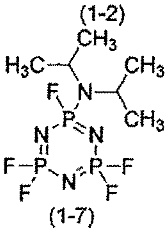
(1-7)

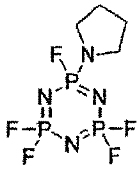
(1-8)

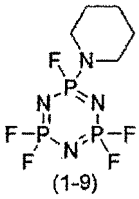
(1-9)

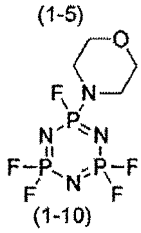
(1-10)

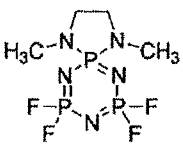
(1-11)

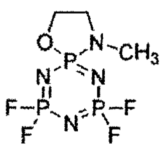
(1-12)

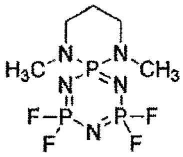
(1-13)

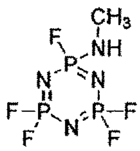
(1-14)

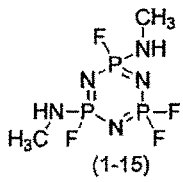
(1-15)

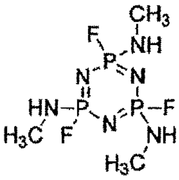
(1-16)

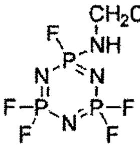
(1-17)

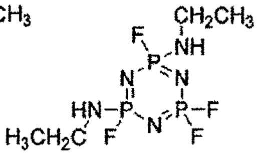
(1-18)

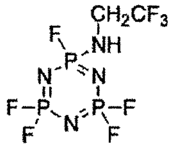
(1-19)

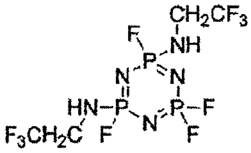
(1-20)

[Chem.17]

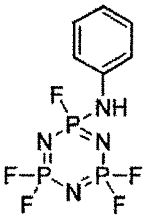
(1-21)

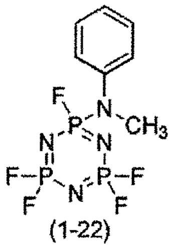
(1-22)

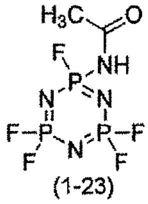
(1-23)

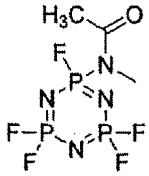
(1-24)

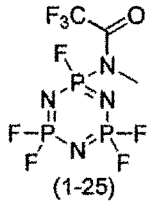
(1-25)

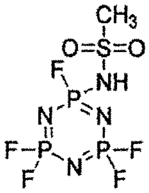
(1-26)

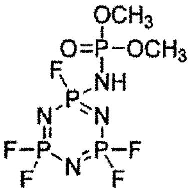
(1-27)

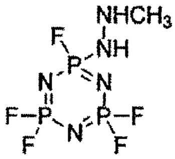
(1-28)

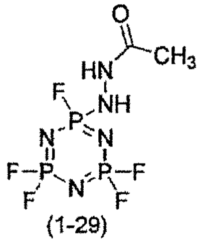
(1-29)

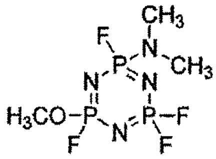
(1-30)

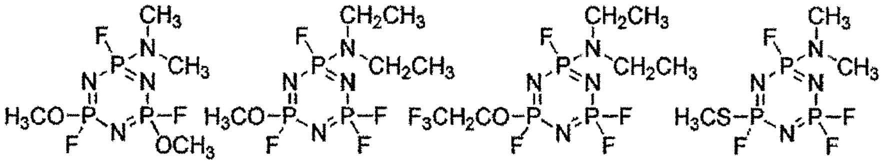
(1-31) (1-32) (1-33) (1-34)

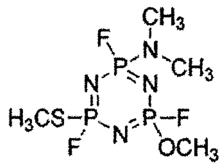
(1-35)

[Chem. 18]

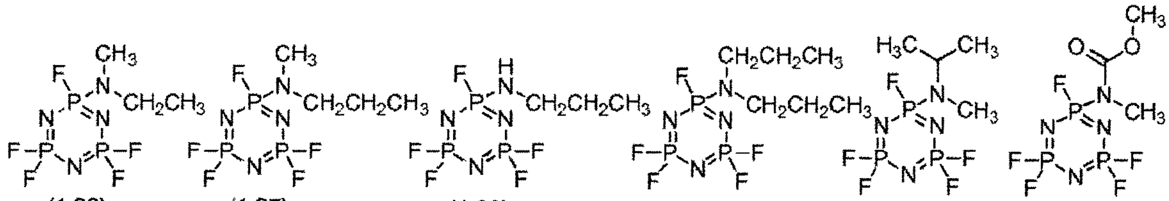

(1-36) (1-37) (1-38) (1-39) (1-40) (1-41)

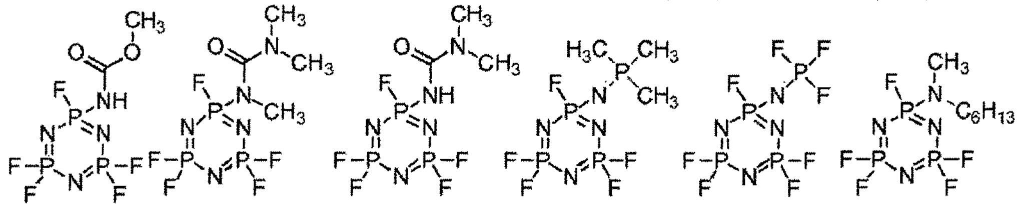

(1-42) (1-43) (1-44) (1-45) (1-46) (1-47)

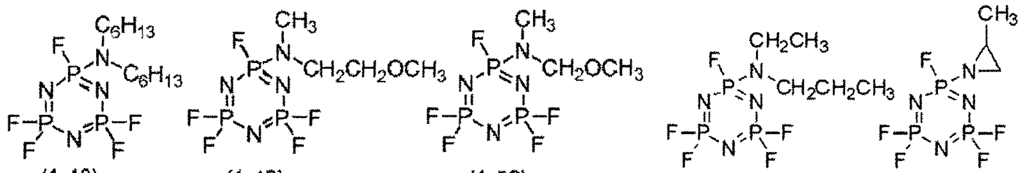

(1-48) (1-49) (1-50) (1-51) (1-61)

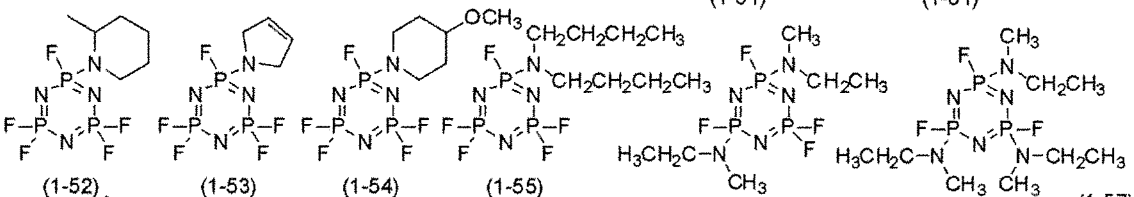

(1-52) (1-53) (1-54) (1-55) (1-56) (1-57)

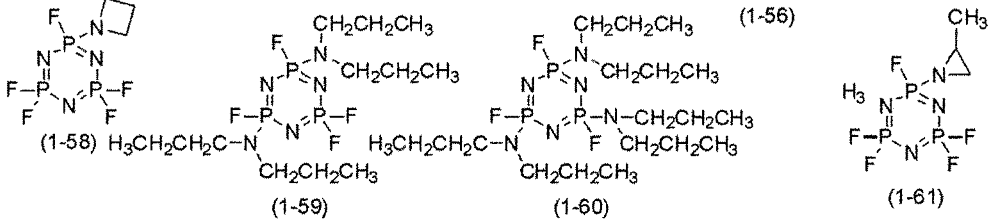

(1-58) (1-59) (1-60) (1-61)

[Chem. 19]

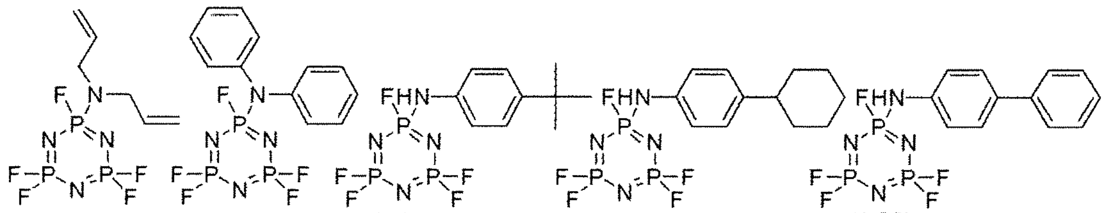

(1-62) (1-63) (1-64) (1-65) (1-66)

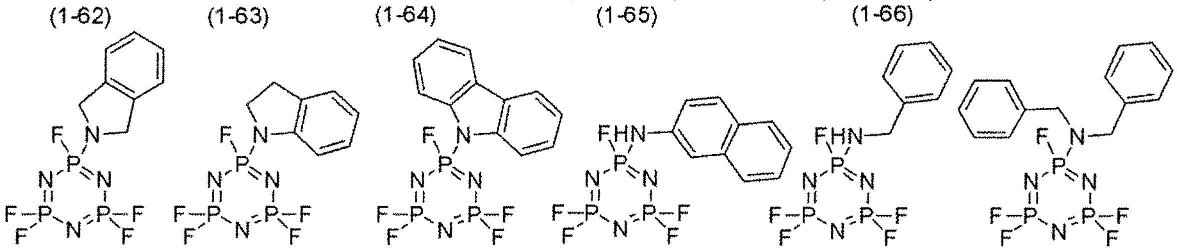

(1-67) (1-68) (1-69) (1-70) (1-71) (1-72)

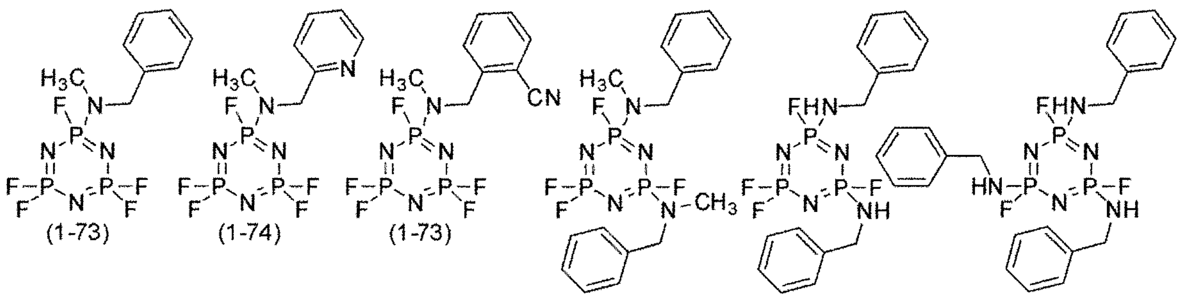

(1-73) (1-74) (1-73) (1-74) (1-75) (1-76)

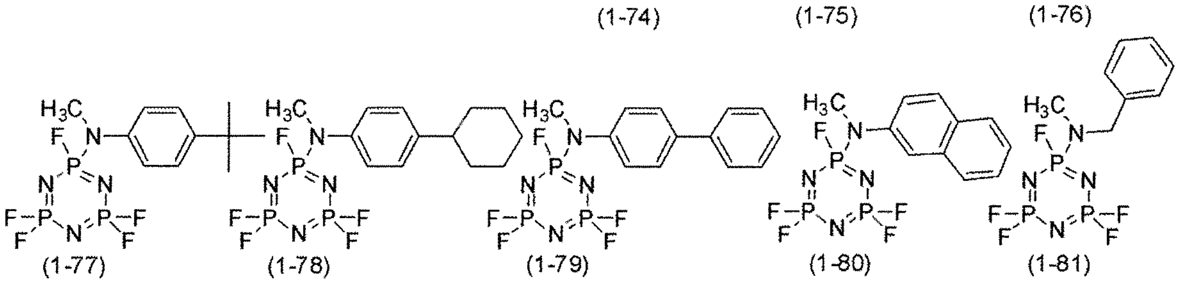

(1-77) (1-78) (1-79) (1-80) (1-81)

[Chem. 20]

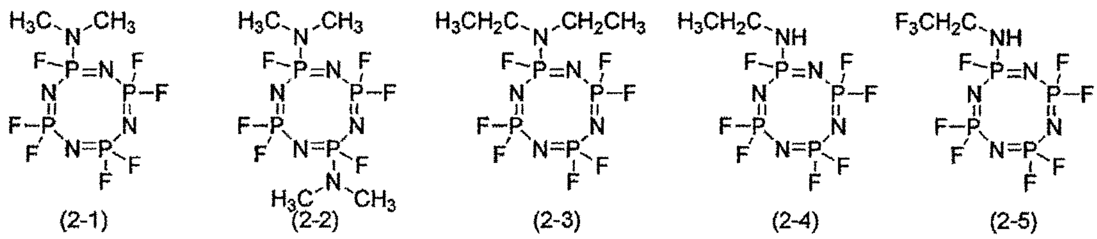

(2-1) (2-2) (2-3) (2-4) (2-5)

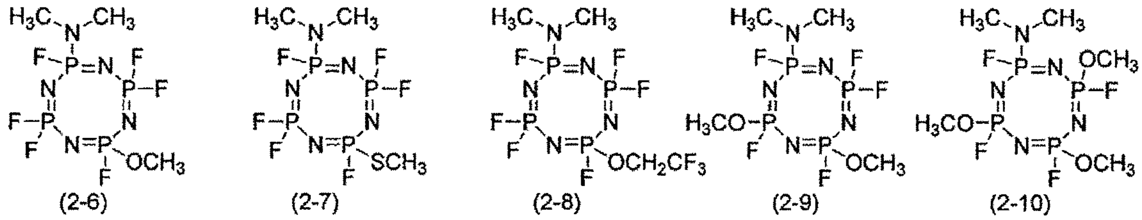

(2-6) (2-7) (2-8) (2-9) (2-10)

The compound represented by Formula (1) can be synthesized by conventional method with reference to, for example, the method disclosed in DE2139691B.

Moreover, by a method of introducing an amino group that is similar to a target product into chlorocyclotriphosphazene and then the fluorinating the resultant by using a fluorinating agent such as sodium fluoride, potassium fluoride, or antimony fluoride, the target product can also be obtained. For the amination of chlorocyclotriphoaphazene performed in the above method, an acid that generates amine similar to the target product can be used as a remover. However, by means of concurrently using amine similar to the target product, an inorganic base, and an organic base, the target product can also be synthesized. The inorganic base is preferably an inorganic base constituted with an anion and a metal cation. It is preferable for the inorganic base to be a combination of an anion, which is selected from hydroxides, carbonates, bicarbonates, and fluorides, with a metal cation which is selected from alkali metals and alkaline earth metals. It is preferable for the metal cation to be selected from sodium, potassium, magnesium, and calcium. Preferable examples thereof specifically include hydroxides such as sodium hydroxide and potassium hydroxide, carbonates such as potassium carbonate, sodium carbonate, and sodium hydrogen carbonate, and fluorides such as sodium fluoride and potassium fluoride. Examples of the organic base include trialkylamine such as triethylamine, diisopropylethyamine, methyl morpholine, and diazabicycloundecene and aromatic groups such as pyridine and lutidine. As the solvent used for synthesis, solvents that are generally used can be used without problems, but preferable examples thereof include ester-based solvents, ether-based solvents, nitrile-based solvents, solvents consisting of an aliphatic solvent and an organic solvent forming two layers in the same solvent, and the like. Among these, ether-based solvents and nitrile-based solvents are preferable.

In addition to the above method, a method of forming an amine-metal bond and reacting this with chlorocyclotriphosphazene can be used to synthesize the compound. Examples of the amine-metal bond include amine-alkali metal bonds such as an amine-lithium bond and an amine-sodium bond, amine-alkaline earth metal bonds such as an amine-calcium bond, and amine-silicon bonds such as an amine-trimethylsilyl bond.

Hereinafter, preferable embodiments of the present invention relating to the additive for a nonaqueous electrolyte solution for a secondary battery and to the novel compound will be described.

The additive for a nonaqueous electrolyte solution for a secondary battery of the present invention is preferably the compound represented by Formula (1). This compound satisfies the following condition 1.

Condition 1:

In the formula, each of $R^1$ to $R^6$ represents an amino group represented by $-NR^AR^B$ or a fluorine atom. At least three among $R^1$ to $R^6$ represent fluorine atoms, and at least one among $R^1$ to $R^6$ has the amino group represented by $-NR^AR^B$. $R^A$ and $R^B$ represent alkyl groups having 1 to 8 (preferably 4 or less) carbon atoms, and a ring may be formed at the end of the alkyl groups. n is 1.

Preferable examples of the additive for a nonaqueous electrolyte solution for a secondary battery include the examples of the phosphazene compound described above.

The present invention also includes a phosphazene compound which is represented by Formula (1) and defined under the condition 1A, 1B, or 1C. This compound specifies a portion of the compounds forming the additive for a nonaqueous electrolyte solution for a secondary battery, and usefulness thereof as a novel compound was newly found by the present inventors.

Condition 1A:

Each of $R^1$ to $R^6$ represents an amino group represented by $-NR^AR^B$ or a fluorine atom. At least three among $R^1$ to $R^6$ are fluorine atoms, and at least one among $R^1$ to $R^6$ is the amino group represented by $-NR^AR^B$. Each of $R^A$ and $R^B$ represent a different alkyl group, and an asymmetric ring may be formed at the end of the alkyl group. n is 1. Herein, the asymmetric ring refers to a structure that does not exhibit symmetry of $C_2$ when being rotated around an imaginary rotation axis passing through nitrogen atoms. Examples of such a structure include 2-methylazilidine, 2-methylpyrrolidine, and the like.

$R^A$ and $R^B$ are preferably alkyl groups having 1 to 8 carbon atoms, and more preferably alkyl groups having 1 to 4 carbon atoms. The sum of carbon atoms of $R^A$ and $R^B$ is particularly preferably 8 or less, more preferably 6 or less, and even more preferably 4 or less. That is, $R^A$ and $R^B$ are preferably alkyl groups including methyl groups, ethyl groups, propyl groups, isopropyl groups, n-butyl groups, sec-butyl groups, and tert-butyl groups. The structure of the ring formed at the end of alkyl preferably has 2 to 8 carbon atoms (not including carbons of the substituents, and the same condition will be applied to the following description) and more preferably has 2 to 5 carbon atoms.

Condition 1B:

Each of $R^1$ to $R^6$ represents an amino group represented by $-NR^AR^B$ or a fluorine atom. At least three among $R^1$ to $R^6$ are fluorine atoms, and at least two among $R^1$ to $R^6$ are the amino groups represented by $-NR^AR^B$. Herein, two or more of $-NR^AR^B$s may include amino groups different from each other. $R^A$ and $R^B$ represent alkyl groups that may

be substituted, and a ring may be formed at the end of the alkyl group. n is 1.

$R^A$ and $R^B$ are preferably alkyl groups having 1 to 8 carbon atoms, more preferably alkyl groups having 1 to 4 carbon atoms, and particularly preferably methyl groups or ethyl groups. The sum of carbon atoms of $R^A$ and $R^B$ is particularly preferably 8 or less, more preferably 6 or less, and even more preferably 4 or less. That is, $R^A$ and $R^B$ are preferably alkyl groups including a methyl group, an ethyl group, a propyl group, an isopropyl group, an n-butyl group, a sec-butyl group, and a tert-butyl group. The structure of the ring formed at the end of alkyl preferably has 2 to 8 carbon atoms and more preferably has 2 to 5 carbon atoms.

Condition 1C:

Each of $R^1$ to $R^6$ represents an amino group represented by $-NR^AR^B$ or a fluorine atom. At least three among $R^1$ to $R^6$ are fluorine atoms, and at least one among $R^1$ to $R^6$ has an amino group represented by $-NR^AR^B$. Herein, when there are plural $-NR^AR^B$s, they have the same structure. $R^A$ and $R^B$ represent alkyl groups having 3 or more carbon atoms that may be substituted, and a ring may be formed at the end of the alkyl groups.

$R^A$ and $R^B$ are preferably alkyl groups having 3 to 8 carbon atoms, more preferably alkyl groups having 3 to 4 carbon atoms, and particularly preferably n-propyl groups or isopropyl groups. The sum of carbon atoms of $R^A$ and $R^B$ is particularly preferably 8 or less and more preferably 6 or less. That is, $R^A$ and $R^B$ are preferably alkyl groups including a propyl group, an isopropyl group, an n-butyl group, a sec-butyl group, and a tert-butyl group. The structure of the ring formed at the end of alkyl preferably has 3 to 8 carbon atoms and more preferably has 3 to 4 carbon atoms. n is 1.

In the conditions 1 and 1A to 1C, when $R^A$ and $R^B$ are alkyl groups, the alkyl groups may further include substituents. Examples of the substituents that may be substituted include the examples of the substituents $R^1$ to $R^6$ described above. Moreover, $R^A$ and $R^B$ may be linked to each other to form a ring.

[Non-protonic solvent]

The nonaqueous electrolyte solution of the present invention contains a non-protonic solvent, and it is preferable for the non-protonic solvent to contain at least one of a carbonic acid ester compound represented by the following Formula (3A) or (3B) and a carboxylic acid ester compound represented by the following Formula (3C) (that is, one of the compounds represented by Formulae (3A), (3B), and (3C)).

[Chem. 21]

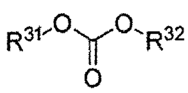
(3A)

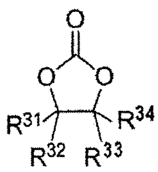
(3B)

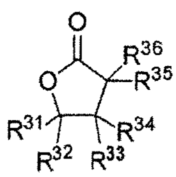
(3C)

$R^{31}$ to $R^{36}$

In the formulae, $R^{31}$ to $R^{34}$ represent hydrogen atoms, alkyl groups (excluding halogen elements), or aryl groups (excluding halogen elements). Moreover, $R^{35}$ and $R^{36}$ represent hydrogen atoms, alkyl groups that may be substituted with fluorine in some cases, alkyl groups having an ether chain, or aryl groups that may be substituted with fluorine in some cases. As alkyl groups represented by $R^{31}$ to $R^{34}$, linear or branched alkyl groups and alkyl groups having an ether chain are preferable. Among these, alkyl groups having 1 to 6 carbon atoms and alkyl groups having 1 to 6 carbon atoms and including an ether group are particularly preferable. As alkyl groups represented by $R^{35}$ and $R^{36}$, linear or branched alkyl groups, alkyl groups having a fluorine atom, and alkyl groups having an ether chain are preferable. Among these, alkyl groups having 1 to 6 carbon atoms, alkyl groups having 1 to 6 carbon atoms that have been partially substituted with fluorine, and alkyl groups having 1 to 6 carbon atoms and including an ether group are particularly preferable. $R^{31}$ to $R^{34}$ in Formulae (3B) and (3C) are particularly preferably hydrogen atoms or alkyl groups having 1 to 4 carbon atoms, and more preferably hydrogen atoms. $R^{35}$ and $R^{36}$ of Formula (3C) are particularly preferably hydrogen atoms, fluorine-substituted alkyl groups having 1 to 4 carbon atoms, or alkyl groups having 1 to 4 carbon atoms, and more preferably hydrogen atoms. Further, as described above, the substituents adjacent to each other may form a ring. Particularly, the substituents $R^{31}$ and $R^{32}$ as well as $R^{33}$ and $R^{34}$ in Formula (3B) may form a ring. In addition, the

substituents $R^{31}$ and $R^{32}$, $R^{33}$ and $R^{34}$, and $R^{35}$ and $R^{36}$ in Formula (3C) may form a ring.

It is preferable for the non-protonic solvent to contain at least one of the compound represented by Formula (3A) and the compound representd by Formula (3C) as well as the compound represented by Formula (3B). Moreover, a ratio ($M_{3B}/M_{AC}$) between a volume ($M_{3B}$) of the compound represented by Formula (3B) and a total volume ($M_{AC}$) of the compound represented by Formula (3A) and the compound represented by Formula (3C) is preferably 0.2 to 5 and more preferably 0.3 to 1. If the ratio is set to be equal to or lower than the upper limit described above, it is possible to prevent great increase in viscosity at a sufficient dielectric constant and to maintain excellent cycle properties without excessively deteriorating lithium ion conductivity. On the other hand, if the ratio is set to be equal to or higher than the lower limit described above, it is possible to realize excellent cycle properties without deteriorating dielectric constant.

[Compound represented by Formula (4)]

It is preferable for the nonaqueous electrolyte solution of the present invention to further contain at least one of the compounds represented by the following Formulae (4A), (4B), (4C), or (4D). In this manner, the effect of improving cycle properties and rate properties is expected to be produced.

[Chem. 22]

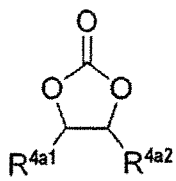
(4A)

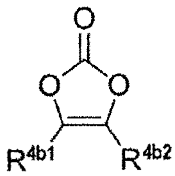
(4B)

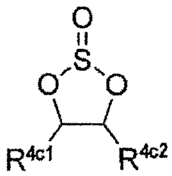
(4C)

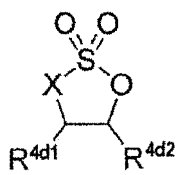
(4D)

$R^{4a1}$ and $R^{4a2}$

In the formulae, $R^{4a1}$ and $R^{4a2}$ represent hydrogen atoms, halogen (preferably fluorine, bromine, or chlorine, more preferably fluorine), fluorine-substituted alkyl groups, fluorine-substituted aryl groups, or vinyl groups. At this time, at least one of $R^{4a1}$ and $R^{4a2}$ represents halogen, a fluorine-substituted alkyl group, a fluorine-substituted aryl group, or a vinyl group. The vinyl group may further include substituents, just like other substituents. Preferable examples of the alkyl groups and aryl groups include the following. That is, among the above groups, fluorine-substituted alkyl groups having 1 to 6 carbon atoms and vinyl groups are preferable as $R^{4a1}$ and $R^{4a2}$.

$R^{4b1}$ and $R^{4b2}$

$R^{4b1}$ and $R^{4b2}$ represent hydrogen atoms, alkyl groups, or aryl groups. Among these, hydrogen atoms, alkyl groups having 1 to 6 carbon atoms, and aryl groups having 6 to 12 carbon atoms are exemplified as preferable substituents. Among these, hydrogen atoms, alkyl groups having 1 to 6 carbon atoms, and fluorine-substituted alkyl groups having 1 to 6 are preferable as $R^{4b1}$ and $R^{4b2}$.

$R^{4c1}$, $R^{4c2}$, $R^{4d1}$, and $R^{4d2}$

$R^{4c1}$, $R^{4c2}$, $R^{4d1}$, and $R^{4d2}$ represent hydrogen atoms, alkyl groups, aryl groups, fluorine-substituted alky groups, fluorine-substituted aryl groups, or vinyl groups. Preferable examples of the alkyl groups and aryl groups include hydrogen atoms, alkyl groups having 1 to 6 carbon atoms, fluorine-substituted alkyl groups having 1 to 6 carbon atoms, alkyl groups having 1 to 6 carbon atoms and including an ether group, phenyl groups, and vinyl groups. These alkyl groups and phenyl groups may further have substituents, just like other substituents. Among the above groups, alkyl groups having 1 to 6 carbon atoms, fluorine-substituted alkyl groups, vinyl groups are preferable as $R^{4c1}$ , $R^{4c2}$, $R^{4d1}$, and $R^{4d2}$. These substituents may be further substituted.

X

X represents a methyene group or an oxygen atom. The methylene group may further have substituents, just like other substituents. Preferable examples of the substituents include alkyl groups having 1 to 6 carbon atoms, aryl groups having 6 to 12 carbon atoms, and vinyl groups.

In the present invention, a ratio ($M_4$/Ms) between a mass (Ms) of the aforementioned solvent and a total mass

($M_4$) of the compound represented by Formula (4A), (4B), (4C), or (4D) is preferably 0.001 to 0.25, more preferably 0.005 to 0.2, and particularly preferably 0.01 to 0.2. If being specified in another form, $M_4$/Ms is preferably 0.001 or higher, more preferably 0.005 or higher, and particularly preferably 0.01 or higher. The upper limit thereof is preferably 0.25 or less and more preferably 0.2 or less. If the ratio is set to be equal to or higher than the lower limit described above, the probability that the electrolyte solution may react with the electrode surface is sufficiently heightened, whereby the effect of excellently improving the cycle properties to a desired level can be produced. On the other hand, if the ratio is set to be equal to or lower than the upper limit described above, it is possible to maintain excellent cycle properties without excessively increasing viscosity and deteriorating lithium ion conductivity.

(ions and the like of lithium)

The metal ions or salts thereof, which are contained in the electrolyte solution of the present invention and belong to group 1 or 2 of the periodic table, are lithium salts. These may be used alone, or two or more kinds thereof may be used in combination. Lithium salts are used in view of output. When the electrolyte solution of the present invention is used an electrolyte of a nonaqueous electrolyte solution for a lithium secondary battery, lithium salts are used. The lithium salts are not particularly limited as long as they are generally used as an electrolyte of a nonaqueous electrolyte solution for a lithium secondary battery. However, for example, the following is preferable.

(L-1) Inorganic lithium salts: inorganic fluoride salts such as $LiPF_6$, $LiBF_4$, $LiAsF_6$, and $LiSbF_6$; perhalogen acid salts such as $LiClO_4$, $LiBRO_4$, and $LiIO_4$; inorganic chloride salts such as $LiAlCl_4$; and the like

(L-2) Fluorine-containing organic lithium salt: perfluoroalkane sulfonic acid salts such as $LiCF_3SO_3$; perfluoroalkane sulfonylimide salts such as $LiN(CF_3SO_2)_2$, $LiN(CF_3CF_2SO_2)_2$, $LiN(FSO_2)_2$, $LiN(CF_3SO_2)(C_4F_9SO_2)$; perfluoroalkane sulfonylmethide salts such as $LiC(CF_3SO_2)_3$; fluoroalkyl fluorophosphates salts such as $Li[PF_5(CF_2CF_2CF_3)]$, $Li[PF_4(CF_2CF_2CF_3)_2]$, $Li[PF_3(CF_2CF_2CF_3)_3]$, $Li[PF_5(CF_2CF_2CF_2CF_3)]$, $Li[PF_4(CF_2CF_2CF_2CF_3)_2]$, $Li[PF_3(CF_2CF_2CF_2CF_2CF_3)_3]$, and the like

(L-3) Oxalato obrate salts: lithium bis(oxalato)borate, lighium difluorooxalato borate, and the like

Among these, $LiPF_6$, $LiBF_4$, $LiAsF_6$, $LiSbF_6$, $LiClO_4$, $Li(Rf^1O_3)$, $LiN(Rf^1SO_2)_2$, $LiN(FSO_2)_2$, $LiN(Rf^1SO_2)(Rf^2SO_2)_2$, lithium bis(oxalato)borate slats are preferable, and $LiPF_6$, $LiBF_4$, $LiN(Rf^1SO_2)_2$, $LiN(FSO_2)_2$, a lithium imide salt such as $LiN(Rf^1SO_2)(Rf^2SO_2)_2$, and a lithium bis(oxalate)borate salt are more preferable. Herein, each of $Rf^1$ and $Rf^2$ represents a perfluoroalkyl group.

Moreover, for the electrolyte solution, one kind of lithium salt may be used alone, or two or more kinds thereof may be used in any type of combination.

The ions of lithium or the metal salts thereof are preferably added to the electrolyte solution in such an amount that a preferable salt concentration which will be described in the following preparation method of the electrolyte solution will be obtained. The salt concentration is appropriately selected according to the purpose of use of the electrolyte solution. However, generally, the salt concentration is preferably from 10% by mass to 50% by mass, and more preferably from 15% by mass to 30% by mass in general, based on the total mass of the electrolyte solution. Moreover, when the concentration is evaluated as the concentration of ions, the concentration may be calculated by being converted into the concentration of the metal salts that are preferably used.

The content of the ions of lithium or the metal salts thereof in the electrolyte solution that is expressed in a mol concentration is preferably 0.6 mmol/L to 1.5 mmol/L and more preferably 0.8 mmol/L to 1.2 mmol/L.

[Preparation method of electrolyte solution]

Next, a typical preparation method of the electrolyte solution of the present invention will be described by describing an example case where a lithium salt is used as a salt of a metal ion.

The electrolyte solution of the present invention is prepared by dissolving a lithium salt and various additives which are added as desired in the aforementioned solvent of the nonaqueous electrolyte solution.

In the present invention, the term "nonaqueous" means the electrolyte solution substantially does not contain water. However, the electrolyte solution may contain a trace of water within a range that does not diminish the effects of the present invention. In consideration of obtaining excellent properties, the water content is preferably 200 ppm (based on mass) or less, and more preferably 100 ppm or less. The lower limit is not particularly limited; however, in consideration of unavoidable mingling of water, the lower limit practically becomes 10 ppm or more.

[Kit]

The electrolyte solution of the present invention may be a kit constituted with plural liquids, powders, and the like. For example, a liquid may be constituted with the aforementioned phosphazene and non-protonic solvent, the other liquid may be constituted with electrolytes and the non-protonic solvent, and these two liquids may be mixed together

before use to prepare the electrolyte solution.

[Secondary battery]

A preferable embodiment of the secondary battery of the present invention will be described with reference to Fig. 1 as an extremely simplified schematic cross-sectional view of the secondary battery. Here, the scope of the present invention is not limited by the drawing and the description thereof.

A lithium ion secondary battery 10 of the present invention include a nonaqueous electrolyte solution 5 of the present invention, a positive electrode C (consisting of a positive electrode collector 1 and a positive electrode active material layer 2) that enables lithium ions to be inserted into or released from this electrode, and a negative electrode A (consisting of a negative electrode collector 3 and a negative electrode active material layer 4) that enables lithium ions to be inserted into or released from this electrode. In addition to these essential members, the lithium ion secondary battery 10 may include a separator 9 that is disposed between the positive electrode and the negative electrode, a collector terminal (not shown in the drawing), a cover case (not shown in the drawing), and the like, in consideration of the purpose of use of the battery, the form of potential, and the like. If necessary, a protective element may be mounted on at least one of the inside and outside of the battery. If the battery has such a structure, lithium ions are transferred inside the electrolyte solution 5 as described by a and b, whereby charge and discharge can occur as described by $\alpha$ and $\beta$, and the battery can be driven or store electricity by operation means 6 through a circuit wiring 7. Hereinafter, the constitution of the lithium secondary battery as a preferable embodiment of the present invention will be described in more detail.

(Battery shape)

The battery shape applied to the lithium secondary battery of the present embodiment is not particularly limited. Examples of the shape include a bottomed polygonal shape, a bottomed cuboidal shape, a thin shape, a sheet shape, a paper shape, and the like, and any of these may be used. Moreover, the battery may have an unusual shape such as a horseshoe shape or a comb shape that is designed in consideration of the shape of system or instruments in which the battery will be installed. Among these, in view of effectively releasing the internal heat of the battery to the outside, a rectangular shape such as a bottomed cuboidal shape or a thin shape that is relatively flat and has at least one large-area surface is preferable.

In the battery having a bottomed polygonal shape, the outer surface thereof with respect to power-generating elements that fill the battery is small. Therefore, it is preferable to design the battery such that Joule heat caused by the internal resistance at the time of charge or discharge is efficiently released to the outside. The bottomed polygonal battery will be described later together with Fig. 2.

(Constituent members of battery)

As shown in Fig. 1, the lithium secondary battery of the present embodiment is constituted with the electrolyte solution 5, electrode mixtures C and A of the positive and negative electrodes, and a basic member 9 of a separator. Hereinafter, each of these members will be described.

(electrolyte solution)

It is preferable for the electrolyte solution used in the lithium secondary battery of the present embodiment to contain, as main components, the solvent of a nonaqueous electrolyte solution and the nonaqueous electrolyte solution for a secondary battery of the present invention that is prepared by the aforementioned method and contains a phosphazene compound containing at least a specific nitrogen-containing group and halogen atoms and lithium salts as electrolyte salts. That is, the electrolyte solution 5 is preferably a nonaqueous electrolyte solution for a secondary battery that contains the specific phosphazene compound, a nonaqueous electrolyte solution, and lithium salts as electrolyte salts. As the electrolyte salt used for the nonaqueous electrolyte solution for a secondary battery, it is possible to use the aforementioned salts which are salts of metal ions belonging to group 1 or 2 of the periodic table and described in detail in the embodiment of the nonaqueous electrolyte solution for a secondary battery of the present invention. Likewise, as the solvent of the nonaqueous electrolyte solution used for the lithium secondary battery of the present invention, it is possible to use those described in detail in the embodiment of the nonaqueous electrolyte solution for a secondary battery of the present invention. It is also possible to add other additives to further improve the performance.

In order to improve the battery performance, various additives can be used for the electrolyte solution of the present invention according to the purpose, as long as the effects of the present invention are not diminished. As such additives, functional additives such as an overcharge-preventing agent, a negative electrode coat-forming agent, and a

positive electrode-protecting agent may be used.

Moreover, the concurrent use of the negative electrode coat-forming agent and the positive electrode-protecting agent or the concurrent use of the overcharge-preventing agent, the negative electrode coat-forming agent, and the positive electrode-protecting agent is particularly preferable.

As the overcharge-preventing agent, aromatic compounds are preferable, biphenyl derivatives, naphthalene derivatives, and benzene derivatives are more preferable, and biphenyl, fluorobiphenyl, alkylbiphenyl, fluoronaphthalene, fluorobenzene, alkylbenzene, cycloalkylbenzene, alkoxybenzene derivatives, and the like are even more preferable.

The content of the functional additives in the nonaqueous electrolyte solution is not particularly limited. However, the content is preferably 0.01% by mass or more, particularly preferably 0.1% by mass or more, and more preferably 0.2% by mass or more, based on the total amount of the nonaqueous electrolyte solution. The upper limit is preferably 5% by mass or less, particularly preferably 3% by mass or less, and more preferably 2% by mass or less. The addition of those compounds can inhibit rupture or ignition of the battery that occurs when abnormality is caused by overcharge or can improve a capacity maintenance properties or cycle properties that are exhibited after the battery is stored at a high temperature.

(Electrode mixture)

The electrode mixture is a sheet-like substance obtained by coating a dispersion containing an active material, a conductive material, a binder, a filler, and the like onto a collector (electrode substrate). In a secondary battery, it is preferable to use a positive electrode mixture that contains a positive-electrode active material as the active material and a negative electrode mixture that contains a negative electrode active material as the active material. Next, the respective components and the like in the dispersion (mixture or composition for electrodes) constituting the electrode mixture will be described.

(Positive-electrode active material)

As the active material of a positive electrode, a positive-electrode active material in the form of particles may be used. As the positive-electrode active material, transition metal oxides that enable lithium ions to be reversibly inserted into or released from the oxides can be used. However, it is preferable to use lithium-containing transition metal oxides. Preferable examples of lithium-containing transition metal oxides preferably used as the positive-electrode active material include oxides including Ti, V, Cr, Mn, Fe, Co, Ni, Cu, Mo, and W which contain lithium. Moreover, alkali metals (elements of group 1 (Ia) or group 2 (IIa) of the periodic table) other than lithium and/or Al, Ga, In, Ge, Sn, Pb, Sb, Bi, Si, P, B, and the like may be mixed. The amount of these elements to be mixed is preferably 0 mol% to 30 mol% based on the transition metal.

Among the lithium-containing transition metal oxides preferably used as the positive-electrode active material, the materials, which are synthesized by means of mixing a lithium compound with a transition metal compound (the transition metal mentioned herein refers to at least one kind selected from Ti, V, Cr, Mn, Fe, Co, Ni, Mo, and W) at a molar ratio (lithium compound/transition metal compound) of 0.3 to 2.2 in total, are more preferable.

Among the mixtures of the lithium compound and the transition metal compound, materials containing $Li_gM3O_2$ (M3 represents one or more kinds of elements selected from Co, Ni, Fe, and Mn, and g represents 0 to 1.2) or materials having a spinel structure represented by $Li_hM4_2O_4$ (M4 represents Mn, and h represents 0 to 2) are particularly preferable. As the aforementioned M3 and M4, Al, Ga, In, Ge, Sn, Pb, Sb, Bi, Si, P, B, and the like may be mixed in addition to the transition metals. The amount of these elements to be mixed is preferably 0 mol% to 30 mol% based on the transition metal.

Among the materials containing $Li_gM3O_2$ and the materials having a spinel structure represented by $Li_hM4_2O_4$, $Li_gCoO_2$, $Li_gNiO_2$, $Li_gMnO_2$, $Li_gCo_jNi_{1-j}O2$, $Li_hMn_2O_4$, $LiNi_jMn_{1-j}O_2$, $LiCo_jNi_hAl_{1-j-h}O_2$, $LiCo_jNi_hMn_{1-j-h}O_2$, $LiMn_hAl_{2-h}O_4$, and $LiMn_hNi_{2-h}O_4$ (g represents 0.02 to 1.2, j represents 0.1 to 0.9, and h represents 0 to 2) are particularly preferable, and $Li_gCoO_2$, $Li_hMn_2O_4$, $LiCo_jNi_hAl_{1-j-h}O_2$, $LiCo_jNi_hMn_{1-j-h}O_2$, $LiMn_hAl_{2-h}O_4$, and $LiMn_hNi_{2-h}O_4$ are more preferable. In view of high capacity and high output, electrodes containing Ni among the above are more preferable. The g and h are values obtained before charge or discharge is started and increase or decrease by charge or discharge. Specific examples of the material include $LiCoO_2LiNi_{0.85}Co_{0.01}Al_{0.05}O_2$, $LiNi_{0.33}Co_{0.33}Mn_{0.33}O_2$, $LiMn_{1.8}Al_{0.2}O_4$, $LiMn_{1.5}Ni_{0.5}O_4$, and the like.

As transition metals of lithium-containing transition metal phosphate compounds, V, Ti, Cr, Mn, Fe, Co, Ni, Cu, and the like are preferable. Specific examples thereof include iron phosphates such as $LiFePO_4$, $Li_3Fe_2(PO_4)_3$, and $LiFeP_2O_7$, cobalt phosphates such as $LiCoPO_4$, compounds obtained by substituting a portion of transition metal atoms, which are main components of those lithium-containing transition metal phosphate compounds, with other metals such as Al, Ti, V, Cr, Mn, Fe, Co, Li, Ni, Cu, Zn, Mg, Ga, Zr, Nb, and Si, and the like.

The average particle size of the positive-electrode active material is not particularly limited, but it is preferably 0.1 μm to 50 μm. The specific surface area thereof is not particularly limited, but it is preferable for the specific area

measured by a BET method to be 0.01 $m^2/g$ to 50 $m^2/g$. Moreover, pH of a supernatant liquid obtained by dissolving 5 g of the positive-electrode active material in 100 ml of distilled water is preferably from 7 to 12.

In order to make the positive-electrode active material have a predetermined particle size, well known pulverizers or classifiers are used. For example, mortar, a ball mill, a vibrating ball mill, a vibrating mill, a satellite ball mill, a planetary ball mill, a swirling air flow-type jet mill, a sieve, and the like are used. The positive-electrode material obtained by a baking method may be used after being washed with water, an acidic aqueous solution, an alkaline solution, or an organic solvent.

The amount of the positive-electrode active material to be mixed in is not particularly limited. However, provided that the amount of solid content in the dispersion (mixture) forming the electrode mixture is 100% by mass, the amount of the positive-electrode active material is preferably 60% by mass to 98% by mass and more preferably 70% by mass to 95% by mass.

(Negative-electrode active material)

The negative-electrode active material is not particularly limited as long as it enables lithium ions to be reversibly inserted into or released from this material. Examples thereof include carbonaceous materials, metal oxides such as tin oxide or silicon oxide, composite metal oxides, lithium, lithium alloys such as a lithium-aluminum alloy, metals that can form alloys with lithium, such as Sn and Si, and the like. One kind among these materials may be used alone, or two or more kinds thereof may be concurrently used by being combined with each other at any ratio. Among the above, in view of safety, carbonaceous materials or composite lithium oxides are preferably used.

The composite metal oxides are not particularly limited as long as they can store and release lithium. However, in view of the property in which the battery is charged or discharged at a high current density, it is preferable for these oxides to contain silicon, titanium, and/or lithium (for example, lithium titanate) as a constituent component.

The carbonaceous materials used as the negative-electrode active material are materials that are substantially formed of carbon. Examples thereof include petroleum pitch, natural graphite, artificial graphite such as graphite obtained by vapor phase growth, and carbonaceous materials obtained by baking various synthetic resins such as PAN-based resins or furfuryl alcohol resins. The examples also include various carbon fibers such as PAN-based carbon fiber, cellulose-based carbon fiber, pitch-based carbon fiber, carbon fiber obtained by vapor phase growth, dehydrated PVA-based carbon fiber, lignin carbon fiber, glass-like carbon fiber, and active carbon fiber, mesophase microspheres, graphite whiskers, plate-like graphite, and the like.

These carbonaceous materials can be classified into poorly graphitizable carbonaceous material and graphitic carbon materials according to the degree of graphitization. In addition, it is preferable for the carbonaceous materials to have the surface gap, density, and size of crystallite which are disclosed in JP1987-22066A (JP-S62-22066A), JP1990-6856A (JP-H02-6856A), and JP1991-45473A (JP-H03-45473A). The carbonaceous material does not need to be a single material, and it is possible to use the mixture of natural graphite and artificial graphite disclosed in JP1993-90844A (JP-H05-90844A), graphite with a covering layer disclosed in JP1994-4516A(JP-H06-4516A), and the like.

The metal oxides and the composite metal oxides used for the lithium secondary battery may contain at least one kind among the above materials. As the metal oxides and the metal composite oxides, amorphous oxides are particularly preferable, and chalcogenide which is a product of a reaction between a metal element and an element of group 16 of the periodic table is also preferably used. The "amorphous oxides" mentioned herein refer to oxides which have a broad scattering band and a peak in an area of a $2\theta$ angle of 20° to 40° when being subjected to X-ray diffractometry using CuK$\alpha$ rays. These oxides may exhibit diffraction rays of crystalline materials. The highest intensity of the diffraction rays among diffraction rays of crystalline materials that are observed in an area of a $2\theta$ angle of 40° to 70° is preferably not greater than 100-fold and more preferably not greater than 5-fold of the peak intensity of the diffraction rays in the broad scattering band observed in an area of a $2\theta$ angle of 20° to 40°. It is particularly preferable for the oxides to not have the diffraction rays of crystalline materials.

Among a group of compounds including the amorphous crystal oxides and chalcogenide, amorphous oxides of semimetalic elements and chalcogenide are more preferable. Particularly, oxides formed of one kind among elements belonging to groups 13 (IIIB) to 15 (VB), Al, Ga, Si, Sn, Ge, Pb, Sb, and Bi or formed of two or more kinds thereof and chalcogenide are preferable. Specific examples of preferable amorphous oxides and chalcogenide include metal compounds such as $Ga_2O_3$, SiO, GeO, SnO, $SnO_2$, PbO, $PbO_2$, $Pb_2O_3$, $Pb_2O_4$, $Pb_3O_4$, $Sb_2O_3$, $Sb_2O_4$, $Sb_2O_5$, $Bi_2O_3$, $Bi_2O_4$, $SnSiO_3$, GeS, SnS, $SnS_2$, PbS, $PbS_2$, $Sb_2S_3$, $Sb_2S_5$, $SnSiS_3$, and the like. These may form a composite oxide with lithium oxide, such as $Li_2SnO_2$.

The average particle size of the negative-electrode active material used in the nonaqueous electrolyte secondary battery is preferably 0.1 $\mu$m to 60 $\mu$m. In order to yield a predetermined particle size, well known pulverizers or classifiers are used. For example, mortar, a ball mill, a vibrating ball mill, a vibrating mill, a satellite ball mill, a planetary ball mill, a swirling air flow-type jet mill, a sieve, and the like are preferably used. During pulverization, wet pulverization that also

uses water or an organic solvent such as methanol can be optionally performed. It is preferable to perform classification to obtain a desired particle size. The classification method is not particularly limited, and a sieve, a pneumatic classifier, and the like can be optionally used. The classification can be performed either in a dry state or a wet state.

The chemical formula of compounds obtained by the baking method can be calculated by a measurement method such as Inductively Coupled Plasma (ICP) optical emission spectrometry or by a simple method such as a method of finding a difference in the mass of powder before and after baking.

Preferable examples of negative-electrode active materials that can be concurrently used with the amorphous oxide negative-electrode active material containing Sn, Si, or Ge as a main component include carbonaceous materials which can store and release lithium ions or lithium metal, lithium, lithium alloys, and metals which can be form alloys with lithium.

In the present invention, it is also preferable to use lithium titanate, more specifically, lithium/titanium oxide ($Li[Li_{1/3}Ti_{5/3}]O_4$) as the negative-electrode active material.

The amount of the negative-electrode active material mixed in the dispersion (mixture) forming the electrode mixture is not particularly limited. However, the amount is preferably 60% by mass to 98% by mass and more preferably 70% by mass to 95% by mass, based on 100% by mass of the solid content.

(Conductive material)

As the conductive material, any of known conductive materials may be used as long as it is an electron-conductive material that does not cause chemical change in the obtained secondary battery. Generally, one kind of conductive material such as natural graphite (squamous graphite, flaky graphite, earthy graphite, and the like), artificial graphite, carbon black, acetylene black, Ketjen black, carbon fiber, metal powder (copper, nickel, aluminum, silver (disclosed in JP1988-10148,554A (JP-S63-10148,554)),and the like), metal fiber, and polyphenylene derivatives (disclosed in JP1984-20,971A (JP-S59-20,971A) or a mixture of these can be added to the electrode mixture. It is particularly preferable to concurrently use graphite and acetylene black among the above materials. The amount of the conductive material added is preferably 1% by mass to 50% by mass and more preferably 2% by mass to 30% by mass, based on 100% by mass of the solid content. In the case of carbon or graphite, the amount is particularly preferably 2% by mass to 15% by mass.

(Binder)

Examples of the binder include polysaccharides, thermoplastic resins, polymers having rubber elasticity, and the like. Among these, starch, carboxymethylcellulose, cellulose, diacetylcellulose, methylcellulose, hydroxyethylcellulose, hydroxypropylcellulose, sodium alginate, polyacrylic acid, sodium polyacrylate, polyvinylphenol, polyvinyl methyl ether, polyvinyl alcohol, polyvinyl pyrrolidone, polyacrylonitrile, polyacrylamide, polyhydroxy(meth)acrylate, and a water-soluble polymers such as styrene-maleic acid copolymer, polyvinyl chloride, polytetrafluoroethylene, polyvinylidene fluoride, a tetrafluoroethylene-hexafluoropropylene copolymer, a vinylidene fluoride-tetrafluoroethylene-hexafluoropropylene copolymer, polyethylene, polypropylene, ethylene-propylene-diene terpolymer (EPDM), sulfonated EPDM, a polyvinyl acetal resin, methyl methacrylate, (meth)acrylic acid ester-containing (meth)acrylic acid ester copolymer such as 2-ethylhexyl acrylate, a (meth)acrylic acid ester-acrylonitrile copolymer, a vinyl ester-containing polyvinyl ester copolymer such as vinyl acetate, a styrene-butadiene copolymer, an acrylonitrile-butadiene copolymer, polybutadiene, neoprene rubber, fluororubber, polyethylene oxide, a polyester polyurethane resin, a polyether polyurethane resin, a polycarbonate polyurethane resin, a polyester resin, a phenol resin, and an emulsion (latex) or suspension of an epoxy resin or the like are preferable, and polyacrylic acid ester-based latex, carboxymethylcellulose, polytetrafluoroethylene, and polyvinylidene fluoride are more preferable.

One kind of the binder may be used alone, or two or more kinds thereof may be used as a mixture. The smaller the amount of the binder added is, the weaker the holding force and cohesion force of the electrode mixture become. If the amount is too large, volume of the electrode increases, and the capacity per unit volume or unit mass of the electrode decreases. Therefore, in the dispersion (mixture) forming the electrode mixture, the amount of the binder added is preferably 1% by mass to 30% by mass and more preferably 2% by mass to 10 % by mass, based on 100% of the solid content.

(Filler)

The electrode mixture may contain a filler. Any material can be used as a material forming the filler, as long as the material is a fibrous material that does not cause chemical change in the secondary battery. Generally, olefin-based polymers such as polypropylene and polyethylene and fibrous fillers formed of materials such as glass and carbon are used. The amount of the filler added is not particularly limited. However, in the dispersion (mixture) forming the electrode

mixture, the amount is preferably 0% by mass to 30% by mass based on 100% by mass of the solid content.

(Collector)

As the collector of the positive and negative electrodes, electron-conductive materials that do not cause chemical change in the nonaqueous electrolyte secondary battery are used. As the collector of the positive electrode, aluminum, stainless steel, nickel, titanium, and materials obtained by treating the surface of aluminum or stainless steel with carbon, nickel, titanium, or silver are preferable. Among these, aluminum and an aluminum alloy are more preferable.

As the collector of the negative electrode, aluminum, copper, stainless steel, nickel, and titanium are preferable, and aluminum, copper, and a copper alloy are more preferable.

Generally, the collector is used in the form of a film sheet. However, a net-like collector, a punched collector, a lath-like collector, a porous collector, a foamed collector, a molded article of a fiber group, and the like can also be used. The thickness of the collector is not particularly limited, but it is preferably 1 μm to 500 μm. Moreover, it is preferable to perform surface treatment on the collector such that concavities and convexities are formed on the surface.

The electrode mixture of the lithium secondary battery is formed of members that are appropriately selected from the above materials.

(Separator)

The separator usable in the lithium secondary battery is not particularly limited, as long as the separator is a material which has a mechanical strength electrically insulating the positive electrode from the negative electrode and ion permeability and is resistant to oxidation and reduction caused on the contact surface between the positive and negative electrodes. As such a material, porous polymer materials or inorganic materials, organic-inorganic hybrid materials, glass fiber, and the like are used. It is preferable for these separators to have a shutdown function for securing safety, that is, a function of closing gaps at a temperature of 80°C or higher to increase resistance and break current. The closing temperature is preferably from 90°C to 180°C. In view of the strength of the separator, it is particularly preferable to use inorganic materials and separators reinforced with glass fiber.

The shape of holes of the separator is generally circular or oval, and the size thereof is 0.05 μm to 30 μm and preferably 0.1 μm to 20 μm. Moreover, the holes may be rod-like or atypical holes as in a case of making the separator by a stretch method or a phase separation method. The proportion of these gaps in the separator, that is, the porosity is 20% to 90% and preferably 35% to 80%.

The aforementioned polymer materials may be materials using a single material such as cellulose non-woven cloth, polyethylene, or polypropylene, or materials using composite materials consisting of two or more kinds thereof. It is preferable to use a laminate of two or more kinds of fine porous films that differ from each other in terms of the pore size, porosity, closing temperature of the hole, and the like.

As the inorganic materials, oxides such as alumina or silicon dioxide, nitrides such as aluminum nitride or silicon nitride, and sulfates such as barium sulfate or calcium sulfate are used. These materials have the shape of particles or fiber and are used in the form of non-woven cloth, woven cloth, or a thin film such as fine porous film. As the material in the form of a thin film, materials having a pore size of 0.01 μm to 1 μm and a thickness of 5 μm to 50 μm are preferably used. In addition to the single material in the form of a thin film, it is possible to use a separator obtained by forming a composite porous layer, which contains particles of the aforementioned inorganic materials, on the surface of the positive electrode and/or the negative electrode by using a binder made of a resin. For example, alumina particles in which 90% of the particles have a particle size less than 1 μm are formed into a porous layer on both surfaces of the positive electrode by using a fluororesin as a binder.

[Use of lithium secondary battery]

With the lithium secondary battery, a secondary battery having excellent cycle properties can be prepared. Accordingly, the lithium secondary battery is used for various purposes.

The lithium secondary battery is used in various forms without particular limitation. For example, when the battery is mounted on electronic equipment, examples of the equipment include a laptop, a tablet PC, a mobile PC, an electronic book player, a cellular phone, a cordless phone, a pager, a handy terminal, a mobile fax, a mobile copier, a mobile printer, headphone stereo equipment, a video movie camera, a liquid crystal television, a handy cleaner, a portable CD, a minidisc, an electric shaver, a transceiver, an electronic organizer, an electronic calculator, a memory card, a portable tape recorder, a radio, a backup power source, and the like. Examples of equipment for public use include automobiles, electric vehicles, motors, lighting equipment, toys, game consoles, road conditioners, timepieces, stroboscopes, cameras, medical instruments (a pacemaker, a hearing aid, a shoulder massager, and the like), and the like. Moreover, the lithium secondary battery can be used for various purposes in the field of military supplies or aerospace

industry. The lithium secondary battery can also be combined with solar cells.

The metal ions used for transporting charge in the secondary battery are not particularly limited. However, it is preferable to use ions of metals belonging to group 1 or 2 of the periodic table. Among these, it is preferable to use lithium ions, sodium ions, magnesium ions, calcium ions, aluminum ions, and the like. Regarding general technical matters on the secondary battery using lithium ions, various documents or books including the patent documents exemplified in the introduction of this specification can be referred to. Moreover, regarding the secondary battery using sodium ions, Journal of Electrochemical Society; Electrochemical Science and Technology, USA, 1980, Vol. 127, pp 2097-2099 and the like can be referred to. Regarding magnesium ions, Nature 407, pp 724-727 (2000) and the like can be referred to. Regarding calcium ions, J. Electrochem. Soc., Vol. 138, 3536 (1991) and the like can be referred to. In the present invention, it is preferable to apply these metal ions to the lithium secondary battery depending on how widely the metal ions are used. However, desired effects are produced even if metal ions other than the above are used, and the present invention is not limited to the above metal ions.

## Examples

Hereinafter, examples of the present invention will be described. However, the present invention is not limited to the examples.

### Example 1

(Preparation of electrolyte solution)

Non-protonic solvents were mixed as the composition shown in the following Tables 1 and 2, and lithium salts were added thereto. Then cyclic phosphazene compounds shown in the tables were added thereto to prepare electrolyte solutions. Test No. 101 to No. 129 correspond to examples, and C11 to C16 correspond to comparative examples.

(Preparation of 2032 coin battery)

A positive electrode containing lithium cobaltate ($LiCoO_2$) as an active material in an amount of 85% by mass, carbon black as a conductive assistant in an amount of 7.5% by mass, and PVDF as a binder in an amount of 7.5% by mass was prepared. Moreover, a negative electrode containing graphite as an active material in an amount of 85% by mass, carbon black as a conductive assistant in an amount of 7.5% by mass, and PVDF as a binder in an amount of 7.5% by mass was prepared. A separator was made of polypropylene and had a thickness of 24 μm. By using the above positive and negative electrodes, separator, and the respective electrolyte solutions for test, 2032 coin batteries were prepared and evaluated in terms of the following battery properties. The results are described in Tables 1 and 2.

<Flame retardancy>

The batteries were evaluated by the following test system with reference to UL-94HB horizontal burning test. Glass filter paper (ADVANTEC GA-100) was cut in a width of 13 mm and a length of 110 mm, and 1.5 ml of the prepared electrolyte solution was evenly dropped onto the entire glass filter paper. After the electrolyte solution was sufficiently soaked into the glass filter paper, the surplus electrolyte solution was wiped, and the filter paper was suspended horizontally. The filter paper was ignited for 3 seconds by being caused to come into contact with inner flame of a butane gas burner, which was adjusted to have a full flame length of 2 cm. After the filter paper was separated from the flame, the behavior thereof was observed for evaluation.

AA···non-flammable or flame extinction level

B···a combustion inhibition effect is observed, but it is at a level below the non-flammable or flame extinction level.

C···a level at which a combustion inhibition effect is not observed

<Cycle properties>

The coin battery prepared by the above method was charged by a constant current at 1 C in a thermostatic bath at 30°C until the battery voltage became 4.2 V at 2.0 mA. Thereafter, the battery was charged until the value of current became 0.12 mA at a constant voltage of 4.2 V or charged for 2 hours. Then the battery was discharged at a constant current of 1 C until the battery voltage became 2.7 V at 2.0 mA. The above operation was regarded as one

cycle, and this cycle was repeated to count the number of cycles in which the value of discharge capacity becomes not greater than 70% of the value of discharge capacity (mAh) of the first cycle.

<Rate properties>

The 2032 coin battery prepared by the above method was charged by a constant current in a thermostatic bath at 30°C until the battery voltage became 4.2 V at 0.4 mA (0.2 C) and then discharged by a constant current until the battery voltage became 2.75 V at 0.4 mA(0.2 C). This operation was repeated three times. The battery was charged by a constant current of 2 C until the battery voltage became 4.2 V at 0.4 mA and then discharged by a constant current of 2 C until the battery voltage became 2.75 V at 4.0 mA (2 C) to measure the discharge capacity. The ratio of the discharge capacity at the time when the battery is discharged by a constant current of 0.2 C to the discharge capacity at the time when the battery is discharged by a constant current of 2 C was evaluated as Rate properties.

Value of Rate properties (2 C) = (discharge capacity at the time of performing charge and discharge at 0.2 C /discharge capacity at the time of performing charge and discharge at 2 C) $\times$ 100(%)

[Table 1]

| Composition and properties of electrolyte solution in positive electrode containing $LiCoO_2$ and negative electrode containing graphite | | | | | | | | | | | | | |
|---|---|---|---|---|---|---|---|---|---|---|---|---|---|
| No. | Non-protonic solvent *1 | | Lithium salt *4 | Ms in solution *5 | Cyclic phosphazene *2 | | $M_{PN}$ in solution *5 | Additive *3 | | $M_4$ in solution *5 | Solution properties Flame retardancy | Battery properties | |
| | | $M_{3B}/M_{AC}$ | | | | $M_{PN}/MS$ | | | $M_4/Ms$ | | | Cycle properties | Rate properties |
| 101 | EC(1) /DEC (1) | 1 | $LiPF_6$(1) | 90 | 1-4(10) | 0.11 | 10 | - | - | - | AA | 132 | 64 |
| 102 | ↑ | ↑ | ↑ | 60 | 1-4(40) | 0.67 | 40 | - | - | - | AA | 102 | 51 |
| 103 | | ↑ | ↑ | 90 | 1-2(10) | 0.11 | 10 | - | - | - | AA | 121 | 57 |
| 104 | ↑ | ↑ | ↑ | 90 | 1-21(10) | 0.11 | 10 | - | - | - | AA | 115 | 60 |
| 105 | ↑ | ↑ | ↑ | 90 | 1-30(10) | 0.11 | 10 | - | - | - | AA | 120 | 56 |
| 106 | ↑ | ↑ | ↑ | 90 | 2-1(10) | 0.11 | 10 | - | - | - | AA | 109 | 52 |
| 107 | ↑ | ↑ | ↑ | 89.3 | 1-4(9.9) | 0.11 | 9.9 | VC (0.8) | 0.009 | 0.8 | AA | 178 | 72 |
| 108 | ↑ | ↑ | ↑ | 89.3 | 1-4(9.9) | 0.11 | 9.9 | FEC (0.8) | 0.009 | 0.8 | AA | 144 | 67 |
| 109 | ↑ | ↑ | ↑ | 89.3 | 1-4(9.9) | 0.11 | 9.9 | VEC (0.8) | 0.009 | 0.8 | AA | 156 | 70 |
| 110 | EC(1) /EMC (3) | 0.33 | ↑ | 90 | 1-4(10) | 0.11 | 10 | - | - | - | AA | 91 | 52 |
| 111 | EC(1) /EMC (2) | 0.5 | ↑ | 89.3 | 1-4(9.9) | 0.11 | 9.9 | VC (0.8) | 0.009 | 0.8 | AA | 124 | 66 |
| 112 | EC(1) /DEC (3) | 0.33 | ↑ | 90 | 1-4(10) | 0.11 | 10 | - | - | - | AA | 99 | 53 |
| 113 | EC(1) /DMC (3) | 0.33 | ↑ | 90 | 1-4(10) | 0.11 | 10 | - | - | - | AA | 89 | 55 |

(continued)

Composition and properties of electrolyte solution in positive electrode containing $LiCoO_2$ and negative electrode containing graphite

| No. | Non-protonic solvent *1 | | Lithium salt *4 | Ms in solution *5 | Cyclic phosphazene *2 | | $M_{PN}$ in solution *5 | Additive *3 | | $M_4$ in solution *5 | Solution properties Flame retardancy | Battery properties | |
|---|---|---|---|---|---|---|---|---|---|---|---|---|---|
| | | $M_{3B}/M_{AC}$ | | | | $M_{PN}/MS$ | | | $M_4/Ms$ | | | Cycle properties | Rate properties |
| 114 | EC(1) /DEC (1) | 1 | ↑ | 95 | 1-2(2.5)/ 1-3(2.5) | 0.05 | 5 | - | - | - | AA | 140 | 69 |
| 115 | ↑ | ↑ | ↑ | 94.1 | 1-2(2.5)/ 1-3(2.5) | 0.05 | 5 | VC(1) | 0.011 | 1 | AA | 160 | 70 |
| c11 | EC(1) /DEC (1) | 1 | $LiPF_6$(1) | 100 | - | - | - | - | - | - | C | 112 | 75 |
| c12 | EC(1) /DEC (3) | 0.33 | ↑ | 100 | - | - | - | - | - | - | C | 85 | 70 |
| c13 | EC(1) /DEC (1) | 1 | ↑ | 90 | S-1(10) | 0.11 | 10 | - | - | - | B | 75 | 35 |
| c14 | EC(1) /EMC (3) | 0.33 | ↑ | 90 | S-2(10) | 0.11 | 10 | - | - | - | B | 84 | 40 |
| c15 | EC(1) /DEC (1) | 1 | $LiPF_6$(1) | 99.7 | 1-4(0.3) | 0.003 | 0.3 | - | - | - | C | 110 | 74 |

(continued)

Composition and properties of electrolyte solution in positive electrode containing $LiCoO_2$ and negative electrode containing graphite

| No. | Non-protonic solvent *1 | | Lithium salt *4 | Ms in solution *5 | Cyclic phosphazene *2 | | $M_{PN}$ in solution *5 | Additive *3 | | $M_4$ in solution *5 | Solution properties Flame retardancy | Battery properties | |
|---|---|---|---|---|---|---|---|---|---|---|---|---|---|
| | | $M_{3B}/M_{AC}$ | | | | $M_{PN}$/MS | | | $M_4$/Ms | | | Cycle properties | Rate properties |
| c16 | EC(1) /DEC (1) | 1 | $LiPF_6$(1) | 45 | 1-4(55) | 1.22 | 55 | - | | - | AA | 80 | 42 |

*1 Composition of non-protonic solvent (the value in the parenthesis indicates a volume ratio)
*2 Cyclic phosphazene compound (the value in the parenthesis is based on % by mass)
*3 Compound (additive) represented by Formula (4) (the value in the parenthesis is based on % by mass)
*4 Composition of lithium salt (the value in the parenthesis is based on mol/L)
*5 Content (% by mass) of the metal salt (lithium salt)-containing non-protonic solvent (Ms), cyclic phosphazene ($M_{PN}$), or compound represented by Formula (4), based on the total amount of electrolyte solution

[Table 2]

| No. | Non-protonic solvent *1 | | Lithium salt *4 | Ms in solution *5 | Cyclic phosphazene *2 | | $M_{PN}$ in solution *5 | Additive *3 | Solution properties Flame retardancy | Battery properties | |
|---|---|---|---|---|---|---|---|---|---|---|---|
| | | $M_{3B}/M_{AC}$ | | | | $M_{PN}$/MS | | | | Cycle properti es | Rate properti es |
| 116 | EC(1)/EMC(1) /DMC(1) | 0.5 | $LiPF_6$(1) | 90 | 1-1(10) | 0.11 | 10 | - | AA | 112 | 67 |
| 117 | ↑ | ↑ | ↑ | 90 | 1-2(10) | 0.11 | 10 | - | AA | 110 | 52 |
| 118 | ↑ | ↑ | ↑ | 90 | 1-4(10) | 0.11 | 10 | - | AA | 114 | 65 |
| 119 | ↑ | ↑ | ↑ | 90 | 1-36 (10) | 0.11 | 10 | - | AA | 107 | 68 |
| 120 | ↑ | ↑ | ↑ | 90 | 1-38 (10) | 0.11 | 10 | - | AA | 110 | 59 |
| 121 | ↑ | ↑ | ↑ | 90 | 1-39 (10) | 0.11 | 10 | - | AA | 105 | 62 |
| 122 | ↑ | ↑ | ↑ | 90 | 1-40 (10) | 0.11 | 10 | - | AA | 109 | 64 |
| 123 | ↑ | ↑ | ↑ | 90 | 1-42 (10) | 0.11 | 10 | - | AA | 111 | 61 |
| 124 | ↑ | ↑ | ↑ | 90 | 1-50 (10) | 0.11 | 10 | - | AA | 108 | 61 |
| 125 | EC(1)/EMC(3) | 0.33 | $LiPF_6$(1) | 92 | 1-36(5) | 0.05 | 5 | CHB(3) | AA | 95 | 47 |
| 126 | EC(1)/EMC(3) | 0.33 | $LiPF_6$(1) | 92 | 1-1(5) | 0.05 | 5 | AB(3) | AA | 89 | 48 |
| 127 | EC(1)/EMC(3) | 0.33 | $LiPF_6$(1) | 92 | 1-1(5) | 0.05 | 5 | BP(3) | AA | 94 | 45 |
| 128 | EC(40)/EMC (60) | 0.66 | $LiPF_6$(1) | 93 | 1-4(7) | 0.08 | 7 | - | AA | 130 | 68 |
| 129 | EC(38)/EMC (62) | 0.61 | $LiPF_6$(1) | 95 | 1-4(5) | 0.05 | 5 | - | AA | 150 | 73 |

*1 to *5 have the same definition as described above.

(Meaning of abbreviation)

(Non-protonic solvent)

EC: ethylene carbonate
EMC: ethyl methyl carbonate
DEC: diethyl carbonate
DMC: dimethyl carbonate

(Additive)

VC: vinylene carbonate
FEC: fluoroethylene carbonate
VEC: vinyl ethylene carbonate
CHB: cyclohexylbenzene
AB: amylbenzene
BP:biphenyl

[Chem. 23]

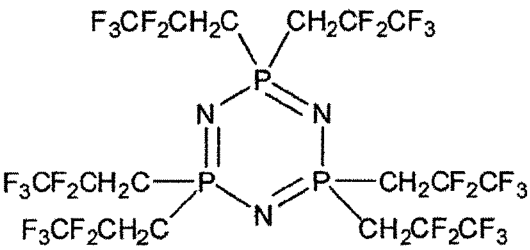

S-1

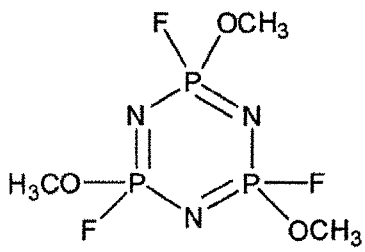

S-2

From the above results, it was found that if the electrolyte solution of the present invention is used, extremely excellent flame retardancy can be realized in a secondary battery, significant deterioration of the cycle properties and Rate properties is inhibited, and the battery give high performance.

Specifically, as seen by the comparison between an example (Test No. 101) and a comparative example (Test No. C11), by the use of the cyclic phosphazene compound of the present invention, the flame retardancy was improved, deterioration of the Rate properties was suppressed to be a small extent, and the cycle properties were markedly improved. On the other hand, in Test Nos. C13 and C14 using cyclic phosphazene S-1 and S-2 for comparison, the flame retardancy was improved, but both the cycle properties and Rate properties significantly deteriorated. The compound S-1 corresponds to Example compound No. 1 disclosed in JP1993-92204A (JP-H05-92204A), and the compound S-2 corresponds to the compound described in Example 1 of JP2005-190873A.

The 20% mass reduction temperature, which was measured by Thermogravimetry-Differential Thermal Analysis (TG-DTA), of an Example compound 1-2 used in Test Nos. 114 and 115 was 79°C. The mass ($M_{110}$) of the compound that was obtained at a 20% mass reduction temperature of 110°C in Thermogravimetry-Differential Thermal Analysis (TG-DTA) was 50% of the total mass ($M_{2A2B}$). The measurement results of Example compound 1-2 are shown in the Fig. 3 attached.

The 20% mass reduction temperature was measured by Thermogravimetry-Differential Thermal Analysis (TG-DTA) under the following conditions.

- Internal atmosphere of measurement chamber: nitrogen (supplied at 200 L/min)
- Rate of temperature increase: 10°C/min
- Measurement start temperature: room temperature (about 25°C)
- Measurement end temperature: 400°C
- Sample pan: aluminum pan
- of measured sample: 4 mg

Example 2

(Preparation of electrolyte solution)

Non-protonic solvents were mixed as the composition shown in the following Table 3, and a lithium salt ($LiBF_4$) was added thereto to yield a concentration of 1 M. The cyclic phosphazene compounds shown in the table were added thereto to prepare nonaqueous electrolyte solutions.

(Preparation of 2032 coin batteries)

A positive electrode containing lithium manganate ($LiMn_2O_4$) as an active material in an amount of 85% by mass, carbon black as a conductive assistant in an amount of 7.0% by mass, and PVDF as a binder in an amount of 8.0% by mass was prepared. Moreover, a negative electrode containing lithium titanate ($Li_4Ti_5O_{12}$) as an active material in an amount of 94% by mass, carbon black as a conductive assistant in an amount of 3% by mass, and PVDF as a binder in an amount of 3% by mass was prepared. A separator was formed of a cellulose film. By using the above positive and negative electrodes, separator, and the respective electrolyte solutions for test, 2032 coin batteries were prepared and evaluated in terms of the following battery properties. The results are shown in Table 3.

<Flame retardancy>

Flame retardancy was evaluated in the same manner as in Example 1.

(Initial discharge capacity)

The coin battery prepared as above was charged by a constant current in a thermostatic bath at 30°C until the battery voltage became 2.75 V at 0.4 mA (0.2 C) and then discharged by a constant current until the battery voltage became 1.25 V at 0.4 mA (0.2 C). This operation was repeated 7 times, and the discharge capacity of the seventh operation was taken as an initial discharge capacity.

< Capacity maintenance ratio -250 cycles>

The coin battery prepared as above was charged by a constant current of 1 C in a thermostatic bath at 30°C until the battery voltage became 2.75 V at 2.0 mA. Thereafter, the battery was charged until the current value became 0.12 mA at a constant voltage of 2.75 V or charged for 2 hours. The battery was then discharged by a constant current of 1 C until the battery voltage became 1.25 V at 2.0 mA. The above operation was regarded as one cycle, and this cycle was repeated 250 times to measure the discharge capacity (mAh) of the $250^{th}$ cycle. The ratio of the discharge capacity of the $250^{th}$ cycle to the discharge capacity of the first cycle was taken as a capacity maintenance ratio.

[Table 3]

| Positive electrode: $LiMn_2O_4$ | Negative electrode: LTO | | Separator: cellulose | | | | | | | | |
|---|---|---|---|---|---|---|---|---|---|---|---|
| No. | Non-protonic solvent *1 | | Lithium salt *4 | Ms in solution *5 | Cyclic phosphazene *2 | | $M_{PN}$ in solution *5 | Additive *3 | Solution properties Flame retardancy | Battery properties | |
| | | $M_{3B}/M_{AC}$ | | | | $M_{PN}/Ms$ | | | | capacity Initial capacity | Retention ratio *6 |
| 201 | GBL | - | $LiBF_4$ (1) | 90 | 1-2(10) | 0.11 | 10 | - | AA | 1.72 | 64 |
| 202 | GBL(6)/EC(4) | 0.67 | $LiBF_4$ (1) | 90 | 1-4(10) | 0.11 | 10 | - | AA | 1.79 | 68 |
| 203 | GBL(6)/EC(2) /PC(2) | 0.67 | $LiBF_4$ (1) | 93 | 1-1(3.5) /1.2 (3.5) | 0.08 | 7 | - | AA | 1.76 | 68 |
| C21 | GBL(6)/EC(2) /PC(2) | 0.67 | $LiBF_4$ (1) | 90 | S-2(10) | 0.11 | 10 | - | B | 1.62 | 55 |
| C22 | GBL(6)/EC(2) /PC(2) | 0.67 | $LiBF_4$ (1) | 100 | - | - | - | - | C | 1.68 | 60 |
| *1 to *5 have the same definition as that of Table 1<br>*6 Capacity maintenance ratio after 250 cycles | | | | | | | | | | | |

Abbreviations not shown in Table 1 are as follows.

- LTO: lithium titanate
- GBL: γ-butyrolactone
- PC: propylene carbonate

Example 3

(Preparation of electrolyte solution)

Non-protonic solvents were mixed as the composition shown in the following Table 4, and a lithium salt ($LiBF_4$) was added thereto to yield a concentration of 1 M. The cyclic phosphazene compound shown in the table was added thereto to prepare nonaqueous electrolyte solutions.

(Preparation of 2032 coin battery)

A positive electrode containing lithium manganate ($LiMn_2O_4$) as an active material in an amount of 85% by mass, carbon black as a conductive assistant in an amount of 7.0% by mass, and PVDF as a binder in an amount of 8.0% by mass was prepared. Moreover, a negative electrode containing graphite (Gr) as an active material in an amount of 85% by mass, carbon black as a conductive assistant in an amount of 7.5% by mass, and PVDF as a binder in an amount of 7.5% by mass was prepared. A separator was made of polypropylene and had a thickness of 24 μm. By using the positive and negative electrodes, separator, and the respective electrolyte solutions for test, 2032 coin batteries were prepared and evaluated in terms of the following properties. The results are shown in Table 4.

<Flame retardancy>

Flame retardancy was evaluated in the same manner as in Example 1.

<Initial battery capacity>

The coin battery prepared as above was charged by a constant current in a thermostatic bath at 30°C until the battery voltage became 4.2 V at 0.4 mA (0.2 C) and then discharged by a constant current until the battery voltage became 3.0 V at 0.4 mA (0.2 C). This operation was repeated 7 times, and the discharge capacity of the seventh operation was taken as an initial battery capacity.

< Capacity maintenance ratio -250 cycles>

The 2032 battery prepared as above was charged by a constant current of 1 C in a thermostatic bath at 30°C until the battery voltage became 4.2 V at 2.0 mA. Thereafter, the battery was charged until the current value became 0.12 mA at a constant voltage of 4.2 V or charged for 2 hours. The battery was then discharged by a constant current of 1 C until the battery voltage became 3.0 V at 2.0 mA. The above operation was regarded as one cycle, and this cycle was repeated 250 times to measure the discharge capacity (mAh) of the 250$^{th}$ cycle. The ratio of the discharge capacity of the 250$^{th}$ cycle to the discharge capacity of the first cycle was taken as a capacity maintenance ratio.

[Table 4]

| Positive electrode: $LiMn_2O_4$ | | | Negative electrode: Gr | | Separator: porous PP film (Cell Guard 2400) | | | | | | |
|---|---|---|---|---|---|---|---|---|---|---|---|
| No. | Non-protonic solvent *1 | | Lithium salt *4 | Ms in solution *5 | Cyclic phosphazene *2 | | $M_{PN}$ in solution *5 | Additive *3 | Solution properties Flame retardancy | Battery properties | |
| | | $M_{3B}/M_{AC}$ | | | | $M_{PN}/Ms$ | | | | Initial capacity | Retention ratio *6 |
| 301 | GBL(6)/EC(4) | 0.67 | $LiBF_4$(1) | 90 | 1-2(10) | 0.11 | 10 | - | AA | 1.77 | 63 |
| 302 | GBL(6)/EC(2) /PC(2) | 0.67 | $LiBF_4$(1) | 90 | 1-2(10) | 0.11 | 10 | - | AA | 1.75 | 62 |
| C31 | GBL(6)/EC(2) /PC(2) | 0.67 | $LiBF_4$(1) | 90 | S-2(10) | 0.11 | 10 | - | B | 1.6 | 54 |
| C32 | GBL(6)/EC(2) /PC(2) | 0.67 | $LiBF_4$(1) | 100 | - | - | - | - | C | 1.65 | 58 |

* 1 to *5 have the same definition as that of Table 1
*6 Capacity maintenance ratio after 250 cycles

Example 4

(Preparation of electrolyte solution)

Non-protonic solvents were mixed as the composition shown in the following Table 5, and a lithium salt ($LiBF_4$) was added thereto to yield a concentration of 1 M. The cyclic phosphazene compound shown in the table was added thereto to prepare nonaqueous electrolyte solutions.

(Preparation of 2032 coin battery)

A positive electrode containing lithium nickel manganese cobalt oxide ($LiNi_{1/3}Mn_{1/3}Co_{1/3}O_2$) as an active material in an amount of 85% by mass, carbon black as a conductive assistant in an amount of 7.5% by mass, and PVDF as a binder in an amount of 7.5% by mass was prepared. Moreover, a negative electrode containing lithium titanate ($Li_4Ti_5O_{12}$) as an active material in an amount of 94% by mass, carbon black as a conductive assistant in an amount of 3% by mass, and PVDF as a binder in an amount of 3% by mass was prepared. A separator was made of a cellulose film. By using the positive and negative electrodes, separator, and the respective electrolyte solutions for test, 2032 coin batteries were prepared and evaluated in terms of the following properties. The results are shown in Table 5.

<Flame retardancy>

Flame retardancy was evaluated in the same manner as in Example 1.

<Initial discharge capacity>

The coin battery prepared as above was charged by a constant current in a thermostatic bath at 30°C until the battery voltage became 2.85 V at 0.4 mA (0.2 C) and then discharged by a constant current until the battery voltage became 1.25 V at 0.4 mA (0.2 C). This operation was repeated 7 times, and the discharge capacity of the seventh operation was taken as an initial discharge capacity.

< Capacity maintenance ratio -250 cycles>

The 2032 battery prepared as above was charged by a constant current of 1 C in a thermostatic bath at 30°C until the battery voltage became 2.85 V at 2.0 mA. Thereafter, the battery was charged until the current value became 0.12 mA at a constant voltage of 2.85 V or charged for 2 hours. The battery was then discharged by a constant current of 1 C until the battery voltage became 1.25 V at 2.0 mA. The above operation was regarded as one cycle, and this cycle was repeated 250 times to measure the discharge capacity (mAh) of the $250^{th}$ cycle. The ratio of the discharge capacity of the $250^{th}$ cycle to the discharge capacity of the first cycle was taken as a capacity maintenance ratio.

[Table 5]

| Positive electrode: $LiNi_{0.33}Mn_{0.33}Co_{0.33}O_2$ | | | Negative electrode: LTO | | | | Separator: cellulose | | | | |
|---|---|---|---|---|---|---|---|---|---|---|---|
| No. | Non-protonic solvent *1 | | Lithium salt *4 | Ms in solution *5 | Cyclic phosphazene *2 | | $M_{PN}$ in solution *5 | Additive *3 | Solution properties Flame retardancy | Battery properties | |
| | | $M_{3B}/M_{AC}$ | | | | $M_{PN}$/MS | | | | Initial capacity | Retention ratio *6 |
| 401 | GBL | - | $LiBF_4$(1) | 90 | 1-2(10) | 0.11 | 10 | - | AA | 1.78 | 68 |
| 402 | GBL(6) /EC(4) | 0.67 | $LiBF_4$(1) | 90 | 1-4(10) | 0.11 | 10 | - | AA | 1.81 | 69 |
| 403 | GBL(6) /EC(2) /PC(2) | 0.67 | $LiBF_4$(1) | 93 | 1-1(3.5)/ 1.2(3.5) | 0.08 | 7 | - | AA | 1.8 | 70 |
| C41 | GBL(6) /EC(2) /PC(2) | 0.67 | $LiBF_4$(1) | 90 | S-2(10) | 0.11 | 10 | - | B | 1.68 | 57 |
| C42 | GBL(6) /EC(2) /PC(2) | 0.67 | $LiBF_4$(1) | 100 | - | - | - | - | C | 1.79 | 59 |

*1 to *5 have the same definition as that of Table 1
*6 Capacity maintenance ratio after 250 cycles

Example 5

(Preparation of electrolyte solution)

Non-protonic solvents were mixed as the composition shown in the following Table 6, and a lithium salt ($LiBF_4$) was added thereto to yield a concentration of 1 M. The cyclic phosphazene compound shown in the table was added thereto to prepare electrolyte solutions.

(Preparation of 2032 coin battery)

A positive electrode containing lithium nickel manganese cobalt oxide ($LiNi_{1/3}Mn_{1/3}Co_{1/3}O_2$) as an active material in an amount of 85% by mass, carbon black as a conductive assistant in an amount of 7.5% by mass, and PVDF as a binder in an amount of 7.5% by mass was prepared. Moreover, a negative electrode containing graphite as an active material in an amount of 85% by mass, carbon black as a conductive assistant in an amount of 7.5% by mass, and PVDF as a binder in an amount of 7.5% by mass was prepared. A separator was made of a polypropylene and had a thickness of 24 $\mu$m. By using the positive and negative electrodes, separator, and the respective electrolyte solutions for test, 2032 coin batteries were prepared and evaluated in terms of the following properties. The results are shown in Table 6 .

<Flame retardancy>

Flame retardancy was evaluated in the same manner as in Example 1.

<Initial discharge capacity>

The coin battery prepared as above was charged by a constant current in a thermostatic bath at 30°C until the battery voltage became 4.30 V at 0.4 mA (0.2 C) and then discharged by a constant current until the battery voltage became 2.75 V at 0.4 mA (0.2 C). This operation was repeated 7 times, and the discharge capacity of the seventh operation was taken as an initial discharge capacity.

< Capacity maintenance ratio -250 cycles>

The 2032 battery prepared as above was charged by a constant current of 1 C in a thermostatic bath at 30°C until the battery voltage became 4.30 V at 2.0 mA. Thereafter, the battery was charged until the current value became 0.12 mA at a constant voltage of 4.30 V or charged for 2 hours. The battery was then discharged by a constant current of 1 C until the battery voltage became 2.75 V at 2.0 mA. The above operation was regarded as one cycle, and this cycle was repeated 250 times to measure the discharge capacity (mAh) of the 250$^{th}$ cycle. The ratio of the discharge capacity of the 250$^{th}$ cycle to the discharge capacity of the first cycle was taken as a capacity maintenance ratio.

[Table 6]

Positive electrode: $LiNi_{0.33}Mn_{0.33}Co_{0.33}O_2$ Negative electrode: Gr Separator: porous PP film (Cell Guard 2400)

| No. | Non-protonic solvent *1 | | Lithium salt *4 | Ms in solution *5 | Cyclic phosphazene *2 | | $M_{PN}$ in solution*5 | Additive *3 | Solution properties Flame retardancy | Battery properties | |
|---|---|---|---|---|---|---|---|---|---|---|---|
| | | $M_{3B}/M_{AC}$ | | | | $M_{PN}$/MS | | | | Initial capacity | Retention ratio *6 |
| 501 | GBL(6) /EC(4) | 0.67 | $LiBF_4$ (1) | 90 | 1-3(10) | 0.11 | 10 | - | AA | 1.75 | 65 |
| 502 | GBL(6) /EC(2) /PC(2) | 0.67 | $LiBF_4$ (1) | 90 | 1-4(10) | 0.11 | 10 | - | AA | 1.77 | 66 |
| C51 | GBL(6) /EC(2) /PC(2) | 0.67 | $LiBF_4$ (1) | 90 | S-1(10) | 0.11 | 10 | - | B | 1.62 | 58 |
| C52 | GBL(6) /EC(2) /PC(2) | 0.67 | $LiBF_4$ (1) | 100 | - | - | - | - | C | 1.75 | 60 |

*1 to *5 have the same definition as that of Table 1
*6 Capacity maintenance ratio after 250 cycles

Example 6

(Preparation of electrolyte solution)

Non-protonic solvents were mixed as the composition shown in the following Table 7, and a lithium salt (LiTFSI: lithium bistrifluoromethanesulfonylimide) was added thereto to yield a concentration of 1 M. The cyclic phosphazene compound shown in the table was added thereto to prepare electrolyte solutions.

(Preparation of 2032 coin battery)

A positive electrode containing lithium nickel manganese cobalt oxide ($LiNi_{1/3}Mn_{1/3}Co_{1/3}O_2$) as an active material in an amount of 85% by mass, carbon black as a conductive assistant in an amount of 7.5% by mass, and PVDF as a binder in an amount of 7.5% by mass was prepared. Moreover, a negative electrode containing graphite as an active material in an amount of 85% by mass, carbon black as a conductive assistant in an amount of 7.5% by mass, and PVDF as a binder in an amount of 7.5% by mass was prepared. A separator was made of a polypropylene and had a thickness of 24 μm. By using the positive and negative electrodes, separator, and the respective electrolyte solutions for test, 2032 coin batteries were prepared and evaluated in terms of the following properties. The results are shown in Table 7.

<Flame retardancy>

Flame retardancy was evaluated in the same manner as in Example 1.

<Initial discharge capacity>

The coin battery prepared as above was charged by a constant current in a thermostatic bath at 30°C until the battery voltage became 4.3 V at 0.4 mA (0.2 C) and then discharged by a constant current until the battery voltage became 2.75 V at 0.4 mA (0.2 C). This operation was repeated 7 times, and the discharge capacity of the seventh operation was taken as an initial discharge capacity.

< Capacity maintenance ratio -250 cycles>

The 2032 battery prepared as above was charged by a constant current of 1 C in a thermostatic bath at 30°C until the battery voltage became 4.3 V at 2.0 mA. Thereafter, the battery was charged until the current value became 0.12 mA at a constant voltage of 4.3 V or charged for 2 hours. The battery was then discharged by a constant current of 1 C until the battery voltage became 2.75 V at 2.0 mA. The above operation was regarded as one cycle, and this cycle was repeated 250 times to measure the discharge capacity (mAh) of the 250$^{th}$ cycle. The ratio of the discharge capacity of the 250$^{th}$ cycle to the discharge capacity of the first cycle was taken as a capacity maintenance ratio.

[Table 7]

| Positive electrode: $LiNi_{0.33}Mn_{0.33}Co_{0.33}O_2$ Negative electrode: Gr Separator: porous PP film (Cell Guard 2400) | | | | | | | | | | | |
|---|---|---|---|---|---|---|---|---|---|---|---|
| No. | Non-protonic solvent *1 | | Lithium salt *4 | Ms in solution *5 | Cyclic phosphazene *2 | | $M_{PN}$ in solution *5 | Additive *3 | Solution properties Flame retardancy | Battery properties | |
| | | $M_{3B}/M_{AC}$ | | | | $M_{PN}/Ms$ | | | | Initial capacity | Retention ratio *6 |
| 601 | EC(1) /EMC(2) | 0.5 | LiTFSI(1) | 93 | 1-4(7) | 0.08 | 7 | - | AA | 1.7 | 58 |
| 602 | EC(1) /DEC(1) | 1 | LiTFSI(1) | 90 | 1-8(10) | 0.11 | 10 | - | AA | 1.65 | 55 |
| C61 | EC(1) /EMC(2) | 0.5 | LiTFSI(1) | 90 | S-1(10) | 0.11 | 10 | - | B | 1.56 | 46 |
| C62 | EC(1) /EMC(2) | 0.5 | LiTFSI(1) | 100 | - | - | - | - | C | 1.71 | 51 |

*1 to *5 have the same definition as that of Table 1
*6 Capacity maintenance ratio after 250 cycles
*LiTFSI: lithium bistrifluoromethanesulfonylimide

Example 7

(Preparation of electrolyte solution)

Non-protonic solvents were mixed as the composition shown in the following Table 8, and a lithium salt ($LiPF_6$) was added thereto to yield a concentration of 1 M. The cyclic phosphazene compound shown in the table was added thereto to prepare nonaqueous electrolyte solutions.

(Preparation of 2032 coin battery)

A positive electrode containing lithium nickel manganese cobalt oxide ($LiNi_{1/3}Mn_{1/3}Al_{1/3}O_2$) as an active material in an amount of 85% by mass, carbon black as a conductive assistant in an amount of 7.5% by mass, and PVDF as a binder in an amount of 7.5% by mass was prepared. Moreover, a negative electrode containing graphite as an active material in an amount of 85% by mass, carbon black as a conductive assistant in an amount of 7.5% by mass, and PVDF as a binder in an amount of 7.5% by mass was prepared. A separator was made of a polypropylene and had a thickness of 24 $\mu$m. By using the positive and negative electrodes, separator, and the respective electrolyte solutions for test, 2032 coin batteries were prepared and evaluated in terms of the following properties. The results are shown in Table 8.

<Flame retardancy>

Flame retardancy was evaluated in the same manner as in Example 1.

<Initial discharge capacity>

The coin battery prepared as above was charged by a constant current in a thermostatic bath at 30°C until the battery voltage became 4.2 V at 0.4 mA (0.2 C) and then discharged by a constant current until the battery voltage became 2.75 V at 0.4 mA (0.2 C). This operation was repeated 7 times, and the discharge capacity of the seventh operation was taken as an initial discharge capacity.

<Capacity maintenance ratio -250 cycles>

The 2032 battery prepared as above was charged by a constant current of 1 C in a thermostatic bath at 30°C until the battery voltage became 4.2 V at 2.0 mA. Thereafter, the battery was charged until the current value became 0.12 mA at a constant voltage of 4.2 V or charged for 2 hours. The battery was then discharged by a constant current of 1 C until the battery voltage became 2.75 V at 2.0 mA. The above operation was regarded as one cycle, and this cycle was repeated 250 times to measure the discharge capacity (mAh) of the $250^{th}$ cycle. The ratio of the discharge capacity of the $250^{th}$ cycle to the discharge capacity of the first cycle was taken as a capacity maintenance ratio.

[Table 8]

Positive electrode: $LiNi_{0.33}Mn_{0.33}Al_{0.33}O_2$ Negative electrode: Gr Separator: porous PP film (Cell Guard 2400)

| No. | Non-protonic solvent *1 | | Lithium salt *4 | Ms in solution *5 | Cyclic phosphazene *2 | | $M_{PN}$ in solution *5 | Additive *3 | Solution properties Flame retardancy | Battery properties | |
|---|---|---|---|---|---|---|---|---|---|---|---|
| | | $M_{3B}/M_{AC}$ | | | | $M_{PN}/Ms$ | | | | Initial capacity | Retention ratio *6 |
| 701 | EC(1)/DMC (1)/EMC(1) | 0.5 | $LiPF_6$ | 93 | 1-1(7) | 0.08 | 7 | - | AA | 1.7 | 61 |
| 702 | EC(1)/DMC (1)/EMC(1) | 0.5 | $LiPF_6$ | 93 | 1-4(7) | 0.08 | 7 | - | AA | 1.71 | 60 |
| C71 | EC(1)/DMC (1)/EMC(1) | 0.5 | $LiPF_6$ | 93 | S-1(7) | 0.08 | 7 | - | B | 1.55 | 51 |
| C72 | EC(1)/DMC (1)/EMC(1) | 0.5 | $LiPF_6$ | 100 | - | - | - | - | C | 1.72 | 55 |

*1 to *5 have the same definition as that of Table 1
*6 Capacity maintenance ratio after 250 cycles

From the above results, it was found that if the cyclic phosphazene compound of the present invention is added to the nonaqueous electrolyte solution of the present invention, the electrolyte solution can obtain flame retardancy, and a sufficient degree of safety is demonstrated. Moreover, the capacity maintenance ratio thereof was more sufficient compared to the capacity maintenance ratio of the electrolyte solution not containing the cyclic phosphazene compound, and the initial capacity can be improved. Specifically, in examples according to the present invention, the capacity maintenance ratio of those nonaqueous electrolyte solutions was further improved compared to the electrolyte solutions (C11), (C12), (C22), (C32), (C42), (C52), (C62), and (C72) not using the cyclic phosphazene compound. The improvement was at a level that can be sufficiently recognized in the practical use, and the capasity maintenance ratio was improved without significantly reducing the initial capacity. It was also found that the capasity maintenance ratio is improved without reducing the initial capacity, compared to a case of the conventional technique in which an alkoxy group or a fluorine-containing phosphazene compound is added to the electrolyte solution. That is, these results show that the recent lithium ion battery, which has high performance but has limitation on further improvement, can achieve significant improvement in its performance.

Example 8

(Preparation of electrolyte solution)

Non-protonic solvents were mixed as the composition shown in the following Table 9, and a lithium salt was added thereto. The cyclic phosphazene compound shown in the table was added thereto to prepare electrolyte solutions. Test Nos. 801 to 808 correspond to examples, and Test No. C81 correspond to a Comparative example.

(Preparation of 2032 coin battery)

A positive electrode containing lithium nickel manganese cobalt oxide ($LiNi_{1/3}Mn_{1/3}Co_{1/3}O_2$) as an active material in an amount of 85% by mass, carbon black as a conductive assistant in an amount of 7.5% by mass, and PVDF as a binder in an amount of 7.5% by mass was prepared. Moreover, a negative electrode containing artificial graphite as an active material in an amount of 85% by mass, carbon black as a conductive assistant in an amount of 7.5% by mass, and PVDF as a binder in an amount of 7.5% by mass was prepared. A separator was made of a polypropylene and had a thickness of 24 μm. By using the positive and negative electrodes, separator, and the respective electrolyte solutions for test, 2032 coin batteries were prepared and evaluated in terms of the following battery properties. The results are shown in Table 9.

<Flame retardancy>

Flame retardancy was evaluated in the same manner as in Example 1.

<Initial discharge capacity>

The coin battery prepared as above was charged by a constant current in a thermostatic bath at 30°C until the battery voltage became 4.3 V at 0.4 mA (0.2 C) and then discharged by a constant current until the battery voltage became 2.75 V at 0.4 mA (0.2 C). This operation was repeated 7 times, and the discharge capacity of the seventh operation was taken as an initial discharge capacity.

<Float charge test for one month>

The coin battery prepared as above was charged by a constant current of 1 C in a thermostatic bath at 30°C until the battery voltage became 4.3 V at 2.0 mA. Thereafter, the battery was charged for one month at a constant voltage of 4.3 V and then discharged by a constant current of 0.2 C until the battery voltage became 2.75 V at 0.4 mA to measure the discharge capacity (mAh) thereof. The ratio of the discharge capacity measured after one month to the initial discharge capacity was taken as a capasity maintenance ratio.

[Table 9]

| No. | Non-protonic solvent *1 | | Lithium salt *4 | Ms in solution *5 | Cyclic phosphazene *2 | | $M_{PN}$ in solution *5 | Additive *3 | | $M_4$ in solution *5 | Battery properties Float |
|---|---|---|---|---|---|---|---|---|---|---|---|
| | | $M_{3B}/M_{AC}$ | | | | $M_{PN}/Ms$ | | | $M_4/Ms$ | | |
| 801 | EC(1)/EMC(2) | 0.5 | $LiPF_6$(1) | 94 | 1-1(5) | 0.05 | 5 | VC(1) | 0.01 | 1 | 91 |
| 802 | EC(1)/EMC(2) | 0.5 | $LiPF_6$(1) | 98 | 1-1(1) | 0.01 | 1 | VC(1) | 0.01 | 1 | 95 |
| 803 | EC(1)/EMC(2) | 0.5 | $LiPF_6$(1) | 94 | 1-2(5) | 0.05 | 5 | VC(1) | 0.01 | 1 | 84 |
| 804 | EC(1)/EMC(2) | 0.5 | $LiPF_6$(1) | 98 | 1-2(1) | 0.01 | 1 | VC(1) | 0.01 | 1 | 91 |
| 805 | EC(1)/EMC(2) | 0.5 | $LiPF_6$(1) | 94 | 1-4(5) | 0.05 | 5 | VC(1) | 0.01 | 1 | 92 |
| 806 | EC(1)/EMC(2) | 0.5 | $LiPF_6$(1) | 98 | 1-4(1) | 0.01 | 1 | VC(1) | 0.01 | 1 | 95 |
| 807 | EC(1)/EMC(2) | 0.5 | $LiPF_6$(1) | 94 | 1-40(5) | 0.05 | 5 | VC(1) | 0.01 | 1 | 87 |
| 808 | EC(1)/EMC(2) | 0.5 | $LiPF_6$(1) | 98 | 1-40(1) | 0.01 | 1 | VC(1) | 0.01 | 1 | 94 |
| C81 | EC(1)/EMC(2) | 0.5 | $LiPF_6$(1) | 99 | - | - | - | VC(1) | 0.01 | 1 | 82 |

*1 to *5 have the same definition as described above.

Example 9

Non-protonic solvents were mixed as the composition shown in the following Table 10, and a lithium salt was added thereto. The cyclic phosphazene compound shown in the table was added thereto to prepare electrolyte solutions. Test Nos. 901 to 908 correspond to examples, and Test No. C91 correspond to a comparative example.

(Preparation of laminate battery)

200 g of lithium nickel manganese cobalt oxide ($LiNi_{1/3}Mn_{1/3}Co_{1/3}O_2$) as a positive-electrode active material was mixed with 5 g of acetylene black by a homogenizer, and then the resultant was mixed with 5 g of polyvinylidene fluoride as a binder. Moreover, 500 ml of N-methyl-2-pyrrolidone was added thereto, followed by kneading and mixing, thereby preparing paste of a positive electrode mixture. Meanwhile, 500 ml of N-methyl-2-pyrrolidone was added to 200 g of graphite and 5 g of polyvinylidene fluoride as a binder, followed by kneading and mixing, thereby preparing paste of a negative electrode mixture. The paste of a positive electrode mixture prepared as above was coated onto both surfaces of an aluminum foil collector having a thickness of 20 μm by using a blade coater, and the resultant was dried at 150°C. Thereafter, the resultant was subjected to compression molding by using a roller pressing machine and cut in a size of 95 mm × 95 mm to prepare a positive electrode sheet. The positive electrode sheet was sufficiently dehydrated and dried in a dry box (dry air having a dew point of -50°C or lower) by using a far-infrared heater. Similarly, the paste of a negative electrode mixture was coated onto both surfaces of a copper foil collector having a thickness of 20 μm, and the resultant was dried at 150°C. Thereafter, the resultant was subjected to compression molding by using a roller pressing machine and cut in a size of 100 mm × 100 mm to prepare a negative electrode sheet. The negative electrode sheet was sufficiently dehydrated and dried in a dry box (dry air having a dew point of -50°C or lower) by using a far-infrared heater. The prepared positive electrode sheets (9 sheets; among these, 2 sheets at both sides were coated with the paste on one surface) and the prepared negative electrode sheets (8 sheets) were alternately laminated on each other while interposing a separator therebetween, and a tab lead was welded on the resultant, thereby preparing a laminate. A thermally adhesive aluminum laminate film was used as an exterior material of the battery, and the laminate prepared as above and the respective electrolyte solutions for test were used to prepare a laminate battery.

<Initial discharge capacity>

The laminate battery prepared as above was charged by a constant current in a thermostatic bath at 30°C until the battery voltage became 4.30 V at 0.6 A and then discharged by a constant current until the battery voltage became 2.75 V at 0.6 A. This operation was repeated five times, and the discharge capacity of the fifth operation was taken as an initial discharge capacity. Batteries having the initial discharge capacity of 2.8 Ah to 2.9 Ah were subjected to overcharge evaluation.

<Overcharge evaluation>

The laminate battery that had been evaluated in terms of the initial discharge capacity was charged by a constant current of 1 A in a thermostatic bath at 30°C until the battery voltage became 4.25 V and then charged for 2 hours at constant voltage. Thereafter, an overcharge test was conducted until the battery was charged up to a current of 3 A and a voltage of 30 V, and the battery temperature and combustion state (visually observed) were evaluated.
A···flame extinction occurred immediately after (1 to 2 seconds after) ignition.
B···flame extinction occurred within 30 seconds after ignition.
C···flame extinction occurred within 1 minute after ignition.

[Table 10]

| No. | Non-protonic solvent *1 | | Lithium salt *4 | Ms in solution *5 | Cyclic phosphazene *2 | | $M_{PN}$ in solution *5 | Additive *3 | | $M_4$ in solution *5 | Overcharge evaluation | |
|---|---|---|---|---|---|---|---|---|---|---|---|---|
| | | $M_{3B}/M_{AC}$ | | | | $M_{PN}/Ms$ | | | $M_4/Ms$ | | Battery temperature | Combustion state |
| 901 | EC(1)/EMC (2) | 0.5 | $LiPF_6$(1) | 90 | 1-4(10) | 0.11 | 10 | - | - | - | 240°C | A |
| 902 | EC(1)/EMC (2) | 0.5 | $LiPF_6$(1) | 93 | 1-4(7) | 0.08 | 7 | - | - | - | 240°C | A |
| 903 | EC(1)/EMC (2) | 0.5 | $LiPF_6$(1) | 95 | 1-4(5) | 0.05 | 5 | - | - | - | 260°C | A |
| 904 | EC(1)/EMC (2) | 0.5 | $LiPF_6$(1) | 98 | 1-4(2) | 0.02 | 2 | - | - | - | 300°C | B |
| 905 | EC(1)/EMC (2) | 0.5 | $LiPF_6$(1) | 99.5 | 1-4 (0.5) | 0.005 | 0.5 | - | - | - | 325°C | B |
| 906 | EC(1)/EMC (3) | 0.33 | $LiPF_6$(1) | 93 | 1-4(5) | 0.05 | 5 | BP (2) | 0.02 | 2 | 245°C | A |
| 907 | EC(1)/EMC (3) | 0.33 | $LiPF_6$(1) | 93 | 1-63(7) | 0.08 | 7 | - | - | - | 250°C | A |
| 908 | EC(1)/EMC (3) | 0.33 | $LiPF_6$(1) | 93 | 1-73(7) | 0.08 | 7 | - | - | - | 235°C | A |
| C91 | EC(1)/EMC (2) | 0.5 | $LiPF_6$(1) | 100 | - | - | - | - | - | - | 340°C | C |

*1 to *5 have the same definition as described above.

(Experimental example A)

Synthesis of hexafluorocyclotriphosphazene

A thermometer, a rotor, and a reflux condenser were mounted on a 500 mL three-neck flask, and a nitrogen atmosphere was created inside the flask. 260.9 g (0.75 mol) of hexachlorocyclotriphosphazene, 282.8 g (6.75 mol) of sodium fluoride, and 750 ml of dehydrated acetonitrile were put into the flask and heated to 75°C in an oil bath. After being reacted for 5 hours, the resultant was cooled and distilled by using a Vigreux column, thereby obtaining 175 g of a product (boiling point: 51°C). The product was checked by 19F NMR

Synthesis example of (1-36) (Example A-1)···[Condition1B]

A thermometer, a rotor, a reflux condenser, and a dripping funnel were mounted on a 200 mL of three-neck flask, and a nitrogen atmosphere was created inside the flask. 4.97 g (0.02 mol) of hexafluorocyclotriphosphazene and 30 ml of dehydrated tert-butylmethylether were put into the flask and cooled to 0°C in an ice bath. 2.36 g (0.04 mol) of N-ethylmethylamine and 10 ml of dehydrated tert-butylmethylether were put into the dripping funnel and added dropwise over an hour to the solution that had been cooled to 0°C. After being stirred for 3 hours, the resultant was stirred for 4 hours at room temperature and then stirred for one more hour at 50°C in an oil bath. The precipitated solids were filtered, and the filtrate was distilled, thereby obtaining 1.8 g of a target product (1-36) [boiling point: 50°C (8.5 mmHg)] at a yield of 31%.
1H NMR (ppm) 1.12-1.21 (m,3H), 2.72-2.80 (m,3H), 3.10-3.23 (m,2H)
19F NMR (ppm) --71.5-66.7 (m 4F), --58.5-55.9 (d 1F)

Synthesis example of (1-37) (ExampleA-2)···[Condition 1B]

1.6 g of a target product (1-37) [boiling point: 51°C (18 mmHg)] was obtained at a yield of 26% in the same manner as in Example A-1, except that N-ethylmethylamine of Example A-1 was changed to N-methyl-n-propylamine.
1H NMR (ppm) 0.89-0.96 (m,3H), 1.51-1.67 (m,2H), 2.70-2.76 (m,3H), 3.00-3.13 (m,2H)
19F NMR (ppm) --71.5-66.8 (m 4F), --59.1-56.0 (d 1F)

Synthesis example of (1-40) (Example A-3)···[Condition 1B]

A thermometer, a rotor, a dripping funnel, and a reflux condenser were mounted on a 200 mL three-neck flask, and a nitrogen atmosphere was created inside the flask. 6.95 g (0.02 mol) of hexachlorocyclotriphosphazene and 40 ml of dehydrated tert-butylmethylether were put into the flask and cooled to 0°C in an ice bath. 2.57 g (0.04 mol) of N-isopropylmethylamine and 10 ml of dehydrated tert-butylmethylether were put into the dripping funnel and added dropwise over an hour to the solution that had been cooled to 0°C. The resultant was stirred for 3 hours, the temperature thereof was then returned to room temperature, and the resultant was subjected to reflux for 4 hours in an oil bath. The precipitated solids were filtered, and the filtrate was concentrated by using an evaporator.

A thermometer, a rotor, a dripping funnel, and a reflux condenser were mounted on a 200 mL three-neck flask, and a nitrogen atmosphere was created inside the flask. 7 g (0.12 mol) of spray-dried potassium fluoride and 40 ml of anhydrous acetonitrile were put into the flask and heated to 70°C in an oil bath. The concentrate of the filtrate obtained as above and 10 ml of acetonitrile were put into the dripping funnel and added dropwise over an hour to the resultant. The resultant was stirred for 5 hours at 70°C and then cooled to room temperature. The precipitated solids were filtered, and the filtrate was distilled, thereby obtaining 0.9 g of a target product (1-40) [boiling point:46°C (8 mmHg)] at a yield of 15%.
1H NMR (ppm) 1.14-1.21 (m,6H), 2.62-2.78 (m,3H), 3.89-4.92 (m,1H)
19F NMR (ppm) --71.5-66.8 (m 4F), --59.3-55.4 (d 1F)

Synthesis example of (1-51) (Example A-4)···[Condition 1A]

A thermometer, a rotor, a dripping funnel, and a reflux condenser were mounted on a 200 mL three-neck flask, and a nitrogen atmosphere was created inside the flask. 10.43 g (0.03 mol) of hexachlorocyclotriphosphazene and 70 ml of dehydrated tert-butylmethylether were put into the flask and cooled to 0°C in an ice bath. 5.23 g (0.06 mol) of N-ethyl-n-propylamine and 10 ml of dehydrated tert-butylmethylether were put into the dripping funnel and added dropwise over an hour to the solution that had been cooled to 0°C. The resultant was stirred for 3 hours, the temperature thereof was then returned to room temperature, and the resultant was subjected to reflux for 4 hours in an oil bath. The precipitated solids were filtered, and the filtrate was concentrated by using an evaporator.

A thermometer, a rotor, a dripping funnel, and a reflux condenser were mounted on a 200 mL three-neck flask, and a nitrogen atmosphere was created inside the flask. 10.5 g (0.18 mol) of spray-dried potassium fluoride and 70 ml of anhydrous acetonitrile were put into the flask and heated to 70°C in an oil bath. The concentrate of the filtrate obtained as above and 10 ml of acetonitrile were put into the dripping funnel and added dropwise over an hour to the resultant. The resultant was stirred for 5 hours at 70°C and then cooled to room temperature. The precipitated solids were filtered, and the filtrate was distilled, thereby obtaining 1.2 g of a target product (1-51) [boiling point:52°C (6 mmHg)] at a yield of 13%.
1H NMR (ppm) 1.14-1.21 (m,6H), 2.62-2.78 (m,3H), 3.89-4.92 (m,1H)
19F NMR (ppm) --71.5-66.8 (m 4F), --59.3-55.4 (d 1F)

Synthesis example of (1-55) (Example A-5)···[Condition 1C]

A thermometer, a rotor, a dripping funnel, and a reflux condenser were mounted on a 200 mL three-neck flask, and a nitrogen atmosphere was created inside the flask. 4.97 g (0.02 mol) of hexafluorocyclotriphosphazene and 40 ml of dehydrated tert-butylmethylether were put into the flask and cooled to 0°C in an ice bath. 5.17 g (0.04 mol) of di-n-butylamine and 10 ml of dehydrated tert-butylmethylether were put into the dripping funnel and added dropwise over an hour to the solution that had been cooled to 0°C. After being stirred for 3 hours, the resultant was stirred for 4 hours at room temperature and stirred one more hour at 50°C in an oil bath. The precipitated solids were filtered, and the filtrate was distilled, thereby obtaining 0.5 g of target product (1-55) [boiling point: 120°C (0.5 mmHg)] at a yield of 7%.
1H NMR (ppm) 0.86-0.97 (m,3H), 1.24-1.42 (m,2H), 1.45-1.61 (m,2H), 3.01-3.12 (m,2H)
19F NMR (ppm) --71.5-66.8 (m 4F), --56-53 (d 1F)

Synthesis example of (1-56) (Example A-6)

A compound (1-56) was synthesized in the same manner as in Example A-1, except that the amount of N-ethylmethylamine added in Example A-1 was changed to 4.72 g (0.08 mol).

Synthesis example of (1-57) (Example A-7)

A compound (1-57) was synthesized in the same manner as in Example A-1, except that the amount of N-ethylmethylamine added in Example A-1 was changed to 7.08 g (0.12 mol).

Synthesis example of compound (1-4) (Example A-8)

A rotor, a ball cock, a cooling tube, and a dripping funnel were mounted on a 2 L three-neck flask, and a nitrogen atmosphere was created inside the flask. 124.5 g (0.5 mol) of hexafluorocyclotriphosphazene and 750 ml of dehydrated tert-butylmethylether were put into the flask and cooled to 0°C in an ice bath. 73.1 g (1 mol) of diethylamine and 250 ml of dehydrated tert-butylmethylether were put into the dripping funnel and added dropwise over an hour to the solution that had been cooled to 0°C. After being stirred for 3 hours, the resultant was stirred for an hour at room temperature and stirred again for 3 hours at 50°C in an oil bath. The precipitated solids were filtered, and the filtrate was distilled, thereby obtaining a target product (1-4) [boiling point: 52°C (10 mmHg)].
1H NMR (ppm) 1.11-1.19 (t,9H), 3.10-3.27 (m,4H)
19F NMR (ppm) --71.5-74 (m 4F), --56-53 (d 1F)

The compounds (compounds 1-37, 1-51, 1-56, and 1-57) that were newly synthesized in Example A were tested in the same manner as in Example 1. As a result, it was confirmed that these compounds also yield excellent results (in regard to flame retardancy, cycle properties, and Rate properties) (that is, these compounds are also useful).

## Claims

**1.** A nonaqueous electrolyte solution for a secondary battery comprising:

metal salts that include lithium ions; and
a cyclic compound that is represented by the following Formula (1), in a non-protonic solvent,
wherein the non-protonic solvent is a solvent containing at least one kind of carboxylic acid ester compound and carbonic acid ester compound, and a ratio ($M_{PN}$/Ms) between a mass (Ms) of the non-protonic solvent containing the metal salts and a mass ($M_{PN}$) of the cyclic compound is 0.005 to 1:

[Chem. 1]

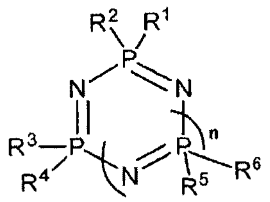

(1)

in the formula,

$R^1$ to $R^6$ represent alkyl groups, aryl groups, alkoxy groups, aryloxy groups, alkylthio groups, arylthio groups, $-NR^AR^B$, $-N=R^C$, an azide group or halogen atoms, at least one of $R^1$ to $R^6$ is $-NR^AR^B$, $-N=R^C$, or an azide group, and at least one of other groups $R^1$ to $R^6$ is halogen atom;
n represents an an integer of 1 to 2, when n is 2, plural $R^5$s and $R^6$s may be the same as or different from each other;
$R^A$ and $R^B$ are hydrogen atoms, alkyl groups, alkenyl groups, alkynyl groups, aryl groups, heterocyclic groups, cyano groups, silyl groups, or substituents represented by the following Formula (1A), (1B), (1C), or (1D);
$R^C$ represents a substituent represented by one of the following Formulae (C1) to (C6);

[Chem. 2]

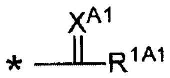
(1A)

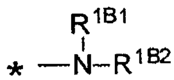
(1B)

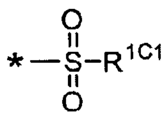
(1C)

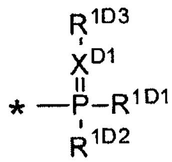
(1D)

in the formulae,

$R^{1A1}$, $R^{1C1}$, $R^{1D1}$, and $R^{1D2}$ represent alkyl groups, alkoxy groups, aryl groups, aryloxy groups, halogen atoms, or amino groups;
$X^{A1}$ represents an oxygen atom or a sulfur atom;
$X^{D1}$ represents an oxygen atom, a sulfur atom, or a nitrogen atom, and when $X^{D1}$ represents an oxygen atom or a sulfur atom, there is no $R^{1D3}$, when $X^{D1}$ is a nitrogen atom, $R^{1D3}$ represents an alkyl group, an aryl group, a silyl group, or a phosphonyl group;
$R^{1B1}$ and $R^{1B2}$ represent alkyl groups, aryl groups, alkoxycarbonyl groups, aryloxycarbonyl groups, alkylsulfonyl groups, arylsulfonyl groups, phosphonyl groups, or silyl groups, * represents a direct bond; and

[Chem. 3]

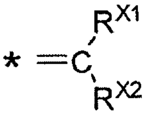
(C1)

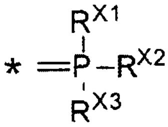
(C2)

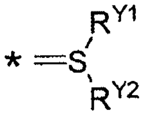
(C3)

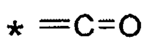
(C4)

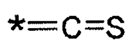
(C5)

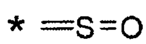
(C6)

in the formulae, $R^{X1}$, $R^{X2}$, and $R^{X3}$ represent alkyl groups, aryl groups, alkoxy groups, aryloxy groups, alkylthio groups, arylthio groups, heterocyclic groups, halogen atoms, or silyl groups;
$R^{Y1}$ and $R^{Y2}$ represent halogen atoms;
* represents a direct bond.

**2.** The nonaqueous electrolyte solution for a secondary battery according to Claim 1,

wherein the non-protonic solvent contains at least one of carbonic acid ester compounds represented by the following Formulae (3A) and (3B) and a carboxylic acid ester compound represented by the following Formula (3C),

[Chem. 4]

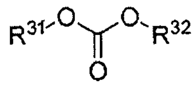
(3A)

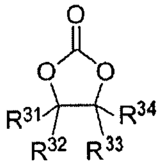
(3B)

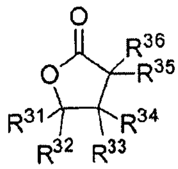
(3C)

in the formulae,

$R^{31}$ to $R^{34}$ represent hydrogen atoms, alkyl groups (excluding halogen), and aryl groups (excluding halogen) $R^{35}$ and $R^{36}$ represent hydrogen atoms, alkyl groups that may be substituted with fluorine, alkyl groups having an ether chain, or aryl groups that may be substituted with fluorine.

**3.** The nonaqueous electrolyte solution for a secondary battery according to Claim 1 or 2, further comprising at least one of the compounds represented by the following Formulae (4A), (4B), (4C), and (4D),
wherein a ratio ($M_4$/Ms) between a mass (Ms) of the non-protonic solvent containing metal salts and a total mass ($M_4$) of the compound represented by the Formula (4A), (4B), (4C), or (4D) is 0.001 to 0.25:

[Chem. 5]

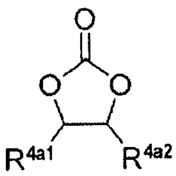
(4A)

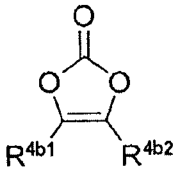
(4B)

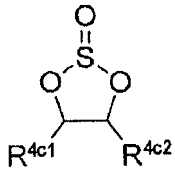
(4C)

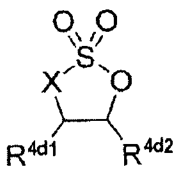
(4D)

in the formulae,

$R^{4a1}$ and $R^{4a2}$ represent hydrogen atoms, halogen, fluorine-substituted alkyl groups, fluorine-substituted aryl groups, or vinyl groups, and at least one of $R^{4a1}$ and $R^{4a2}$ represents halogen, a fluorine-substituted alkyl group, a fluorine-substituted aryl group, or a vinyl group;
$R^{4b1}$ and $R^{4b2}$ represent hydrogen atoms, alkyl groups, or aryl groups, $R^{4c1}$, $R^{4c2}$, $R^{4d1}$, and $R^{4d2}$ represent hydrogen atoms, fluorine-substituted alkyl groups, fluorine-substituted aryl groups, or vinyl groups;
X represents a methylene group or oxygen atom.

**4.** The nonaqueous electrolyte solution for a secondary battery according to Claim 2 or 3,
wherein the non-protonic solvent contains at least one of a compound represented by Formula (3A) and a compound represented by Formula (3C) as well as a compound represented by Formula (3B), and a ratio ($M_{3B}/M_{AC}$) between a volume ($M_{3B}$) of the compound represented by Formula (3B) and a total volume ($M_{AC}$) of the compound represented by Formula (3A) and the compound represented by Formula (3C) is 0.2 to 5.

**5.** The nonaqueous electrolyte solution for a secondary battery according to any one of Claims 1 to 4, further comprising an aromatic compound as an overcharge inhibitor.

**6.** The nonaqueous electrolyte solution for a secondary battery according to any one of Claims 1 to 5,
wherein the cyclic compound is a compound represented by the following Formula (2A) or (2B):

[Chem. 6]

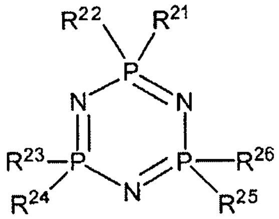

(2A)

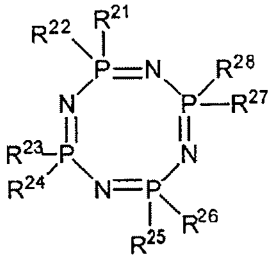

(2B)

in the formulae, $R^{21}$ to $R^{28}$ have the same definition as that of $R^1$ to $R^6$ of Formula (1).

**7.** The nonaqueous electrolyte solution for a secondary battery according to Claim 6, further comprising two or more kinds of the compound represented by Formula (2A) or (2B),
wherein a 20% mass reduction temperature of at least one kind of the above compound that is measured by Thermogravimetry-Differential Thermal Analysis (TG-DTA) is 110°C or lower.

**8.** The nonaqueous electrolyte solution for a secondary battery according to Claim 7,
wherein a mass ($M_{110}$) of the compound having the 20% mass reduction temperature of 110°C or lower accounts for 20% to 80% of a total mass ($M_{2A2B}$) of the compound represented by Formula (2A) or (2B).

**9.** The nonaqueous electrolyte solution for a secondary battery according to any one of Claims 1 to 8 that is used together with lithium titanate which is an active material of a negative electrode.

**10.** A nonaqueous secondary battery comprising:

the nonaqueous electrolyte solution for a secondary battery according to any one of Claims 1 to 8;
a positive electrode that enables ions of metals belonging to group 1 or 2 of the periodic table to be inserted into and released from this electrode; and
a negative electrode that enables ions to be inserted into and released from this electrode or can cause dissolution and precipitation of ions.

**11.** A kit of a nonaqueous electrolyte solution for a secondary battery that is obtained by combining metal salts that include lithium ions with a cyclic compound represented by the following Formula (1) and a non-protonic solvent,
wherein the non-protonic solvent is a solvent that contains at least one kind of carboxylic acid ester compound and carbonic acid ester compound, and a ratio ($Ms/M_{PN}$) between a mass (Ms) of the non-protonic solvent containing metal salts and a mass ($M_{PN}$) of the cyclic compound is 0.005 to 1:

[Chem. 7]

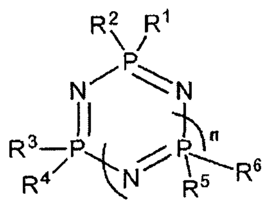

(1)

in the formula,

$R^1$ to $R^6$ represent alkyl groups, aryl groups, alkoxy groups, aryloxy groups, alkylthio groups, arylthio groups, $-NR^AR^B$, $-N=R^C$, an azide group or halogen atoms, at least one of $R^1$ to $R^6$ is $-NR^AR^B$, $-N=R^C$, or an azide group, and at least one of other groups $R^1$ to $R^6$ is halogen atom;
n represents an an integer of 1 to 2, when n is 2, plural $R^5$s and $R^6$s may be the same as or different from each other;

$R^A$ and $R^B$ are hydrogen atoms, alkyl groups, alkenyl groups, alkynyl groups, aryl groups, heterocyclic groups, cyano groups, silyl groups, or substituents represented by the following Formula (1A), (1B), (1C), or (1D);
$R^C$ represents a substituent represented by one of the following Formulae (C1) to (C6);

[Chem. 8]

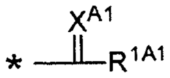
(1A)

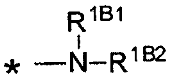
(1B)

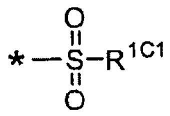
(1C)

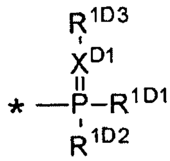
(1D)

in the formulae, $R^{1A1}$, $R^{1C1}$, $R^{1D1}$, and $R^{1D2}$ represent alkyl groups, alkoxy groups, aryl groups, aryloxy groups, halogen atoms, or amino groups;
$X^{A1}$ represents an oxygen atom or a sulfur atom;
$X^{D1}$ represents an oxygen atom, a sulfur atom, or a nitrogen atom, and when $X^{D1}$ represents an oxygen atom or a sulfur atom, there is no $R^{1D3}$ when $X^{D1}$ is a nitrogen atom, R $^{1D3}$ represents an alkyl group, an aryl group, a silyl group, or a phosphonyl group;
$R^{1B1}$ and $R^{1B2}$ represent alkyl groups, aryl groups, alkoxycarbonyl groups, aryloxycarbonyl groups, alkylsulfonyl groups, arylsulfonyl groups, phosphonyl groups, or silyl groups; and

[Chem. 9]

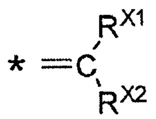
(C1)

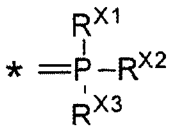
(C2)

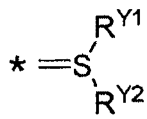
(C3)

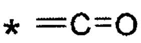
(C4)

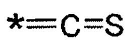
(C5)

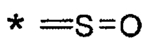
(C6)

in the formula,

$R^{X1}$, $R^{X2}$, and $R^{X3}$ represent alkyl groups, aryl groups, alkoxy groups, aryloxy groups, alkylthio groups, arylthio groups, heterocyclic groups, halogen atoms, or silyl groups;
$R^{Y1}$ and R $^{Y2}$ represent halogen atoms, and
* represents a direct bond.

**12.** An additive for a nonaqueous electrolyte solution for a secondary battery that is represented by the following Formula (1),

[Chem. 10]

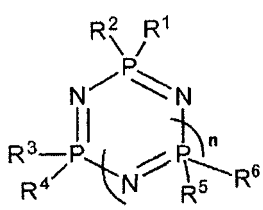
(1)

in the formula,

each of $R^1$ to $R^6$ represents an amino group represented by $-NR^AR^B$ or fluorine atom, at least three among $R^1$ to $R^6$ represent fluorine atoms, and at least one among $R^1$ to $R^6$ represents an amino group represented by $-NR^AR^B$;
$R^A$ and $R^B$ represent alkyl groups having 1 to 4 carbon atoms, and a ring may be formed at the end of the alkyl

groups;
n is 1.

**13.** A phosphazene compound which is represented by the following Formula (1) and is defined under condition 1A or 1B,

[Chem. 11]

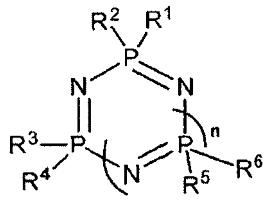

(1)

1A: each of $R^1$ to $R^6$ represents an amino group represented by $-NR^AR^B$ or a fluorine atom, at least three among $R^1$ to $R^6$ are fluorine atoms, and at least one among $R^1$ to $R^6$ is an amino group represented by $-NR^AR^B$; each of $R^A$ and $R^B$ represents a different alkyl group, and an asymmetric ring may be formed at the end of the alkyl group; n is 1; and
1B: each of $R^1$ to $R^6$ represents an amino group represented by $-NR^AR^B$ or a fluorine atom, at least three among $R^1$ to $R^6$ are fluorine atoms, and at least two among $R^1$ to $R^6$ are amino groups represented by $-NR^AR^B$, and two or more of amino groups represented by $-NR^AR^B$ include amino groups different from each other; $R^A$ and $R^B$ represent alkyl groups that may be substituted, and a ring may be formed at the end of the alkyl groups; n is 1.

## Patentansprüche

**1.** Nicht-wässrige Elektrolytlösung für eine Sekundärbatterie, enthaltend:

Metallsalze, die Lithiumionen enthalten; und
eine cyclische Verbindung, dargestellt durch die folgende Formel (1), in einem nicht-protonischen Lösungsmittel, worin das nicht-protonische Lösungsmittel ein Lösungsmittel ist, das zumindest eine Art einer Carbonsäureesterverbindung und Kohlensäureesterverbindung enthält und ein Verhältnis ($M_{PN}$/Ms) zwischen einer Masse (Ms) des nicht-protonischen Lösungsmittels, das die Metallsalze enthält, und einer Masse ($M_{PN}$) der cyclischen Verbindung 0,005 bis 1 ist:

[Chem. 1]

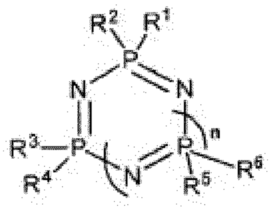

(1)

worin in der Formel $R^1$ bis $R^6$ Alkylgruppen, Arylgruppen, Alkoxygruppen, Aryloxygruppen, Alkylthiogruppen, Arylthiogruppen, $-NR^AR^B$, $-N=R^C$, eine Azidgruppe, oder Halogenatome, worin zumindest eines von $R^1$ bis $R^6$ $-NR^AR^B$, $-N=R^C$ oder eine Azidgruppe ist und zumindest eine der anderen Gruppen $R^1$ bis $R^6$ Halogenatom ist,
n eine ganze Zahl von 1 bis 2 ist, worin dann, wenn n 2 ist, mehrere Gruppen $R^5$ und $R^6$ gleich oder verschieden voneinander sein können,
$R^A$ und $R^B$ Wasserstoffatome, Alkylgruppen, Alkenylgruppen, Alkinylgruppen, Arylgruppen, heterocyclische Gruppen, Cyanogruppen, Silylgruppen oder Substituenten sind, dargestellt durch die folgenden Formeln (1A), (1B), (1C) oder (1D),
$R^C$ ein Substituent ist, dargestellt durch eine der folgenden Formeln (C1) bis (C6),

[Chem. 2]

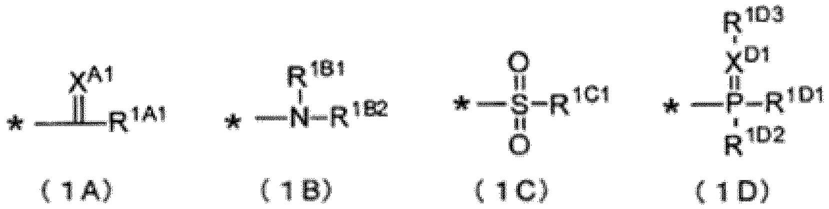

worin in den Formeln $R^{1A1}$, $R^{1C1}$, $R^{1D1}$ und $R^{1D2}$ Alkylgruppen, Alkoxygruppen, Arylgruppen, Aryloxygruppen, Halogenatome oder Aminogruppen sind;
$X^{A1}$ ein Sauerstoffatom oder Schwefelatom ist;
$X^{D1}$ ein Sauerstoffatom, Schwefelatom oder Stickstoffatom ist und wenn $X^{D1}$ ein Sauerstoff oder Schwefelatom ist, gibt es kein $R^{1D3}$, wenn $X^{D1}$ ein Stickstoffatom ist, ist $R^{1D3}$ eine Alkylgruppe, Arylgruppe, Silylgruppe oder Phosphonylgruppe,
$R^{1B1}$ und $R^{1B2}$ Alkylgruppen, Arylgruppen, Alkoxycarbonylgruppen, Aryloxycarbonylgruppen, Alkylsulfonylgruppen, Arylsulfonylgruppen, Phosphonylgruppen oder Silylgruppen sind, * eine direkte Bindung ist und

[Chem. 3]

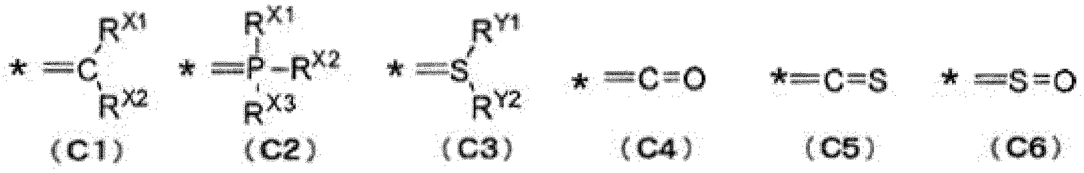

worin in den Formeln $R^{X1}$, $R^{X2}$ und $R^{X3}$ Alkylgruppen, Arylgruppen, Alkoxygruppen, Aryloxygruppen, Alkylthiogruppen, Arylthiogruppen, heterocyclische Gruppen, Halogenatome oder Silylgruppen sind;
$R^{Y1}$ und $R^{Y2}$ Halogenatome sind;
* eine Einfachbindung ist.

2. Nicht-wässrige Elektrolytlösung für eine Sekundärbatterie gemäß Anspruch 1, worin das nicht-protonische Lösungsmittel zumindest eine von Kohlensäureesterverbindungen mit den folgenden Formeln (3A) und (3B) und einer Carbonsäureesterverbindung mit der folgenden Formel (3C) enthält,

[Chem. 4]

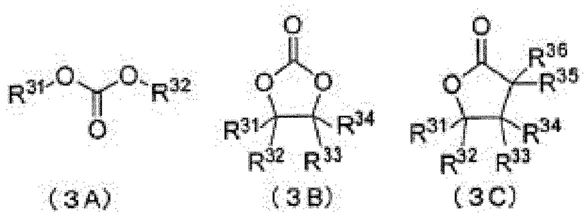

worin in den Formeln

$R^{31}$ bis $R^{34}$ Halogenatome, Alkylgruppen (Halogen ausgeschlossen) und Arylgruppen (Halogen ausgeschlossen) sind,
$R^{35}$ und $R^{36}$ Wasserstoffatome, Alkylgruppen, die mit Fluor substituiert sein können, Alkylgruppen mit einer Etherkette oder Arylgruppen, die mit Fluor substituiert sein können, sind.

3. Nicht-wässrige Elektrolytlösung für eine Sekundärbatterie gemäß Anspruch 1 oder 2, weiterhin enthaltend zumindest

eine der Verbindungen mit den folgenden Formeln (4A), (4B), (4C) und (4D), worin ein Verhältnis ($M_4$/Ms) zwischen einer Masse (Ms) des nicht-protonischen Lösungsmittels, das Metallsalze enthält, und einer Gesamtmasse ($M_4$) der Verbindung mit der Formel (4A), (4B), (4C) oder (4D) 0,001 bis 0,25 ist:

[Chem. 5]

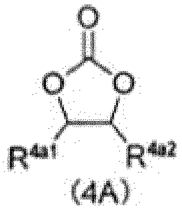
(4A)
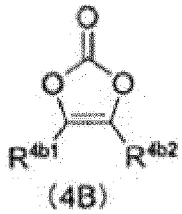
(4B)
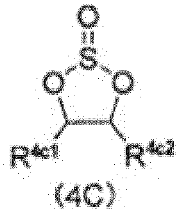
(4C)
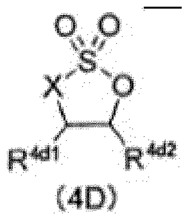
(4D)

worin in den Formeln $R^{4a1}$ und $R^{4a2}$ Wasserstoffatome, Halogen, fluorsubstituierte Alkylgruppen, fluorsubstituierte Arylgruppen oder Vinylgruppen sind und zumindest eines von $R^{4a1}$ und $R^{4a2}$ Halogen ist, fluorsubstituierte Alkylgruppe, fluorsubstituierte Arylgruppe oder Vinylgruppe sind,
$R^{4b1}$ und $R^{4b2}$ Wasserstoffatome, Alkylgruppen oder Arylgruppen sind, $R^{4c1}$, $R^{4c2}$, $R^{4d1}$ und $R^{4d2}$ Wasserstoffatome, fluorsubstituierte Alkylgruppen, fluorsubstituierte Arylgruppen oder Vinylgruppen sind,
X eine Methylengruppe oder Sauerstoffatom ist.

4. Nicht-wässrige Elektrolytlösung für eine Sekundärbatterie gemäß Anspruch 2 oder 3, worin das nicht-protonische Lösungsmittel zumindest eine von einer Verbindung mit der Formel (3A) und einer Verbindung mit der Formel (3C) ebenso wie eine Verbindung mit der Formel (3B) enthält und ein Verhältnis ($M_{3B}/M_{AC}$) zwischen einem Volumen ($M_{3B}$) der Verbindung mit der Formel (3B) und einem Gesamtvolumen ($M_{AC}$) der Verbindung mit der Formel (3A) und der Verbindung mit der Formel (3C) 0,2 bis 5 ist.

5. Nicht-wässrige Elektrolytlösung für eine Sekundärbatterie gemäß einem der Ansprüche 1 bis 4, weiterhin enthaltend eine aromatische Verbindung als Überladungsinhibitor.

6. Nicht-wässrige Elektrolytlösung für eine Sekundärbatterie gemäß einem der Ansprüche 1 bis 5, worin die cyclische Verbindung eine Verbindung mit der folgenden Formel (2A) oder (2B) ist:

[Chem. 6]

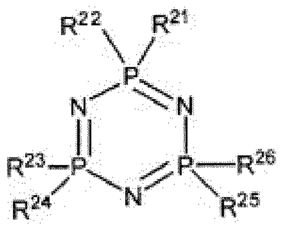
(2A)
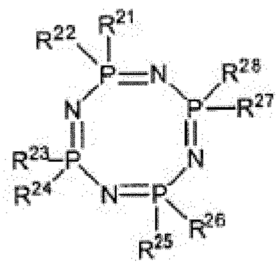
(2B)

worin in den Formeln $R^{21}$ bis $R^{28}$ die gleiche Definition wie die von $R^1$ bis $R^6$ der Formel (1) haben.

7. Nicht-wässrige Elektrolytlösung für eine Sekundärbatterie gemäß Anspruch 6, weiterhin enthaltend zwei oder mehrere Arten der Verbindung mit der Formel (2A) oder (2B), worin eine 20 Masse-%-Reduktionstemperatur von zumindest einer Art der obigen Verbindung, die gemessen wird durch thermogravimetrische Differentialthermoanalyse (TG-DTA), 110°C oder weniger ist.

8. Nicht-wässrige Elektrolytlösung für eine Sekundärbatterie gemäß Anspruch 7, worin eine Masse ($M_{110}$) der Verbindung mit der 20 Masse-%-Reduktionstemperatur von 110°C oder weniger 20 bis 80 % einer Gesamtmasse ($M_{2A2B}$) der Verbindung mit der Formel (2A) oder (2B) ausmacht.

9. Nicht-wässrige Elektrolytlösung für eine Sekundärbatterie gemäß einem der Ansprüche 1 bis 8, die zusammen mit

Lithiumtitant verwendet wird, das ein Aktivmaterial einer negativen Elektrode ist.

**10.** Nicht-wässrige Sekundärbatterie, enthaltend:

die nicht-wässrige Elektrolytlösung für eine Sekundärbatterie gemäß einem der Ansprüche 1 bis 8,
eine positive Elektrode, die ermöglicht, dass Ionen von Metallen, die zu Gruppe 1 oder 2 des Periodensystems gehören, in diese Elektrode eingefügt und aus einer freigesetzt werden, und
eine negative Elektrode, die ermöglicht, dass Ionen, die in die Elektrode eingefügt und von dieser freigesetzt werden oder eine Auflösung oder Ausfällung von Ionen verursachen kann.

**11.** Kit einer nicht-wässrigen Elektrolytlösung für eine Sekundärbatterie, die erhalten wird durch Kombinieren von Metallsalzen, die Lithiumionen enthalten, mit einer cyclischen Verbindung, dargestellt durch die folgende Formel (1), und einem nicht-protonischen Lösungsmittel,
worin das nicht-protonische Lösungsmittel ein Lösungsmittel ist, das zumindest eine Art einer Carbonsäureesterverbindung und Kohlensäureesterverbindung enthält und ein Verhältnis ($Ms/M_{PN}$) zwischen einer Masse (Ms) des nicht-protonischen Lösungsmittels, das die Metallsalze enthält, und einer Masse ($M_{PN}$) der cyclischen Verbindung 0,005 bis 1 ist:

[Chem. 7]

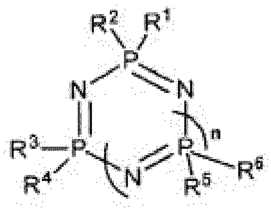

(1)

worin in der Formel $R^1$ bis $R^6$ Alkylgruppen, Arylgruppen, Alkoxygruppen, Aryloxygruppen, Alkylthiogruppen, Arylthiogruppen, $-NR^AR^B$, $-N=R^C$, eine Azidgruppe, oder Halogenatome sind, worin zumindest eines von $R^1$ bis $R^6$ $-NR^AR^B$, $-N=R^C$ oder eine Azidgruppe ist und zumindest eine der anderen Gruppen $R^1$ bis $R^6$ Halogenatom ist,
n eine ganze Zahl von 1 bis 2 ist, worin dann, wenn n 2 ist, mehrere Gruppen $R^5$ und $R^6$ gleich oder verschieden voneinander sein können,
$R^A$ und $R^B$ Wasserstoffatome, Alkylgruppen, Alkenylgruppen, Alkinylgruppen, Arylgruppen, heterocyclische Gruppen, Cyanogruppen, Silylgruppen oder Substituenten sind, dargestellt durch die folgenden Formeln (1A), (1B), (1C) oder (1D),
$R^C$ ein Substituent ist, dargestellt durch eine der folgenden Formeln (C1) bis (C6),

[Chem. 8]

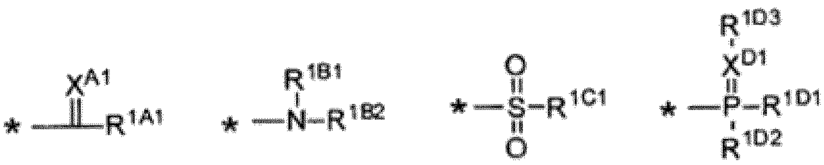

(1A) (1B) (1C) (1D)

worin in den Formeln $R^{1A1}$, $R^{1C1}$, $R^{1D1}$ und $R^{1D2}$ Alkylgruppen, Alkoxygruppen, Arylgruppen, Aryloxygruppen, Halogenatome oder Aminogruppen sind;
$X^{A1}$ ein Sauerstoffatom oder Schwefelatom ist;
$X^{D1}$ ein Sauerstoffatom, Schwefelatom oder Stickstoffatom ist und wenn $X^{D1}$ ein Sauerstoff oder Schwefelatom ist, gibt es kein $R^{1D3}$, wenn $X^{D1}$ ein Stickstoffatom ist, ist $R^{1D3}$ eine Alkylgruppe, Arylgruppe, Silylgruppe oder Phosphonylgruppe,
$R^{1B1}$ und $R^{1B2}$ Alkylgruppen, Arylgruppen, Alkoxycarbonylgruppen, Aryloxycarbonylgruppen, Alkylsulfonylgruppen, Arylsulfonylgruppen, Phosphonylgruppen oder Silylgruppen sind, und

[Chem. 9]

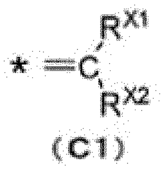 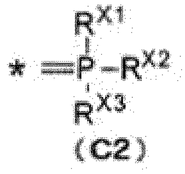 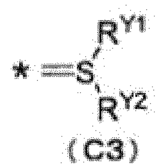 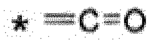 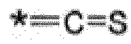 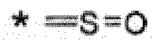

(C1) (C2) (C3) (C4) (C5) (C6)

worin in den Formeln $R^{X1}$, $R^{X2}$ und $R^{X3}$ Alkylgruppen, Arylgruppen, Alkoxygruppen, Aryloxygruppen, Alkylthiogruppen, Arylthiogruppen, heterocyclische Gruppen, Halogenatome oder Silylgruppen sind;
$R^{Y1}$ und $R^{Y2}$ Halogenatome sind; und
* eine Einfachbindung ist.

**12.** Additiv für eine nicht-wässrige Elektrolytlösung für eine Sekundärbatterie, dargestellt durch die folgende Formel (1)

[Chem. 10]

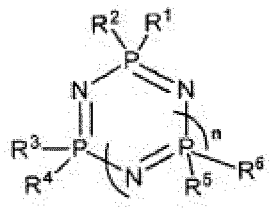 (1)

worin in der Formel jedes von $R^1$ bis $R^6$ eine Aminogruppe, dargestellt durch $-NR^AR^B$, oder Fluoratom sind, zumindest drei von $R^1$ bis $R^6$ Fluoratome sind und zumindest eines unter $R^1$ bis $R^6$ eine Aminogruppe, dargestellt durch $-NR^AR^B$ ist,
$R^A$ und $R^B$ Alkylgruppen mit 1 bis 4 Kohlenstoffatomen und ein Ring am Ende der Alkylgruppen gebildet sein kann, n 1 ist.

**13.** Phorphazenverbindung, dargestellt durch die folgende Formel (1), die gemäß der Bedingung in 1A oder 1B definiert wird

[Chem. 11]

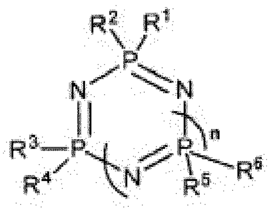 (1)

1A: jedes von $R^1$ bis $R^6$ bedeutet eine Aminogruppe, dargestellt durch $-NR^AR^B$, oder ein Fluoratom; zumindest drei von $R^1$ bis $R^6$ sind Fluoratome und zumindest eines von $R^1$ bis $R^6$ ist eine Aminogruppe, dargestellt durch $-NR^AR^B$; jedes von $R^A$ und $R^B$ bedeutet eine unterschiedliche Alkylgruppe und ein asymmetrischer Ring kann am Ende der Alkylgruppen gebildet sein; n ist 1; und
1B: jedes von $R^1$ bis $R^6$ bedeutet eine Aminogruppe, dargestellt durch $-NR^AR^B$, oder ein Fluoratom; zumindest drei von $R^1$ bis $R^6$ sind Fluoratome und zumindest zwei von $R^1$ bis $R^6$ sind Aminogruppen, dargestellt durch $-NR^AR^B$, und zwei oder mehrere von Aminogruppen, dargestellt durch $-NR^AR^B$, enthalten Aminogruppen, die voneinander verschieden sind; $R^A$ und $R^B$ sind Alkylgruppen, die substituiert sein können, und ein Ring kann

am Ende der Alkylgruppe gebildet sein; n ist 1.

## Revendications

**1.** Solution électrolytique non aqueuse pour une batterie rechargeable comprenant :

des sels métalliques qui incluent des ions lithium ; et
un composé cyclique qui est représenté par la Formule (1) suivante, dans un solvant non protonique,
dans laquelle le solvant non protonique est un solvant contenant au moins une sorte de composé d'ester d'acide carboxylique et d'un composé d'ester d'acide carbonique, et un rapport ($M_{PN}$/Ms) entre une masse (Ms) du solvant non protonique contenant les sels métalliques et une masse ($M_{PN}$) du composé cyclique est de 0,005 à 1:

[Formule chimique 1]

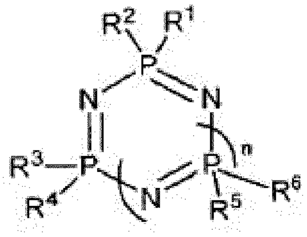

(1)

dans la formule,

$R^1$ à $R^6$ représentent des groupes alkyle, des groupes aryle, des groupes alcoxy, des groupes aryloxy, des groupes alkylthio, des groupes arylthio, $-NR^AR^B$, $-N=R^C$, un groupe azoture ou des atomes d'halogène, au moins un de $R^1$ à $R^6$ est $-NR^AR^B$, $-N=R^C$, ou un groupe azoture, et au moins un d'autres groupes $R^1$ à $R^6$ est un atome d'halogène ;
n représente un entier de 1 à 2, quand n vaut 2, plusieurs $R^5$ et $R^6$ peuvent être les mêmes ou différents les uns des autres ;
$R^A$ et $R^B$ sont des atomes d'hydrogène, des groupes alkyle, des groupes alcényle, des groupes alcynyle, des groupes aryle, des groupes hétérocycliques, des groupes cyano, des groupes silyle, ou des substituants représentés par les Formules (1A), (1B), (1C), ou (1D) suivantes ;
$R^C$ représente un substituant représenté par l'une des Formules (C1) à (C6) suivantes ;

[Formule chimique 2]

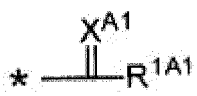
(1A)

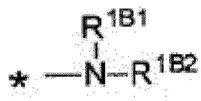
(1B)

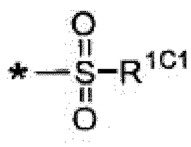
(1C)

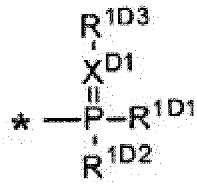
(1D)

dans les formules,

$R^{1A1}$, $R^{1C1}$, $R^{1D1}$ et $R^{1D2}$ représentent des groupes alkyle, des groupes alcoxy, des groupes aryle, des groupes aryloxy, des atomes d'halogène, ou des groupes amino ;
$X^{A1}$ représente un atome d'oxygène ou un atome de soufre ;
$X^{D1}$ représente un atome d'oxygène, un atome de soufre, ou un atome d'azote et quand $X^{D1}$ représente un atome d'oxygène ou un atome de soufre, il n'y a pas de $R^{1D3}$, quand $X^{D1}$ est un atome d'azote, $R^{1D3}$ représente un groupe alkyle, un groupe aryle, un groupe silyle, ou un groupe phosphonyle ;

$R^{1B1}$ et $R^{1B2}$ représentent des groupes alkyle, des groupes aryle, des groupes alcoxycarbonyle, des groupes aryloxycarbonyle, des groupes alkylsulfonyle, des groupes arylsulfonyle, des groupes phosphonyle, ou des groupes silyle, * représente une liaison directe ; et

[Formule chimique 3]

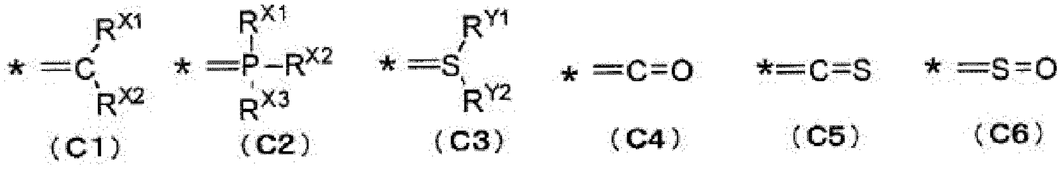

(C1) (C2) (C3) (C4) (C5) (C6)

dans les formules, $R^{X1}$, $R^{X2}$ et $R^{X3}$ représentent des groupes alkyle, des groupes aryle, des groupes alcoxy, des groupes aryloxy, des groupes alkylthio, des groupes arylthio, des groupes hétérocycliques, des atomes d'halogène, ou des groupes silyle ;
$R^{Y1}$ et $R^{Y2}$ représentent des atomes d'halogène ;
* représente une liaison directe.

2. Solution électrolytique non aqueuse pour une batterie rechargeable selon la revendication 1, dans laquelle le solvant non protonique contient au moins l'un de composés d'ester d'acide carbonique représentés par les Formules (3A) et (3B) suivantes et d'un composé d'ester d'acide carboxylique représenté par la Formule (3C) suivante,

[Formule chimique 4]

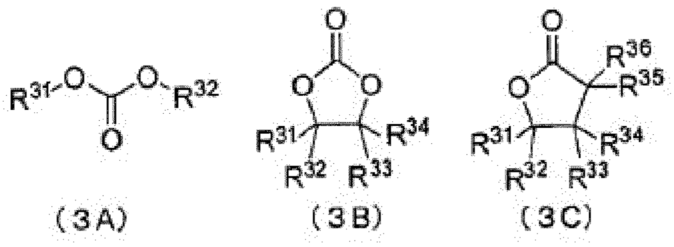

(3A) (3B) (3C)

dans les formules,

$R^{31}$ à $R^{34}$ représentent des atomes d'hydrogène, des groupes alkyle (excluant l'halogène) et des groupes aryle (excluant l'halogène)
$R^{35}$ et $R^{36}$ représentent des atomes d'hydrogène, des groupes alkyle qui peuvent être substitués par du fluor, des groupes alkyle ayant une chaîne éther, ou des groupes aryle qui peuvent être substitués par du fluor.

3. Solution électrolytique non aqueuse pour une batterie rechargeable selon la revendication 1 ou 2, comprenant en outre au moins l'un des composés représentés par les Formules (4A), (4B), (4C) et (4D) suivantes, dans laquelle un rapport ($M_4$/Ms) entre une masse (Ms) du solvant non protonique contenant des sels métalliques et une masse totale ($M_4$) du composé représenté par la Formule (4A), (4B), (4C), ou (4D) est de 0,001 à 0,25 :

[Formule chimique 5]

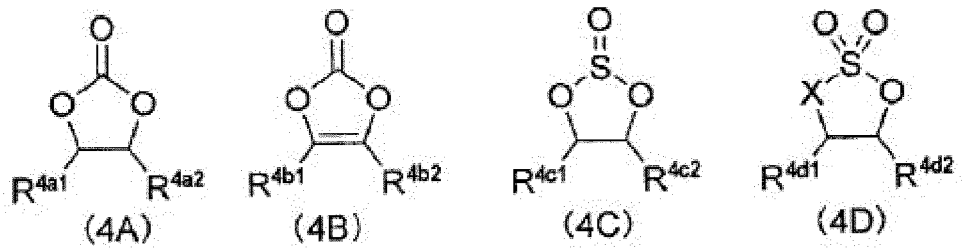

(4A) (4B) (4C) (4D)

dans les formules,

$R^{4a1}$ et $R^{4a2}$ représentent des atomes d'hydrogène, halogène, des groupes alkyle substitués par du fluor, des groupes aryle substitués par du fluor, ou des groupes vinyle, et au moins l'un de $R^{4a1}$ et $R^{4a2}$ représente un halogène, un groupe alkyle substitué par du fluor, un groupe aryle substitué par du fluor, ou un groupe vinyle ;
$R^{4b1}$ et $R^{4b2}$ représentent des atomes d'hydrogène, des groupes alkyle, ou des groupes aryle, $R^{4c1}$, $R^{4c2}$, $R^{4d1}$ et $R^{4d2}$ représentent des atomes d'hydrogène, des groupes alkyle substitués par du fluor, des groupes aryle substitués par du fluor, ou des groupes vinyle ;
X représente un groupe méthylène ou un atome d'oxygène.

**4.** Solution électrolytique non aqueuse pour une batterie rechargeable selon la revendication 2 ou 3,
dans laquelle le solvant non protonique contient au moins l'un d'un composé représenté par la Formule (3A) et d'un composé représenté par la Formule (3C) aussi bien qu'un composé représenté par la Formule (3B), et un rapport ($M_{3B}/M_{AC}$) entre un volume ($M_{3B}$) du composé représenté par la Formule (3B) et un volume total ($M_{AC}$) du composé représenté par la Formule (3A) et le composé représenté par la Formule (3C) est de 0,2 à 5.

**5.** Solution électrolytique non aqueuse pour une batterie rechargeable selon l'une quelconque des revendications 1 à 4, comprenant en outre un composé aromatique tel qu'un inhibiteur de surcharge.

**6.** Solution électrolytique non aqueuse pour une batterie rechargeable selon l'une quelconque des revendications 1 à 5, dans laquelle le composé cyclique est un composé représenté par la Formule (2A) ou (2B) suivante :

[Formule chimique 6]

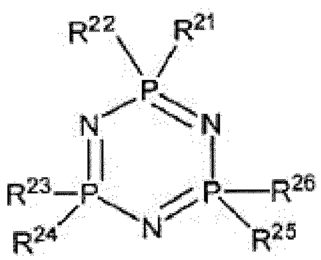

(2A)

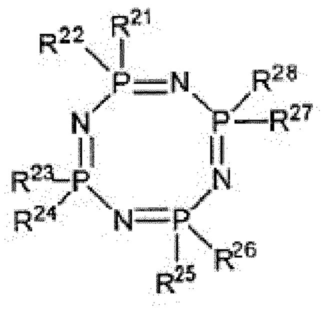

(2B)

dans les formules, $R^{21}$ à $R^{28}$ ont la même définition que celle de $R^1$ à $R^6$ de la Formule (1).

**7.** Solution électrolytique non aqueuse pour une batterie rechargeable selon la revendication 6, comprenant en outre deux ou plusieurs sortes du composé représenté par la Formule (2A) ou (2B),
dans laquelle une température de réduction massique de 20% d'au moins une sorte du composé précédent qui est mesurée par Thermogravimétrie - Analyse Thermique Différentielle (TG-DTA) est de 110 °C ou moins.

**8.** Solution électrolytique non aqueuse pour une batterie rechargeable selon la revendication 7,
dans laquelle une masse ($M_{110}$) du composé ayant la température de réduction massique de 20% de 110°C ou moins compte pour 20% à 80% d'une masse totale ($M_{2A2B}$) du composé représenté par la Formule (2A) ou (2B).

**9.** Solution électrolytique non aqueuse pour une batterie rechargeable selon l'une quelconque des revendications 1 à 8 qui est utilisée en même temps que du titanate de lithium qui est une matière active d'une électrode négative.

**10.** Batterie rechargeable non aqueuse comprenant :

la solution électrolytique non aqueuse pour une batterie rechargeable selon l'une quelconque des revendications 1 à 8 ;
une électrode positive qui permet à des ions de métaux appartenant au groupe 1 ou 2 de la table périodique d'être insérés dans et libérés de cette électrode ; et
une électrode négative qui permet à des ions d'être insérés dans et libérés de cette électrode ou qui peut provoquer la dissolution et la précipitation d'ions.

**11.** Kit d'une solution électrolytique non aqueuse pour une batterie rechargeable qui est obtenue en combinant des sels métalliques qui incluent des ions lithium avec un composé cyclique représenté par la Formule (1) suivante et un

solvant non protonique,
dans lequel le solvant non protonique est un solvant qui contient au moins une sorte de composé d'ester d'acide carboxylique et de composé d'ester d'acide carbonique, et un rapport ($Ms/M_{PN}$) entre une masse (Ms) du solvant non protonique contenant des sels métalliques et une masse ($M_{PN}$) du composé cyclique est de 0,005 à 1 :

[Formule chimique 7]

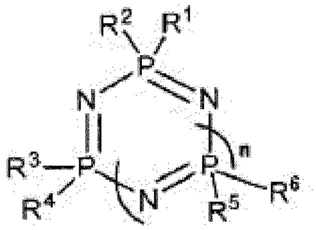

(1)

dans la formule,

$R^1$ à $R^6$ représentent des groupes alkyle, des groupes aryle, des groupes alcoxy, des groupes aryloxy, des groupes alkylthio, des groupes arylthio, $-NR^AR^B$, $-N=R^C$, un groupe azoture ou des atomes d'halogène, au moins l'un de $R^1$ à $R^6$ est $-NR^AR^B$, $-N=R^C$, ou un groupe azoture, et au moins l'un d'autres groupes $R^1$ à $R^6$ est un atome d'halogène ;
n représente un entier de 1 à 2, quand n vaut 2, plusieurs $R^5$ et $R^6$ peuvent être les mêmes ou différents les uns des autres ;
$R^A$ et $R^B$ sont des atomes d'hydrogène, des groupes alkyle, des groupes alcényle, des groupes alcynyle, des groupes aryle, des groupes hétérocycliques, des groupes cyano, des groupes silyle, ou des substituants représentés par la Formule (1A), (1B), (1C), ou (1D) suivante ;
$R^C$ représente un substituant représenté par une des Formules (C1) à (C6) suivantes ;

[Formule chimique 8]

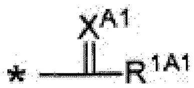

(1A)

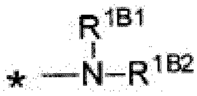

(1B)

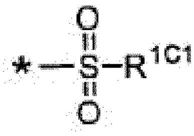

(1C)

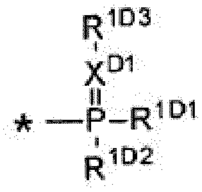

(1D)

dans les formules, $R^{1A1}$, $R^{1C1}$, $R^{1D1}$ et $R^{1D2}$ représentent des groupes alkyle, des groupes alcoxy, des groupes aryle, des groupes aryloxy, des atomes d'halogène, ou des groupes amino ;
$X^{A1}$ représente un atome d'oxygène ou un atome de soufre ;
$X^{D1}$ représente un atome d'oxygène, un atome de soufre, ou un atome d'azote et quand $X^{D1}$ représente un atome d'oxygène ou un atome de soufre, il n'y a pas de $R^{1D3}$ quand $X^{D1}$ est un atome d'azote, $R^{1D3}$ représente un groupe alkyle, un groupe aryle, un groupe silyle, ou un groupe phosphonyle ;
$R^{1B1}$ et $R^{1B2}$ représentent des groupes alkyle, des groupes aryle, des groupes alcoxycarbonyle, des groupes aryloxycarbonyle, des groupes alkylsulfonyle, des groupes arylsulfonyle, des groupes phosphonyle, ou des groupes silyle ; et

[Formule chimique 9]

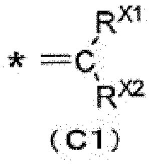
(C1)
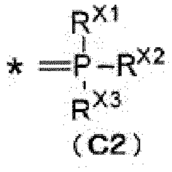
(C2)
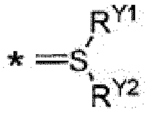
(C3)
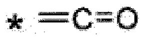
(C4)
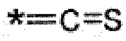
(C5)
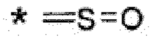
(C6)

dans la formule,

$R^{X1}$, $R^{X2}$ et $R^{X3}$ représentent des groupes alkyle, des groupes aryle, des groupes alcoxy, des groupes aryloxy, des groupes alkylthio, des groupes arylthio, des groupes hétérocycliques, des atomes d'halogène, ou des groupes silyle ;
$R^{Y1}$ et $R^{Y2}$ représentent des atomes d'halogène, et
* représente une liaison directe.

**12.** Additif pour une solution électrolytique non aqueuse pour une batterie rechargeable qui est représentée par la Formule (1) suivante,

[Formule chimique 10]

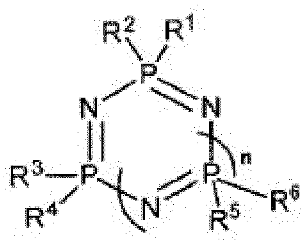
(1)

dans la formule,

chacun de $R^1$ à $R^6$ représente un groupe amino représenté par $-NR^AR^B$ ou un atome de fluor, au moins trois parmi $R^1$ à $R^6$ représentent des atomes de fluor et au moins un parmi $R^1$ à $R^6$ représente un groupe amino représenté par $-NR^AR^B$ ;
$R^A$ et $R^B$ représentent des groupes alkyle ayant 1 à 4 atomes de carbone et un noyau peut être formé à l'extrémité des groupes alkyle ;
n vaut 1.

**13.** Composé de phosphazène qui est représenté par la Formule (1) suivante et qui est défini sous la condition 1A ou 1B,

[Formule chimique 11]

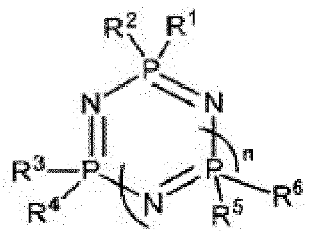
(1)

1A : chacun de $R^1$ à $R^6$ représente un groupe amino représenté par $-NR^AR^B$ ou un atome de fluor, au moins trois parmi $R^1$ à $R^6$ sont des atomes de fluor, et au moins un parmi $R^1$ à $R^6$ est un groupe amino représenté par $-NR^AR^B$ ; chacun de $R^A$ et $R^B$ représente un groupe alkyle différent, et un noyau asymétrique peut être

formé à l'extrémité du groupe alkyle ; n vaut 1 ; et

1B : chacun de $R^1$ à $R^6$ représente un groupe amino représenté par $-NR^AR^B$ ou un atome de fluor, au moins trois parmi $R^1$ à $R^6$ sont des atomes de fluor et au moins deux parmi $R^1$ à $R^6$ sont des groupes amino représentés par $-NR^AR^B$ et deux ou plusieurs de groupes amino représentés par $-NR^AR^B$ incluent des groupes amino différents les uns des autres ; $R^A$ et $R^B$ représentent des groupes alkyle qui peuvent être substitués, et un noyau peut être formé à l'extrémité des groupes alkyle ; n vaut 1.

FIG. 1

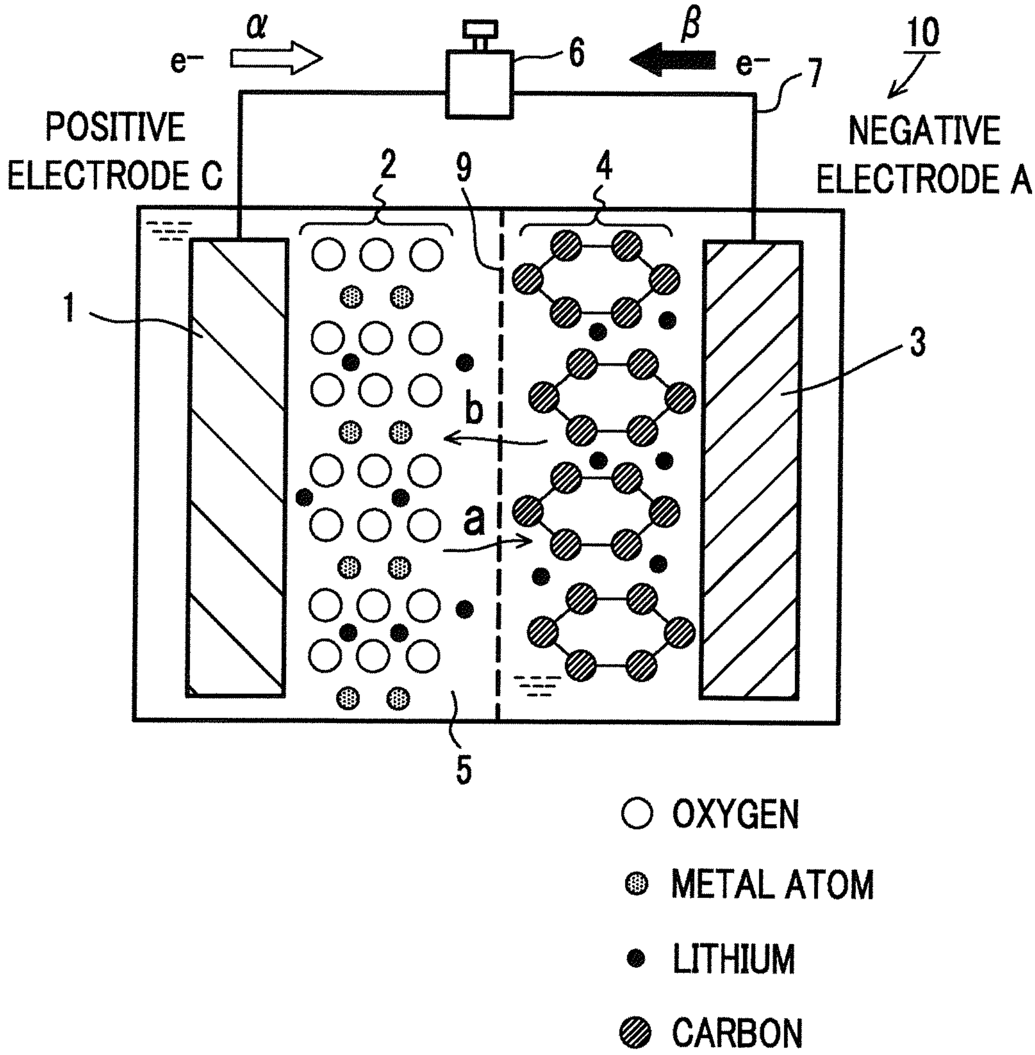
α
e−
6
β
e−
7
10
POSITIVE ELECTRODE C
NEGATIVE ELECTRODE A
2
9
4
1
3
b
a
5
OXYGEN
METAL ATOM
LITHIUM
CARBON

FIG. 2

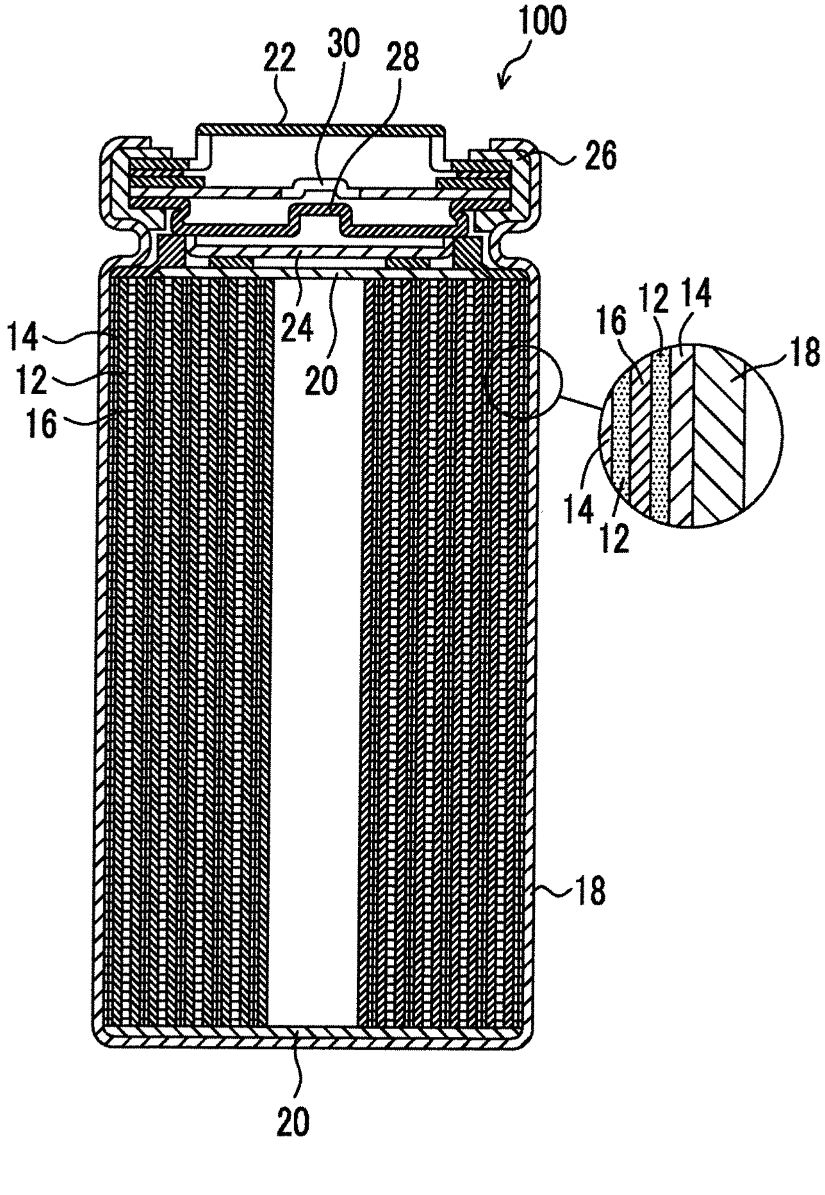

FIG. 3

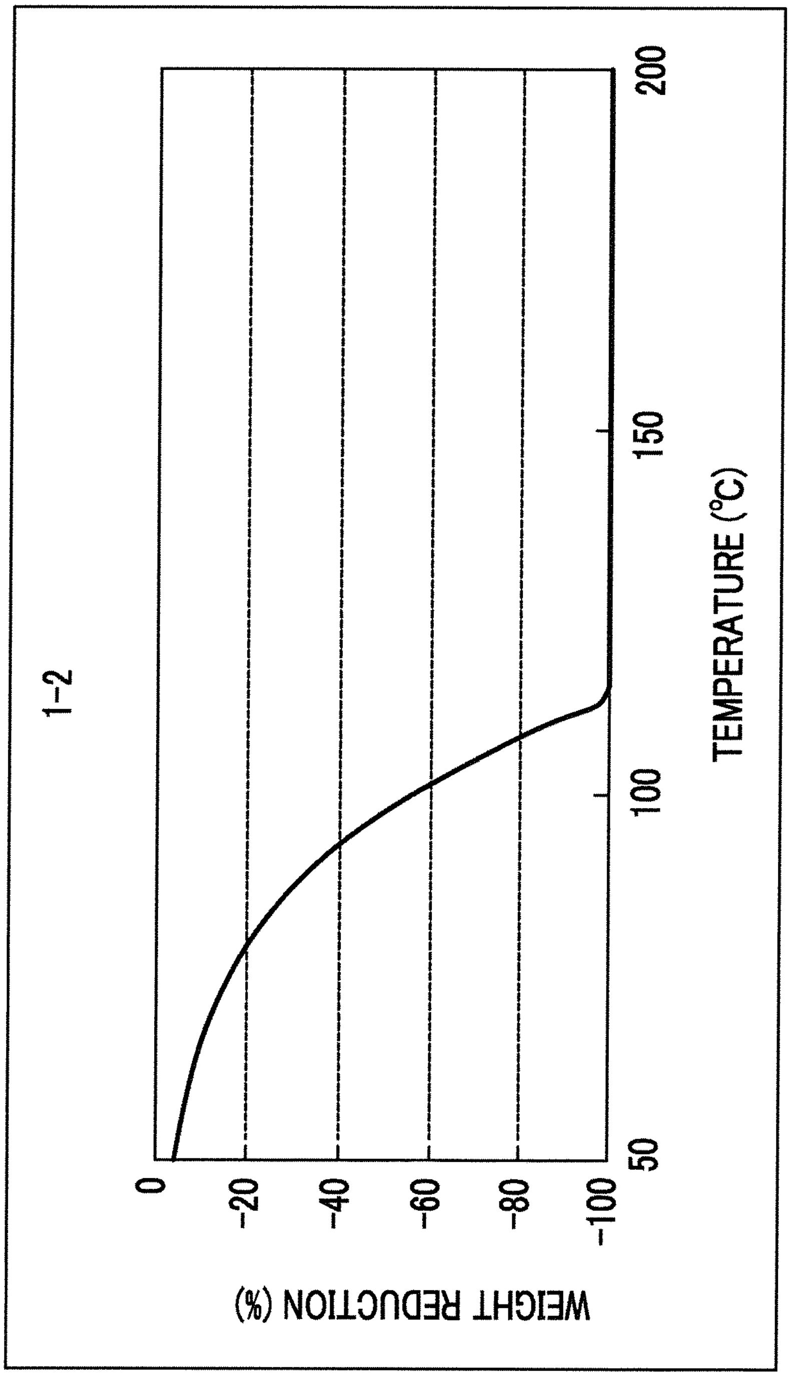
TGDTA CHART (COMPOUND 1-2)
1-2
WEIGHT REDUCTION (%)
0
-20
-40
-60
-80
-100
50
100
150
200
TEMPERATURE (°C)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2005190873 A
- JP 2009016106 A
- JP 6013108 A
- JP H0613108 A
- WO 2011052428 A
- JP 2010270077 A
- WO 2004001882 A
- JP 2009021040 A
- JP 2011108649 A
- JP 2012089352 A
- DE 2139691 B
- JP 62022066 A
- JP S6222066 A
- JP 2006856 A
- JP H026856 A
- JP 3045473 A
- JP H0345473 A
- JP 5090844 A
- JP H0590844 A
- JP 6004516 A
- JP H064516 A
- JP 198810148554 A
- JP 6310148554 B
- JP 59020971 A
- JP S5920971 A
- JP 5092204 A
- JP H0592204 A


### Non-patent literature cited in the description


- Electrochemical Science and Technology. *Journal of Electrochemical Society,* 1980, vol. 127, 2097-2099
- *Nature,* 2000, vol. 407, 724-727
- *J. Electrochem. Soc.,* 1991, vol. 138, 3536